(19) Europäisches Patentamt
European Patent Office
Office européen des brevets

(11) Veröffentlichungsnummer: **0 333 653 B1**

(12) # EUROPÄISCHE PATENTSCHRIFT

(45) Veröffentlichungstag der Patentschrift: **08.06.94**

(51) Int. Cl.[5]: **C09B 62/04**, C09B 62/503, D06P 3/66

(21) Anmeldenummer: **89810172.0**

(22) Anmeldetag: **07.03.89**

(54) **Reaktivfarbstoffe, Verfahren zu deren Herstellung und deren Verwendung.**

(30) Priorität: **16.03.88 CH 999/88**

(43) Veröffentlichungstag der Anmeldung:
**20.09.89 Patentblatt 89/38**

(45) Bekanntmachung des Hinweises auf die Patenterteilung:
**08.06.94 Patentblatt 94/23**

(84) Benannte Vertragsstaaten:
**BE CH DE ES FR GB IT LI**

(56) Entgegenhaltungen:
**EP-A- 0 203 567**

(73) Patentinhaber: **CIBA-GEIGY AG**
**Klybeckstrasse 141**
**CH-4002 Basel(CH)**

(72) Erfinder: **Tzikas, Athanassios, Dr.**
**Unt. Rütschetenweg 36**
**CH-4133 Pratteln(CH)**

EP 0 333 653 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder nach dem Kontinueverfahren eignen, und die nass- und lichtechte Färbungen ergeben; sowie Verfahren zur Herstellung dieser Farbstoffe, und deren Verwendung zum Färben oder Bedrucken von textilen Materialien.

Es sind bereits aus der EP-A 0 203 567 Reaktivfarbstoffe bekannt, welche sich von den erfindungsgemässen Reaktivfarbstoffen der nachstehenden Formel (1) dadurch unterscheiden, dass sie anstelle der Gruppe der Formel -B-CO-R einen $\beta$-Sulfatoäthylsulfonylrest enthalten. Diese vermögen jedoch nicht alle Wünsche bezüglich der Applikation und der Echtheiten zu erfüllen.

Gegenstand der Erfindung sind Reaktivfarbstoffe der Formel

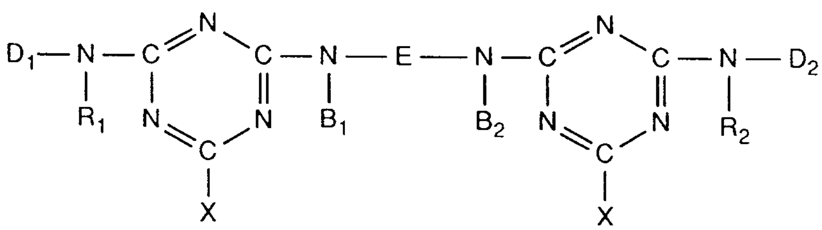

(1),

worin $D_1$ und $D_2$ unabhängig voneinander je ein Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; $R_1$, $R_2$, $B_1$ und $B_2$ unabhängig voneinander Wasserstoff oder Alkyl mit 1 bis 4 Kohlenstoffatomen, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; X Fluor, Chlor, Brom, Sulfo, $C_1$-$C_4$-Alkylsulfonyl, Phenylsulfonyl oder Carboxypyridinium, und E ein Rest der Formel

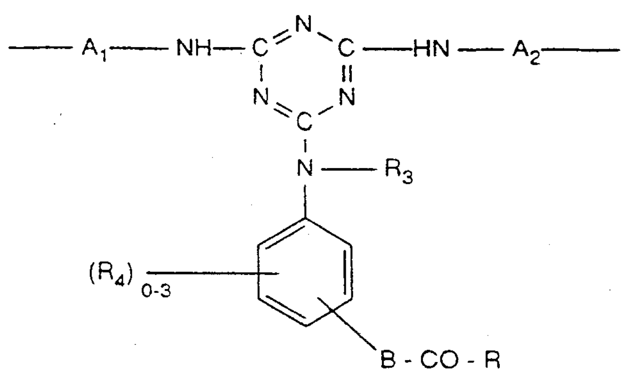

(2),

$A_1$ und $A_2$ unabhängig voneinander je ein Rest der Formel

$-(CH_2)_{1-6}-$ (3a)

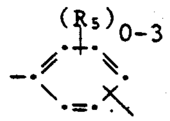
(3b)

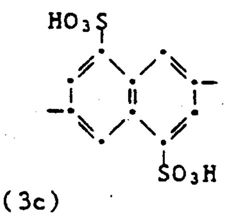
(3c)

oder

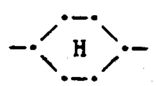
(3d);

oder
X ein Rest der Formel

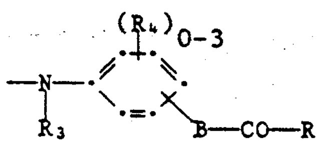
(4),

und E ein Rest der Formel (3a), (3b), (3c) oder (3d);
und $R_3$ Wasserstoff oder Alkyl mit 1 bis 4 Kohlenstoffatomen, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann, ist; $R_4$ und $R_5$ unabhängig voneinander für 0 bis 3 Substituenten aus der Gruppe $C_{1-4}$-Alkyl, $C_{1-4}$-Alkoxy, Halogen, Carboxy und Sulfo steht; B eine direkte Bindung oder ein Rest

$-(CH_2)_n-$ oder $-O-(CH_2)_n-$ ,

n = 1 bis 6; R ein Rest der Formel

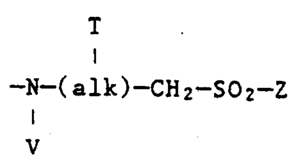
(5a),

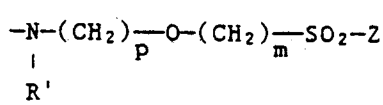
(5b),

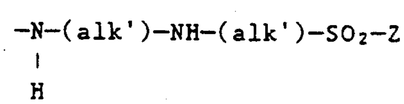
(5c),

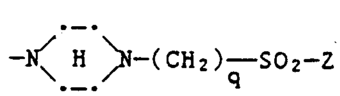
(5d),

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat;

V Wasserstoff oder ein Alkylrest mit 1 bis 4 C-Atomen, der durch Carboxy-oder Sulfogruppen oder durch deren Derivate, Alkoxygruppen mit 1 oder 2 C-Atomen, Halogen oder Hydroxy substituiert sein kann; oder ein Rest

$$\begin{array}{c} T \\ | \\ -(alk)-CH_2-SO_2-Z \end{array} \qquad (5e)$$

worin Z, alk und T die angegebenen Bedeutungen haben; R' Wasserstoff oder $C_{1-6}$-Alkyl; alk' unabhängig voneinander Polymethylenreste mit 2 bis 6 C-Atomen oder deren verzweigte Isomere; und m = 1 bis 6, p = 1 bis 6 und q = 1 bis 6 ist.

Der Rest $D_1$ bzw. $D_2$ in Formel (1) kann an seinem Grundgerüst die bei organischen Farbstoffen üblichen Substituenten gebunden enthalten.

Als Beispiele für weitere Substituenten im Rest $D_1$ bzw. $D_2$ seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, insbesondere Alkanoylaminogruppen, wie Acetylamino, Propionylamino oder Benzoylamino, Phenylamino, N-N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest $D_1$ bzw. $D_2$ eine oder mehrere Sulfonsäuregruppen. Reaktivfarbstoffe der Formel (1), worin $D_1$ bzw. $D_2$ der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest $R_1$, $R_2$, $B_1$ bzw. $B_2$ ist, falls es sich um einen Alkylrest handelt, geradkettig oder verzweigt; er kann weitersubstituiert sein, z.B. durch Halogen, Hydroxy, Cyan, $C_{1-4}$-Alkoxy, $C_{1-4}$-Alkoxycarbonyl, Carboxy, Sulfamoyl, Sulfo oder Sulfato. Als Beispiele für $R_1$, $R_2$, $B_1$ und $B_2$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind $R_1$, $R_2$, $B_1$ und $B_2$ unabhängig voneinander Wasserstoff, Methyl oder Aethyl.

Falls X einer der an erster Stelle definierten Substituenten ist, handelt es sich z.B. um ein Halogenatom, wie Fluor, Chlor oder Brom, eine niedrigmolekulare Alkylsulfonylgruppe, wie Methylsulfonyl oder Aethylsulfonyl, der Phenylsulfonylrest oder eine Sulfogruppe. Vorzugsweise ist X in diesem Falle Fluor oder Chlor.

Für $R_3$ kommen die gleichen Reste in Betracht, die oben bei der Erläuterung von $R_1$, $R_2$, $B_1$ und $B_2$ genannt sind.

$R_4$ und $R_5$ sind z.B. Methyl, Aethyl, Propyl, Isopropyl, Butyl, Isobutyl, sek.-Butyl, tert.-Butyl, Methoxy, Aethoxy, Propyloxy, Isopropyloxy, Butyloxy, Isobutyloxy, sek.-Butyloxy, tert.-Butyloxy, Fluor, Chlor, Carboxy oder Sulfo.

Der Rest B enthält 1 bis 6, vorzugsweise 1 bis 4 Kohlenstoffatome; Beispiele für B sind: Methylen, Aethylen, Propylen, Butylen, Methylenoxy, Aethylenoxy, Propylenoxy und Butylenoxy. Falls B einen Rest

$$-O-(CH_2)_n-$$

darstellt, ist B durch das Sauerstoffatom an den Benzolring gebunden. Vorzugsweise ist B eine direkte Bindung.

Als β-Halogenäthyl kommt für Z insbesondere der β-Chloräthylrest und als β-Acyloxyäthyl insbesondere der β-Acetoxyäthylrest in Betracht. Der Alkylenrest alk ist vorzugsweise Methylen, Aethylen, Methylmethylen, Propylen oder Butylen. Der Substituent T ist als Acyloxyrest (Alkanoyloxy) insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl,

Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, N-Methyl-, N-Aethyl-, N,N-Dimethyl- und N,N-Diäthylsulfamoyl, Methylsulfonyl, Aethylsulfonyl und Propylsulfonyl. Der Rest R' ist beispielsweise Methyl, Aethyl, Propyl, Isopropyl, Butyl, sec-Butyl, Pentyl oder Hexyl, oder vorzugsweise Wasserstoff. Die Polymethylenreste alk' sind vorzugsweise Aethylen, Propylen oder Butylen. Die Indizes m, p und q sind unabhängig voneinander und vorzugsweise 2, 3 oder 4.

Der die beiden Farbstoffreste $D_1$ und $D_2$ verbindende Mittelteil in Formel (1) ist eine reaktive Gruppierung, worin X gegebenenfalls eine faserreaktive Abgangsgruppe darstellt. Ausserdem weist der Rest R einen Reaktivrest auf und zwar die Gruppe $-SO_2-2$; dieser Reaktivrest enthält eine Abgangsgruppe, z.B. wenn Z $\beta$-Chloräthyl ist, oder kann nach Art von faserreaktiven Gruppen wirksam werden, z.B. wenn Z Vinyl ist (Grundlegendes über Reaktivfarbstoffe siehe Venkataraman, K.: The Chemistry of Synthetic Dyes. New York: Academic Press 1972; Vol VI, Reactive Dyes).

Ferner sind in Betracht zu ziehen, Reaktivfarbstoffe der Formel (1), worin der Rest $D_1$ bzw. $D_2$ noch einen weiteren Reaktivrest einschliesst. Die zusätzlichen, in $D_1$ bzw. $D_2$ eingeschlossenen Reaktivreste können über Aminogruppen oder in anderer Weise, z.B. durch eine direkte Bindung an $D_1$ bzw. $D_2$ gebunden sein.

Ein gegebenenfalls in $D_1$ oder $D_2$ eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl-oder Halogenpropionylrest.

Insbesondere ist der zusätzliche Reaktivrest ein direkt oder über ein Brückenglied gebundender Vinylsulfonyl-, $\beta$-Sulfatoäthylsulfonyl-,$\beta$-Thiosulfatoäthylsulfonyl-, $\beta$-Chloräthylsulfonyl-, $\beta$-Acetoxyäthylsulfonyl- oder $\beta$-Chloräthylsulfonylbutyryl-Rest.

Wichtige Strukturvarianten, welche sich aus der alternativen Definition von X in Formel (1) ergeben, sind:

Reaktivfarbstoffe der Formel

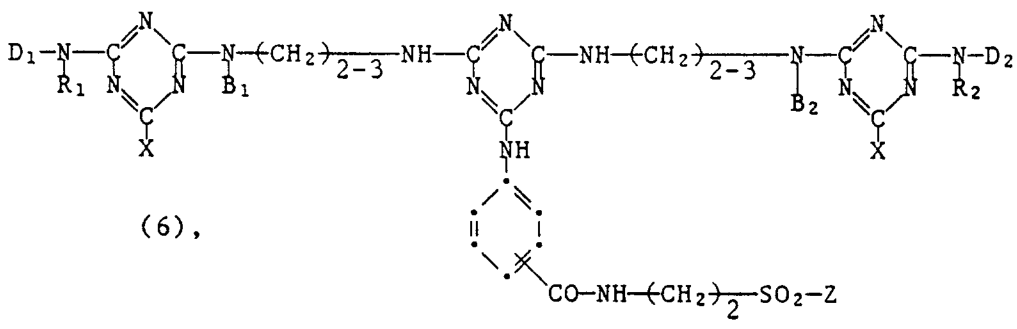

(6),

worin $D_1$, $D_2$, $R_1$, $R_2$, $B_1$, $B_2$, Z und X die unter Formel (1) angegebenen Bedeutungen haben;

Reaktivfarbstoffe der Formel

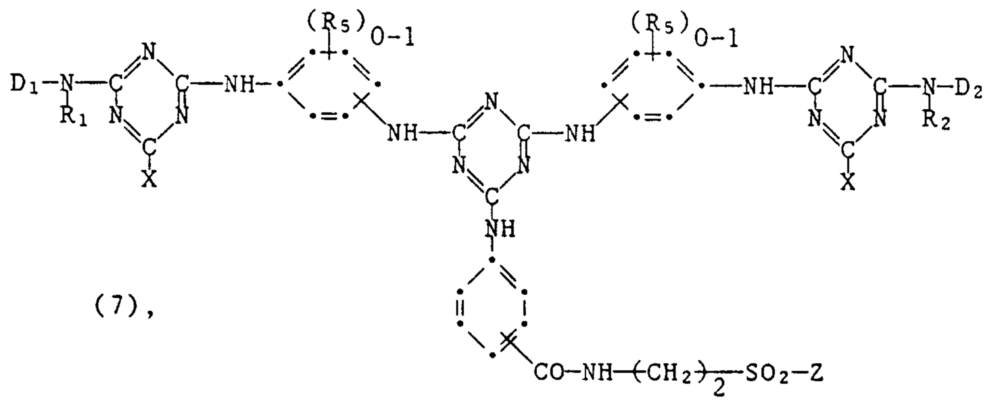

(7),

worin $D_1$, $D_2$, $R_1$, $R_2$, $B_1$, $B_2$, Z und X die unter Formel (1) angegebenen Bedeutungen haben; und $R_5$ für 0 bis 1 Substituenten aus der Gruppe Methyl, Methoxy, Chlor und Sulfo steht;
Reaktivfarbstoffe der Formel

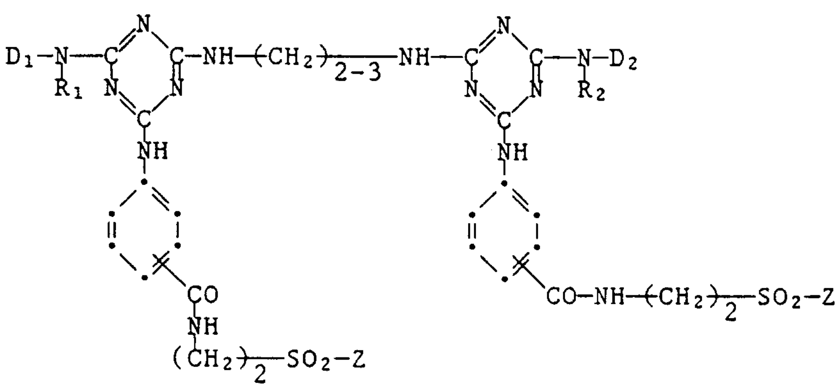

(8),

worin $D_1$, $D_2$, $R_1$, $R_2$ und Z die unter Formel (1) angegebenen Bedeutungen haben;
Reaktivfarbstoffe der Formel

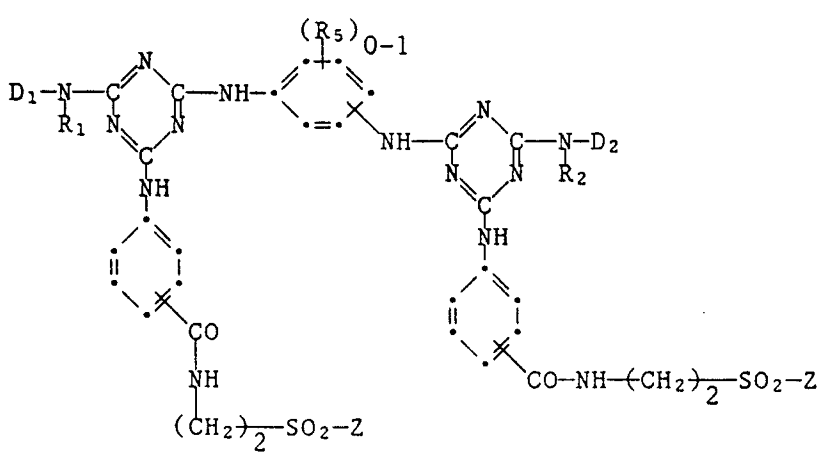

(9)

worin $D_1$, $D_2$, $R_1$, $R_2$ und Z die unter Formel (1) angegebenen Bedeutungen haben; und $R_5$ für 0 bis 1 Substituenten aus der Gruppe Methyl, Methoxy, Chlor oder Sulfo steht.

Insbesondere bedeutet Z in den Formeln (6) bis (9) $\beta$-Chloräthyl, Vinyl oder vorzugsweise $\beta$-Sulfatoäthyl.

Bevorzugte Ausführungsformen der Reaktivfarbstoffe der Formel (1) sind:

a) Reaktivfarbstoffe der Formel (1), worin die Reste $D_1$-N($R_1$)- und -N($R_2$)-$D_2$ gleich sind.

b) Reaktivfarbstoffe der Formel (1), worin X Fluor oder Chlor ist.

c) Reaktivfarbstoffe der Formel (1), worin $R_1$ und $R_2$ Wasserstoff, Methyl, Aethyl oder $\beta$-Hydroxyäthyl sind.

d) Reaktivfarbstoffe der Formel (1), worin $B_1$ und $B_2$ Wasserstoff sind.

e) Reaktivfarbstoffe gemäss d), worin $D_1$ und $D_2$ je ein Rest eines Mono-oder Disazofarbstoffes ist.

f) Reaktivfarbstoffe gemäss d), worin $D_1$ und $D_2$ je ein Rest eines Metallkomplexazo-, Anthrachinon- oder Formazanfarbstoffes ist.

g) Reaktivfarbstoffe gemäss e), worin $D_1$ und $D_2$ je ein Mono- oder Disazofarbstoffrest der Formel

$$D\text{-}N=N\text{-}(M\text{-}N=N)_r\text{-}K\text{-} \qquad (10a),$$

oder

$$\text{-}D\text{-}N=N\text{-}(M\text{-}N=N)_r\text{-}K \qquad (10b),$$

oder eines davon abgeleiteten Metallkomplexes; D der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)-oder Acetessigsäurearylamid-Reihe ist, wobei D, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; r = 0 oder 1 ist; und D, M und K zusammen mindestens zwei Sulfogruppen, vorzugsweise drei oder vier Sulfogruppen, enthalten.

h) Reaktivfarbstoffe gemäss f), worin $D_1$ und $D_2$ je ein Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

i) Reaktivfarbstoffe gemäss f), worin $D_1$ und $D_2$ je ein Rest eines Formazanfarbstoffes der Formel

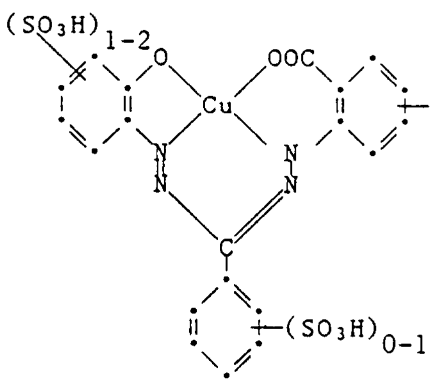

(11a) oder

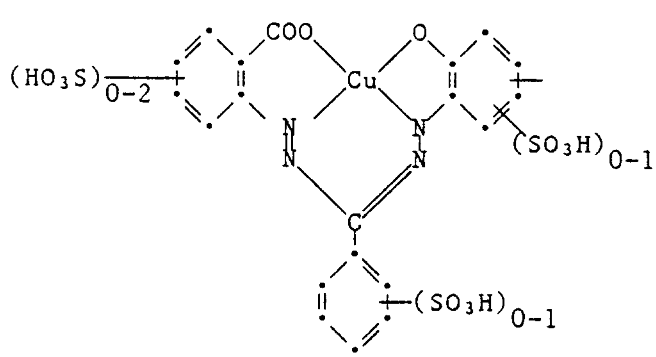

(11b),

ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

Bevorzugt sind insbesondere Reaktivfarbstoffe gemäss g), worin $D_1$ und $D_2$ je ein Rest der folgenden Formeln (12) bis (24) ist:

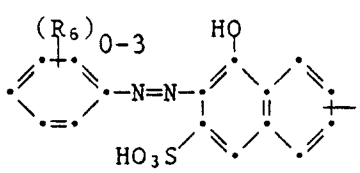

(12)

worin $R_6$ für 0 bis 3 Substituenten aus der Gruppe $C_{1-4}$-Alkyl, $C_{1-4}$-Alkoxy, Halogen, Carboxy und Sulfo steht.

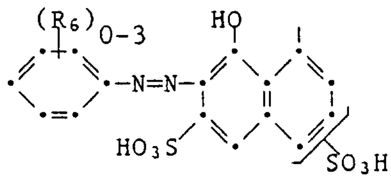

(13)

worin $R_6$ für 0 bis 3 Substituenten aus der Gruppe $C_{1-4}$-Alkyl, $C_{1-4}$-Alkoxy, Halogen, Carboxy und Sulfo steht.

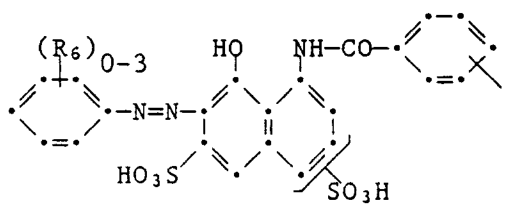

(14)

worin $R_6$ für 0 bis 3 Substituenten aus der Gruppe $C_{1-4}$-Alkyl, $C_{1-4}$-Alkoxy, Halogen, Carboxy und Sulfo steht.

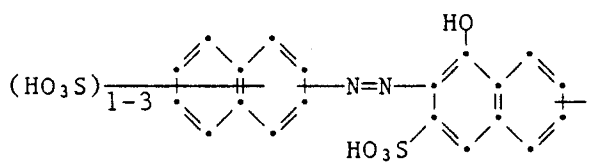

(15)

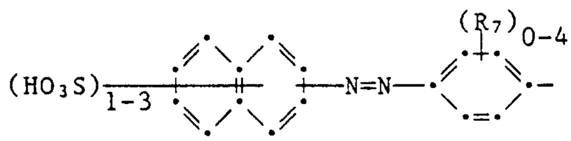

(16)

worin $R_7$ für 0 bis 4 Substituenten aus der Gruppe Halogen, Nitro, Cyan, Trifluormethyl, Sulfamoyl, Carbamoyl, $C_{1-4}$-Alkyl, $C_{1-4}$-Alkoxy, Amino, Acetylamino, Ureido, Hydroxy, Carboxy, Sulfomethyl und Sulfo unabhängig voneinander, steht.

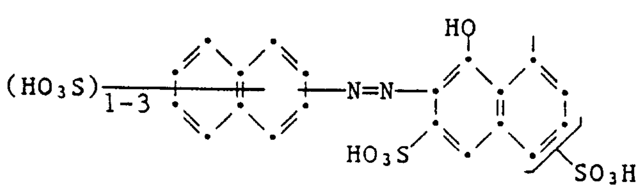

(17)

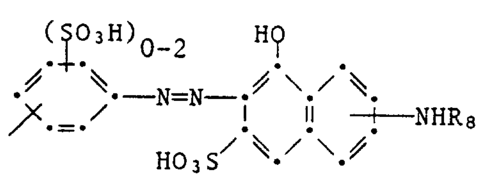

(18)

worin $R_8$ $C_{1-4}$-Alkanoyl oder Benzoyl ist.

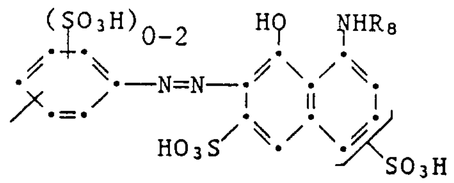

(19)

worin $R_8$ $C_{1-4}$-Alkanoyl oder Benzoyl ist.

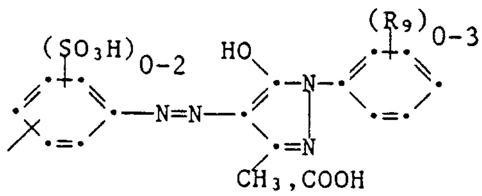

(20)

worin $R_9$ für 0 bis 3 Substituenten aus der Gruppe $C_{1-4}$-Alkyl, $C_{1-4}$-Alkoxy, Halogen, Carboxy und Sulfo steht.

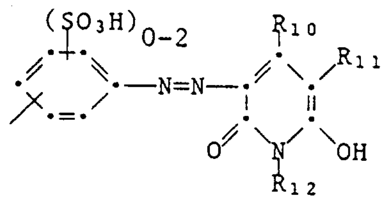

(21)

worin $R_{12}$ und $R_{10}$ unabhängig voneinander Wasserstoff, $C_{1-4}$-Alkyl oder Phenyl, und $R_{11}$ Wasserstoff, Cyano, Carbamoyl oder Sulfomethyl ist.

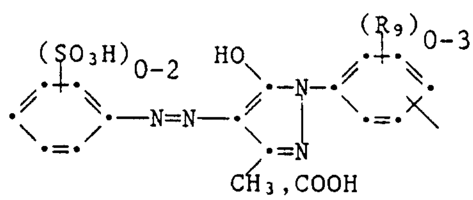

(22)

worin $R_9$ für 0 bis 3 Substituenten aus der Gruppe $C_{1-4}$-Alkyl, $C_{1-4}$-Alkoxy, Halogen, Carboxy und Sulfo steht.

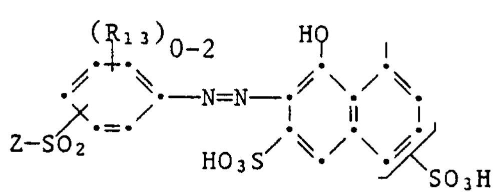

(23)

worin $R_{13}$ für 0 bis 2 Substituenten aus der Gruppe $C_{1-4}$-Alkyl, $C_{1-4}$-Alkoxy, Halogen, Carboxy und Sulfo steht; und Z $\beta$-Sulfatoäthyl, $\beta$-Thiosulfatoäthyl, $\beta$-Phosphatoäthyl, $\beta$-Acyloxyäthyl, $\beta$-Halogenäthyl oder Vinyl ist.

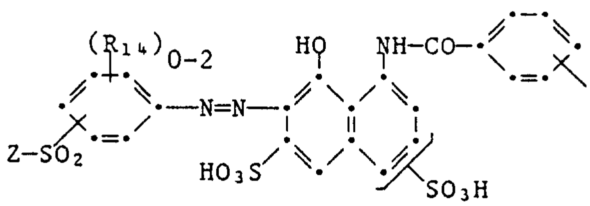

(24)

worin $R_{14}$ für 0 bis 2 Substituenten aus der Gruppe $C_{1-4}$-Alkyl, $C_{1-4}$-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist.

Bevorzugt sind ferner Reaktivfarbstoffe gemäss d), worin R ein Rest der Formel

$-NHCH_2CH_2SO_2-Z$ (25a)

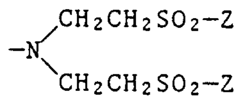

(25b)

$-NHCH_2CH_2OCH_2CH_2SO_2-Z$ (25c)

$-NHCH_2CH_2NHCH_2CH_2SO_2-Z$ (25d)

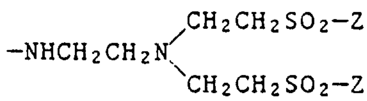

(25e)

oder 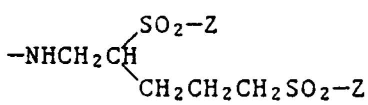

(25f)

ist, und Z β-Chloräthyl, Vinyl oder β-Sulfatoäthyl bedeutet. Insbesondere ist Z in den Formeln (25a) bis (25c) β-Chloräthyl und in den Formeln (25a) bis (25f) bedeutet Z insbesondere Vinyl.

Bevorzugt sind ausserdem Schwermetallkomplexe von Reaktivfarbstoffen der Formel (1); als komplexbildende Schwermetalle kommen vor allem Kupfer, Nickel, Kobalt oder Chrom in Betracht.

Bevorzugt sind vor allem Reaktivfarbstoffe der Formel (1), worin Z die β-Sulfatoäthyl-, β-Chloräthyl- oder Vinylgruppe ist; oder worin X Fluor oder Chlor ist. In Betracht zu ziehen sind insbesondere auch Kombinationen von Merkmalen gemäss der vorhergehenden Beschreibung, sofern anwendbar.

Besonders bevorzugt sind Reaktivfarbstoffe gemäss g), worin $D_1$ und $D_2$ je ein Monoazofarbstoffrest der Formel

D-N=N-K- (10c)

oder

-D-N=N-K (10d)

oder eines davon abgeleiteten Kupferkomplexes ist, D ein Benzol- oder Naphthalinrest, der durch Hydroxy, Chlor, Nitro, Methyl, Methoxy, Aethoxy, Carboxy, β-Chloräthylsulfonyl, Vinylsulfonyl, β-Sulfatoäthylsulfonyl und β-Chloräthylsulfonylbutyryl substituiert sein kann, ist, und K ein Benzol-, Naphthalin-, 3-Methyl-1-phenylpyrazolon- oder 3-Carboxy-1-phenylpyrazolonrest ist, der durch Amino, N-Methylamino, Methyl, Methoxy, Aethoxy, Acetylamino, Ureido, Benzoylamino, Hydroxy und Carboxy substituiert sein kann, und D und K zusammen mindestens zwei Sulfogruppen, vorzugsweise drei oder vier Sulfogruppen, enthalten.

Ebenfalls besonders bevorzugt sind Reaktivfarbstoffe gemäss f), worin $D_1$ und $D_2$ je der Rest eines Anthrachinonfarbstoffes der Formel

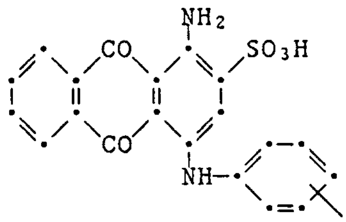

ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.

Die Reaktivfarbstoffe der Formel (1) können hergestellt werden, indem man Farbstoffe der Formeln

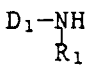 (26) und 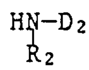 (27)

oder Farbstoffvorprodukte, zwei Aequivalente eines s-Triazins der Formel

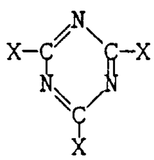 (28)

und ein Aequivalent eines Diaminoverbindung der Formel

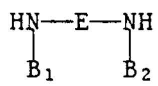 (29)

und gegebenenfalls zwei Aequivalente eines Amins der Formel

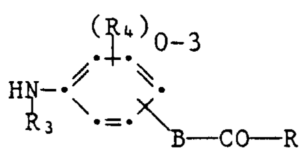 (30)

in beliebiger Folge miteinander umsetzt, wobei $D_1$, $D_2$, $R_1$, $R_2$, X, $B_1$, $B_2$, E, $R_3$, $R_4$, B und R die unter Formel (1) angegebenen Bedeutungen haben, oder, im Falle der Verwendung von Farbstoffvorprodukten, die erhaltenen Zwischenprodukte in die gewünschten Endfarbstoffe überführt und gegebenenfalls eine weitere Umwandlungsreaktion anschliesst.

Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Ein wichtiges Verfahren ist dadurch gekennzeichnet, dass man einen Farbstoff der Formel

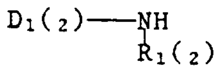

(31)

zunächst mit einem s-Triazin der Formel

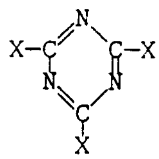

(28)

kondensiert, und die erhaltene Verbindung der Formel

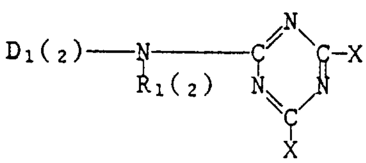

(32)

anschliessend mit einer Diaminverbindung der Formel (29), worin E ein Rest der Formel (2) ist, im molaren Verhältnis 2:1 kondensiert.

Ein weiteres Verfahren ist dadurch gekennzeichnet, dass man ein s-Triazin der Formel (28) mit einem Amin der Formel (30) und einem Farbstoff der Formel (31) kondensiert, und die erhaltene Triazinverbindung anschliessend mit einer Diaminoverbindung der Formel (29), worin E ein Rest der Formel (3a), (3b), (3c) oder (3d) ist, im molaren Verhältnis 2:1 kondensiert.

Nach einem abgeänderten Verfahren können Reaktivfarbstoffe der Formel (1) auch hergestellt werden, indem man ein s-Triazin der Formel (28) mit einer Komponente dieses Farbstoffes und gegebenenfalls einem Amin der Formel (30) kondensiert, dann mit einer zur Herstellung des Farbstoffes benötigten zweiten Komponente umsetzt, und die so erhaltene Triazinverbindung mit einer Diaminverbindung der Formel (29), worin E ein Rest der Formel (2) bzw. ein Rest der Formel (3a), (3b), (3c) oder (3d) ist, im molaren Verhältnis 2:1 kondensiert.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (30) dem Triazin der Formel (28) und dem Farbstoff der Formel (31) oder einem Vorprodukt zweckmässigerweise zuerst ausgeführt wird, die des Triazins mit der Verbindung der Formel (30) oder mit dem Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest $HO\text{-}CH_2CH_2\text{-}$ ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin Z die Gruppe $H_2C=CH\text{-}$ ist, und lagert an das Zwischenprodukt Thioschwefelsäure an, wobei ein Rest $HO_3SS\text{-}CH_2CH_2\text{-}$ entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0 °C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80 °C erfolgen. Vorzugsweise erfolgt die

Sulfatierung durch Eintragen der betreffenden Verbindung in Schwefelsäuremonohydrat bei Temperaturen zwischen 5 und 15 °C. Die Einführung eines anderen Restes für Z in eine Verbindung der Formel (1) oder ein Zwischenprodukt anstelle eines Halogenatoms oder der Sulfatogruppe, beispielsweise einer Thiosulfato- oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Gegebenenfalls ist eine Verfahrensvariante anwendbar, bei welcher man von Farbstoffvorprodukten ausgeht. Diese Variante ist geeignet zur Herstellung von Reaktivfarbstoffen der Formel (1), worin $D_1$ oder $D_2$ der Rest eines aus zwei oder mehr als zwei Komponenten zusammengesetzten Farbstoffes ist, beispielsweise eines Monoazo-, Disazo-, Trisazo- oder Metallkomplexazofarbstoffes.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin $D_1$ und $D_2$ je ein der Rest eines Mono- oder Disazofarbstoffes oder eines Metallkomplexazofarbstoffes ist. In diesem Falle ist der Mittelteil von Formel (1) an eine Diazokomponente oder Kupplungskomponente von $D_1$ bzw. $D_2$ gebunden, wie es in den Formeln (10a) und (10b) oben zum Ausdruck gebracht ist.

Falls man von Farbstoffvorprodukten ausgeht, gelangt man zu den Reaktivfarbstoffen der Formel (1), indem man z.B. eine Komponente des Farbstoffes der Formel (26), die eine Gruppe $-N(R_1)H$ enthält, und ein Triazin der Formel (28) kondensiert, vorher oder nachher mit einer Verbindung der Formel (30) kondensiert, und mit der anderen Komponente des Farbstoffes der Formel (26) umsetzt. Sinngemäss das gleiche gilt für den Farbstoff der Formel (27) und das Triazin der Formel (28). Bei der Herstellung der bevorzugten Azofarbstoffe müssen die Diazokomponenten und die Kupplungskomponenten zusammen mindestens eine Aminogruppe $-N(R_1)H$ bzw. $-N(R_2)H$, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino-bzw. Nitrogruppe vor der Kondensation mit dem Triazin der Formel (28) durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem Triazin der Formel (28) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Bevorzugte Ausführungsformen des erfindungsgemässen Verfahrens sind dadurch gekennzeichnet, dass man

a) eine Diaminoverbindung der Formel

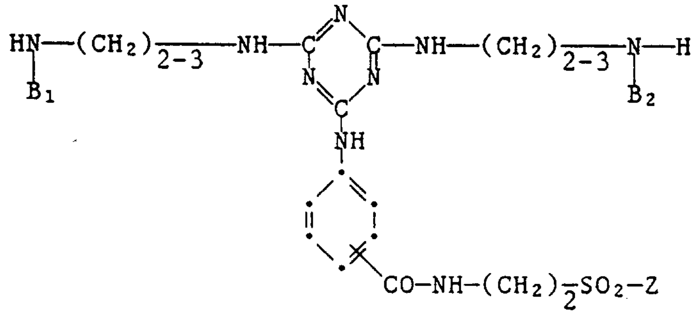

(33)

worin $B_1$, $B_2$, X und Z die unter Formel (1) angegebenen Bedeutungen haben, verwendet;
b) eine Diaminoverbindung der Formel

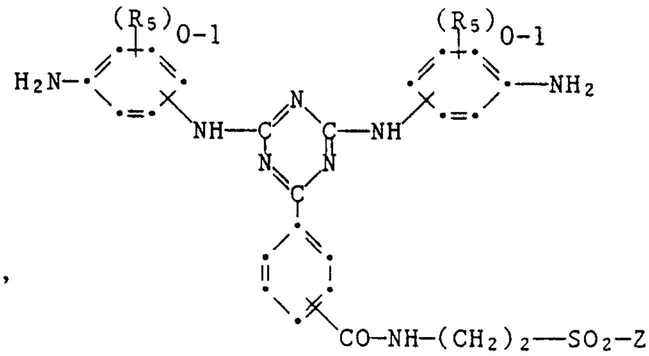

(34),

worin Z die unter Formel (1) angegebene Bedeutung hat; und $R_5$ für 0 bis 1 Substituenten aus der Gruppe Methyl, Methoxy, Chlor und Sulfo steht, verwendet.
c) als Amin der Formel (30) ein Amin der Formel

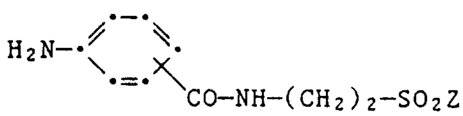

(35),

worin Z die unter Formel (1) angegebene Bedeutung hat, verwendet, und, dass man eine Diaminoverbindung der Formel (29) verwendet, worin E ein Rest der Formel

$$-(CH_2)_{2-3}- \quad (36)$$

ist.
d) als Amin der Formel (30) ein Amin der Formel

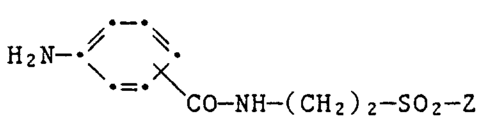

(35),

worin Z die unter Formel (1) angegebene Bedeutung hat verwendet, und, dass man eine Diaminoverbindung der Formel (29) verwendet, worin E ein Rest der Formel

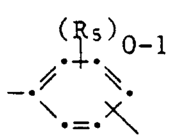

(37)

ist; und $R_5$ für 0 bis 1 Substituenten aus der Gruppe Methyl, Methoxy, Chlor oder Sulfo steht;
e) gleiche Reste $D_1$-N($R_1$)- und -N($R_2$)-$D_2$ verwendet;
f) Verbindungen der Formel (28) verwendet, worin X Fluor oder Chlor ist;
g) Verbindungen der Formeln (26) und (27) verwendet, worin $R_1$ und $R_2$ Wasserstoff, Methyl, Aethyl oder $\beta$-Hydroxyäthyl sind;
h) Verbindungen der Formel (29) verwendet, worin $B_1$ und $B_2$ Wasserstoff sind;

i) Verbindungen der Formeln (26) und (27), worin $D_1$ und $D_2$ je ein Rest eines Mono- oder Disazofarbstoffes sind; oder worin $D_1$ und $D_2$ je ein Rest eines Metallkomplexazo-, Anthrachinon- oder Formazanfarbstoffs sind;

Besonders bevorzugte Ausführungsformen des erfindungsgemässen Verfahrens sind dadurch gekennzeichnet, dass man

j) Verbindungen der Formeln (26) und (27) gemäss i) verwendet, worin $D_1$ und $D_2$ je ein Mono- oder Disazofarbstoff der Formel (10a) oder (10b) sind; oder worin $D_1$ und $D_2$ je ein Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist; oder worin $D_1$ und $D_2$ je ein Rest eines Formazanfarbstoffes der Formeln (11a) oder (11b) sind.

Ganz besonders bevorzugte Ausführungsformen des erfindungsgemässen Verfahrens sind dadurch gekennzeichnet, dass man

k) Verbindungen der Formeln (26) und (27) verwendet, worin $D_1$ und $D_2$ je ein Rest der Formeln (12) bis (24) sind; oder worin $D_1$ und $D_2$ je der Rest eines Anthrachinonfarbstoffs der Formel

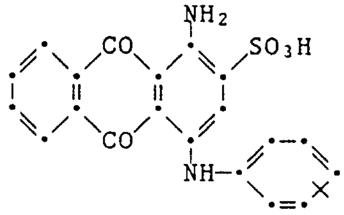

ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält;

l) Verbindungen der Formel (30) verwendet, worin R ein Rest der Formel (25a) bis (25f) ist; oder

(m) Verbindungen der Formel (26) und (27) verwendet, worin $D_1$ und $D_2$ je ein Monoazofarbstoffrest der Formel (10c) oder (10d) oder eines davon abgeleiteten Kupferkomplexes sind.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Farbstoffe der Formeln (26) bzw. (27)

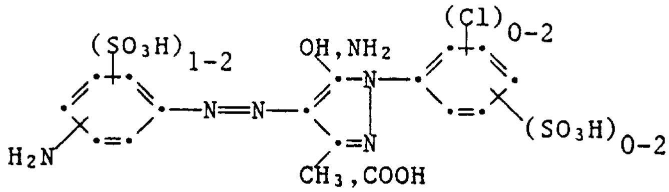

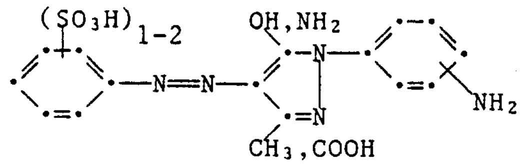

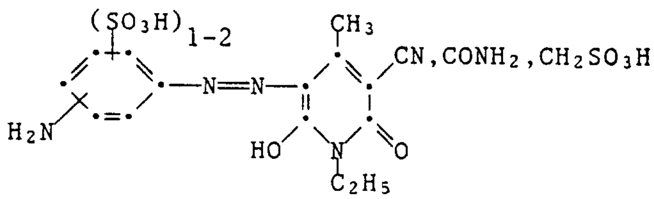

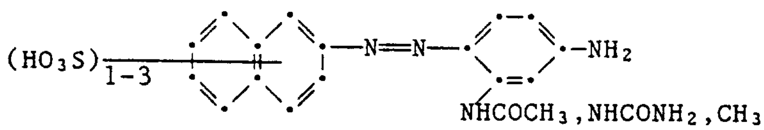

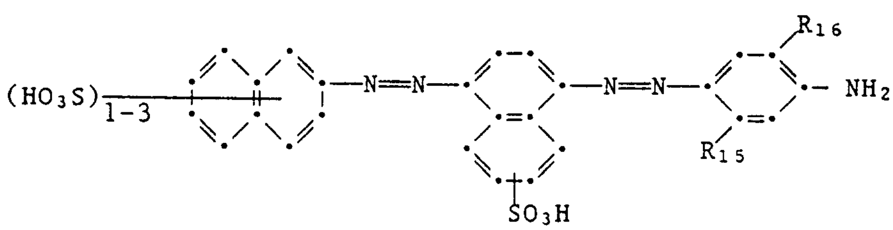

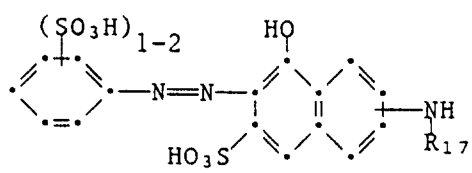

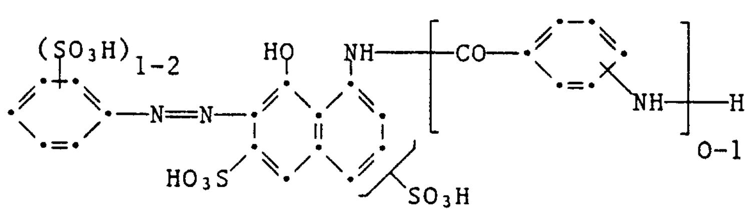

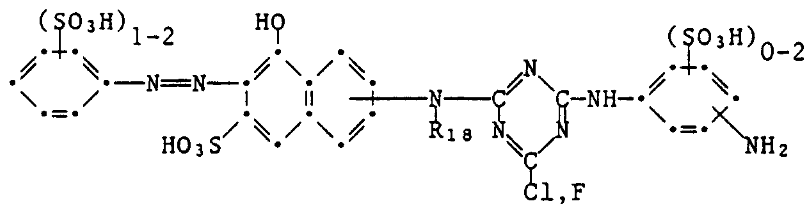

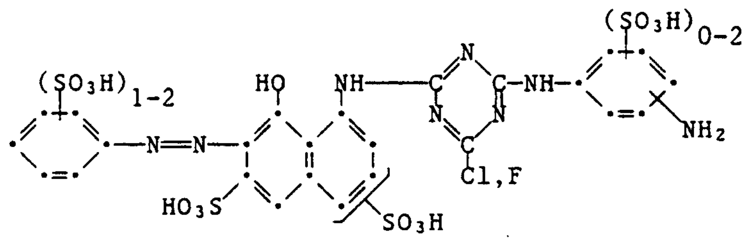

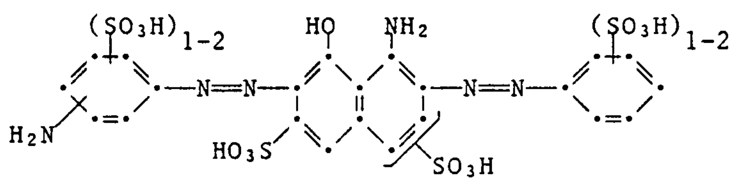

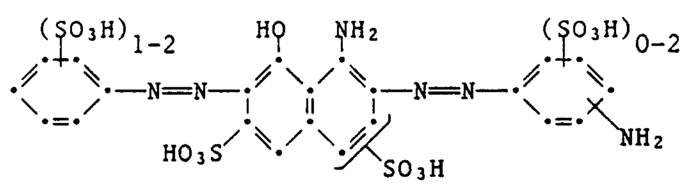

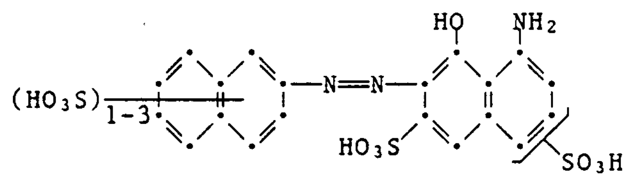

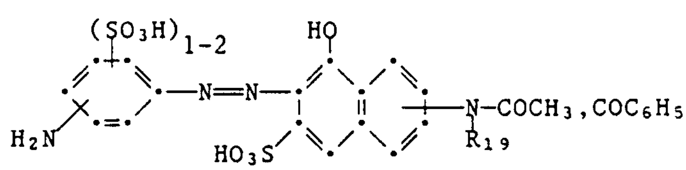

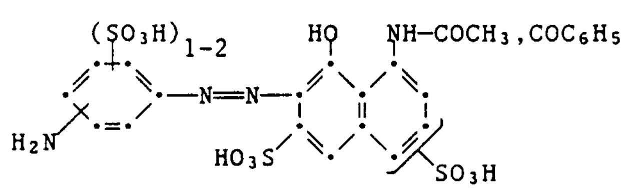

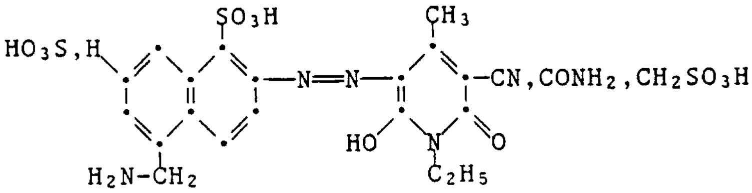

Metallkomplexe von Farbstoffen der Formeln:

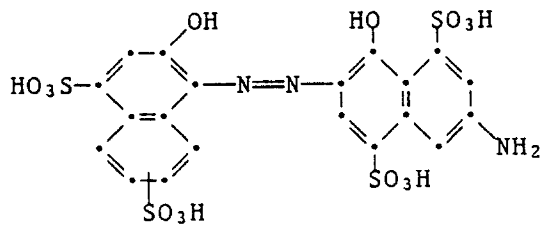

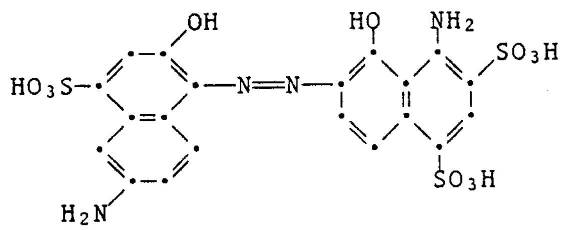

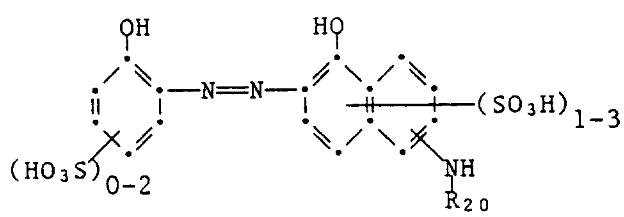

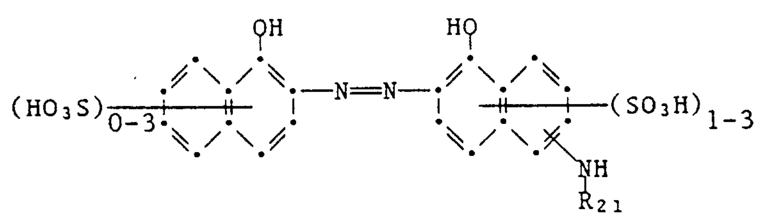

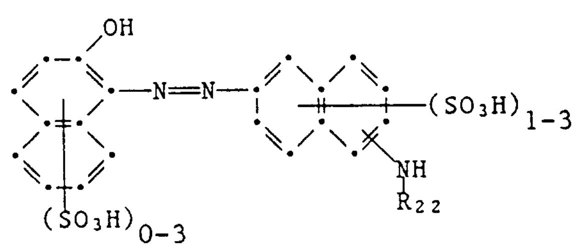

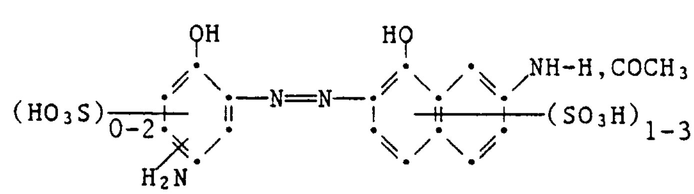

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

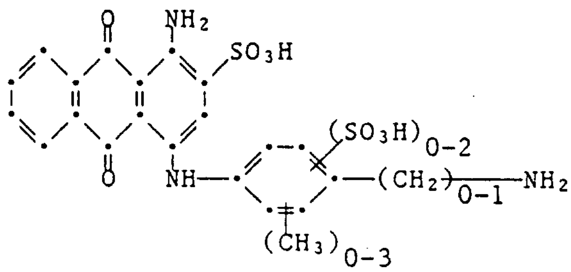

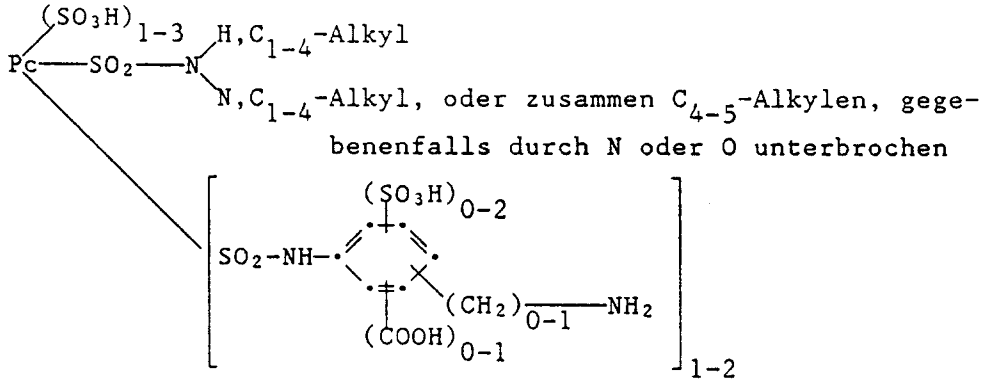


In dieser Formel steht Pc für den Cu- oder Ni-Phthalocyaninrest, die Gesamtzahl der Substituenten am Pc-Gerüst ist 4.

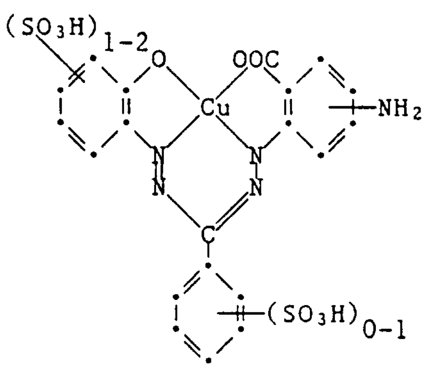

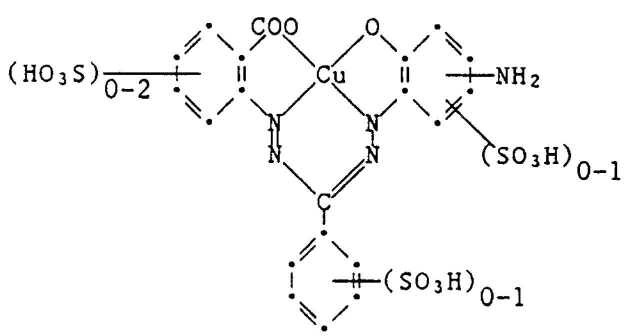

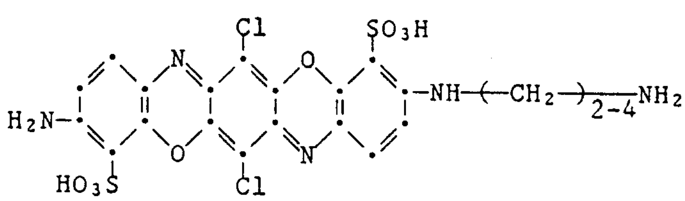

In den oben aufgeführten Formeln bedeuten die Reste $R_{17}$ bis $R_{22}$ Wasserstoff oder $C_{1-4}$-Alkyl, und die Reste $R_{15}$ und $R_{16}$ Wasserstoff, $C_{1-4}$-Alkyl, $C_{1-4}$-Alkoxy, $C_{1-4}$-Alkanoylamino, Ureido oder Halogen, wobei die Reste $R_{15}$ und $R_{16}$, die zu ein und derselben Formel gehören, voneinander unabhängig sind. Vorzugsweise bedeuten die Reste $R_{17}$ bis $R_{22}$ Wasserstoff, Methyl oder Aethyl, und die Reste $R_{15}$ und $R_{16}$ Wasserstoff, Methyl, Aethyl, Methoxy, Aethoxy, Acetylamino, Ureido oder Chlor. Die aromatlschen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert.

Als Diazo- und Kupplungskomponenten seien einzeln genannt:

Diazokomponenten:

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsaureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsaure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsaure, 1-Hydroxy-2-amino-6-acetylaminobenzol-4-sulfonsäure, 1-Hydroxy-2-amino-4-chlorbenzol-5-sulfonsäure, 1-Hydroxy-2-amino-6-nitrobenzol-4-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 1,4-Diaminobenzol-2,5-disulfonsäure, 1,4-Diaminobenzol-2,6-disulfonsaure, 1,3-Diaminobenzol-4,6-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsaure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6-bzw. -4,6-disulfonsäure, 1-Acetylamino-8-hydroxynaphthalin-3,6-bzw.

-4,6-disulfonsäure, 1-(4'-Aminobenzoylamino)-8-hydroxynaphthalin-3,6- bzw. - 4,6-disulfonsäure, 1-(4'-Nitrobenzoylamino)-8-hydroxynaphthalin-3,6- bzw. - 4,6-disulfonsäure, 1-(3'-Aminobenzoylamino)-8-hydroxynaphthalin-3,6- bzw. - 4,6-disulfonsäure, 1-(3'-Nitrobenzoylamino)-8-hydroxynaphthalin-3,6- bzw. - 4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridion-(2), 1-Aethyl-3-cyan- oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2),N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-$\beta$-Aminoäthyl-3-cyan-4-methyl-6-hydroxypyridon-(2)-,1-$\gamma$-Aminopropyl-3-sulfomethyl-4-methyl-6-hydroxypyridon-(2), 1,3-Diaminobenzol, 1-Amino-3-N,N-di-$\beta$-hydroxyäthylaminobenzol, 1-Amino-3-N,N-di-$\beta$-sulfatoäthylaminobenzol, 1-Amino-3-N,N-di-$\beta$-hydroxyäthylamino-4-methoxybenzol, 1-Amino-3-N,N-di-$\beta$-sulfatoäthylamino-4-methoxybenzol, 1-Amino-3-sulfo-benzylaminobenzol, 1-Amino-3-sulfo-benzylamino-4-chlorbenzol, 1-Amino-3-N,N-di-sulfobenzylaminobenzol.

Triazine der Formel (28)

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin, 2,4,6-Tris-methylsulfonyl-s-triazin, 2,4,6-Trisphenylsulfonyl-s-triazin.

Diamine der Formel (29)

Derartige Diamine sind bekannt bzw. können durch Kondensation eines s-Triazins der Formel (28) mit 2 Mol der betreffenden Diamine und 1 Mol eines Amins der Formel (30) hergestellt werden.

Amine der Formel (30)

Diese können hergestellt werden, indem man entsprechende Nitrobenzolcarbonsäurechloride, Nitrophenylalkansäurechloride oder Nitrophenoxyalkansäurechloride mit Aminen der Formel

H—R (38),

welche den Resten der Formeln (5a) bis (5d) entsprechen, kondensiert, und die Nitrogruppen zu Aminogruppen reduziert.

Die Umsetzung wird vorzugsweise in einem hochsiedenden organischen Lösungsmittel, z.B. Nitrobenzol, durchgeführt. Die Reduktion der Nitrogruppe zur Aminogruppe erfolgt in an sich bekannter Weise durch katalytische Hydrierung mit Pd/Kohlenstoff in Aethanol, Essigester oder Tetrahydrofuran bei Raumtemperatur bis etwa 40 °C. Die Reduktion kann auch mit Fe/Salzsäure oder Fe/Essigsäure in wässriger Lösung durchgeführt werden.

Nach einer anderen, in der DE-OS 20 40 620 beschriebenen Methode kann man das Säurechlorid mit einem ungesättigten aliphatischen Amin umsetzen, und an die Doppelbindung des Säureamids 2-Mercaptoäthanol bei Temperaturen zwischen 50 °C und 180 °C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigen, wässrig-organischem oder organischem Medium.

Die so erhältlichen Carbonsäureamide, in denen die Gruppierung -$SO_2$-Z eine $\beta$-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $-SO_2-Z$ z.B. die Gruppierung $-SO_2-CH_2-CH_2-O-SO_3H$, $-SO_2-CH_2-CH_2-O-PO_3H_2$, $-SO_2-CH_2-CH_2$-Halogen, $-SO_2-CH_2-CH_2-O-CO-CH_3$ oder $-SO_2-CH_2-CH_2-O-CO-C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxyd oder Natriumcarbonat, in entsprechende Verbindungen übergeführt werden, in denen die Gruppierung $-SO_2-Z$ die Gruppierung $-SO_2-CH=CH_2$ bedeutet. Die so erhaltenen Produkte können wiederum durch Umsetzung (Addition) mit Salzen der Thioschwefelsäure, wie Natriumthiosulfat, in Verbindungen übergeführt werden, in denen die Gruppierung $-SO_2-Z$ die Gruppierung $-SO_2-CH_2-CH_2-S-SO_3H$ bedeutet.

Geeignete Sulfatierungsmittel sind hierbei beispielsweise konzentrierte Schwefelsäure sowie Chlorsulfonsaure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Bevorzugt sind Verbindungen der Formel

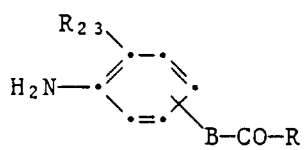
(39),

worin R einer der Reste der Formeln (5a) bis (5d), $R_{23}$ Wasserstoff, Methyl, Aethyl, Methoxy, Aethoxy oder Chlor ist, und B die unter Formel (1) angegebene Bedeutung hat. Vorzugsweise ist B eine direkte Bindung oder Methylen, Methylenoxy oder Aethylenoxy.

Das bevorzugte Verfahren zur Herstellung der Verbindungen der Formel (39) ist dadurch gekennzeichnet, dass man eine Verbindung der Formel

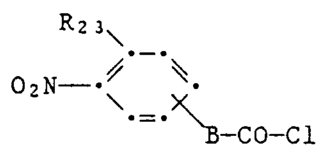
(40),

mit einem Amin der Formel

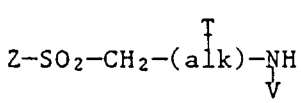
(41a)

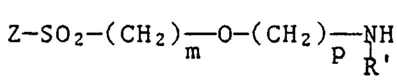
(41b)

$Z-SO_2-(alk')-NH-(alk')-NH_2$ (41c)

oder 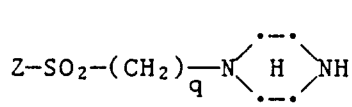 (41d)

kondensiert, und die Nitrogruppen zu Aminogruppen reduziert.

Nach einer Abänderung des oben beschriebenen Verfahrens können Verbindungen der Formel (39) auch in der Weise hergestellt werden, dass man eine Verbindung der Formel (40) mit einem Amin der

Formel

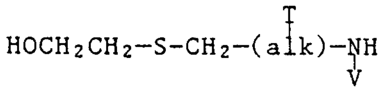 (42a)

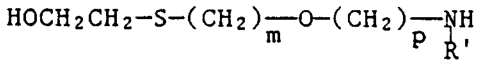 (42b)

$HOCH_2CH_2$-S-(alk')-NH-(alk')-$NH_2$ (42c)

oder 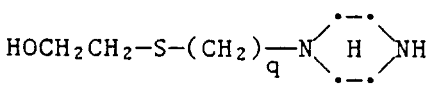 (42d)

kondensiert, das Kondensationsprodukt mit elementarem Chlor zu der entsprechenden β-Chloräthylsulfonyl-Verbindung oxydiert, und die Nitrogruppen zu Aminogruppen reduziert.

Ferner ist noch eine andere Verfahrensvariante anwendbar, wonach man zuerst eine Verbindung der Formel (40) mit einem der Amine der Formeln (42a) bis (42d) kondensiert, das erhaltene Produkt mit einem Peroxid zum Sulfon oxydiert, dann die Nitrogruppe zur Aminogruppe reduziert, die erhaltene Aminoverbindung mit einem s-Triazin der Formel (28) oder einer Verbindung der Formel (29) kondensiert, und zuletzt die Hydroxygruppe in dem Rest von einem der Amine der Formeln (42a) bis (42d) sulfatiert.

Die Kondensation der Verbindung der Formel (40) mit den Aminen der Formeln (42a) bis (42d) wird z.B. in Chloroform bei Raumtemperatur und in Gegenwart von alkalischen, säurebindenden Mitteln, z.B. Alkalihydroxiden, -carbonaten oder -bicarbonaten, durchgeführt. Anschliessend wird das Kondensationsprodukt in an sich bekannter Weise mit einer Chlor/Salzsäure-Mischungoxydiert. Die Reduktion der Nitrogruppe zur Aminogruppe erfolgt wie oben beschrieben.

Die als Ausgangsverbindungen verwendeten Amine der Formeln (41a) bis (41d) können analog dem Verfahren des Beispiels 1 der DE-OS 26 14 550 hergestellt werden.

Amine der Formel (38)

β-(β'-Chloräthylsulfonyl)-äthylamin,
β-[β'-(B''-Chloräthylsulfonyl)-äthyloxy]-äthylamin,
γ-(β'-Chloräthylsulfonyl)-propylamin,
Bis-[β-(β'-chloräthylsulfonyl)-äthyl]-amin,
Bis-[γ-(β'-chloräthylsulfonyl)-propyl]-amin,
β-(Vinylsulfonyl)-äthylamin,
Bis-[β-(vinylsulfonyl)-äthyl]-amin,
δ-(β'-Chloräthylsulfonyl)-butylamin,
β-(β'-Sulfatoäthylsulfonyl)-äthylamin,
Bis-[β-(β'-sulfatoäthylsulfonyl)-äthyl]-amin,
N-(γ-Vinylsulfonyl-propyl)piperazin,
β-(β'-Vinylsulfonyl-äthylamino)-äthylamin,
N-(β-Vinylsulfonyl-äthyl)piperazin,
β-(β'-Vinylsulfonyl-äthyloxy)-äthylamin,
β-[β'-(β''-Chloräthylsulfonyl)-äthylamino]-äthylamin,
β-[β'-(β''-Sulfatoäthylsulfonyl)-α'-methyl-äthylamino]-äthylamin,
β-[β'-(β''-Sulfatoäthylsulfonyl)-α'-methyl-äthylamino]-β-methyläthylamin,
γ-[β'-(β''-Sulfatoäthylsulfonyl)-α'-methyl-äthylamino]-propylamin,
δ-[β'-(β''-Sulfatoäthylsulfonyl)-α'-methyl-äthylamino]-n-butylamin,
α-Carbonsäure-β-(β'-chloräthylsulfonyl)-äthylamin,
α-Carbonsäureäthylester-β-(β'-chloräthylsulfonyl)-äthylamin,
β-Hydroxy-γ-(β'-chloräthylsulfonyl)-propylamin,
β,γ-(Bis-β'-chloräthylsulfonyl)-propylamin,
β-Acetoxy-γ-(β'-acetoxyäthylsulfonyl)-propylamin,
β-Chlor-γ-(β'-chloräthylsulfonyl)-propylamin,

β-Sulfato-γ-(β'-sulfatoäthylsulfonyl)-propylamin,
Bis-[β-hydroxy-γ-(β'-chloräthylsulfonyl)-propyl]-amin,
Bis-[β-chlor-γ-(β'-chloräthylsulfonyl)-propyl]-amin,
Bis-[β-sulfato-γ-(β'-sulfatoäthylsulfonyl)-propyl]-amin,
β-Hydroxy-γ-(β'-vinylsulfonyl)-propylamin,
4-(β-Chloräthylsulfonyl)-cyclohexylamin,
4-(β-Sulfatoäthylsulfonyl)-cyclohexylamin,
4-Vinylsulfonylpiperidin,
4-(β-Chloräthylsulfonyl)-piperidin,
2-[β-(β'-Chloräthylsulfonyl)äthyl]-piperidin,
2-(β-Sulfatoäthylsulfonyl)methylpiperidin,
N-[γ-(β'Chloräthylsulfonyl)propyl]-piperazin,
γ-[γ'-(β''-Chloräthylsulfonyl)propyloxy]-propylamin,
β-[Bis-(β'-vinylsulfonyl-äthyl)amino]-äthylamin,
(β,ε-Bis-vinylsulfonyl)-n-pentylamin
sowie gegebenenfalls weitere Verbindungen, worin die β-Chloräthylsulfonyl-Gruppe durch β-Sulfatoäthylsulfonyl oder Vinylsulfonyl ersetzt ist, oder worin die β-Chloräthylsulfonyl-, β-Sulfatoäthylsulfonyl- oder Vinylsulfonyl-Gruppe durch β-Hydroxyäthyl ersetzt ist.

Die Kondensation des s-Triazins der Formel (28), insbesondere eines 2,4,6-Trihalogen-s-triazins mit den Farbstoffen der Formeln (26) und (27) bzw. den eine Gruppe $-N(R_1)H$ bzw. $-N(R_2)H$ enthaltenden diazotierbaren und/oder kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (29) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (29) kann vor oder nach der Kondensation des Halogentriazins mit einem Farbstoff der Formel (26) bzw. (27) geschehen. Die Kondensation des Halogentriazins mit einer Verbindung der Formel (29) erfolgt vorzugsweise in wässriger Lösung oder Suspension, bei niedriger Temperatur (0 bis 40°C) und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd-Kondensat oder insbesondere Anthrachinon-2-sulfonsäure, behoben

werden.

Die Reaktivfarbstoffe der Formel (1) zeichnen sich durch ein gutes Fixiervermögen und ein sehr gutes Aufbauvermögen aus. Sie können nach dem Ausziehverfahren über einen sehr grossen Temperaturbereich eingesetzt werden und eignen sich deshalb auch sehr gut zum Färben von Baumwolle-Polyester-Mischgeweben nach den für solche Gewebe empfohlenen Bedingungen. Die Fixiergrade sind hoch, und die Differenz zwischen Ausziehgrad und Fixiergrad ist bemerkenswert klein, d.h. der Seifverlust sehr gering. Die Reaktivfarbstoffe der Formel (1) eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe-und Schweissechtheiten, sowie eine gute Plissierechtheit, Bügelechtheit und Reibechtheit und eine sehr gute Chlorbadewasserechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1: 18,5 Teile Cyanurchlorid werden in 110 Teilen Aceton gelöst und unter kräftigem Rühren auf 250 Teile Eis gegeben. Dazu lässt man eine Lösung von 63 Teilen des Farbstoffs der folgenden Konstitution

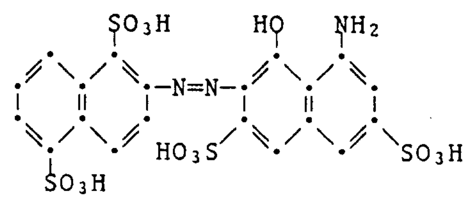

bei 0° hinzufliessen. Anschliessend werden 50 Teile 2-normale Sodalösung zugetropft, wobei sich ein pH-Wert von 6-6,5 ergibt.

Nach beendeter Kondensation lässt man eine Lösung von 5,4 Teilen m-Phenylendiamin in 100 Teile Wasser zufliessen und rührt die Mischung eine Stunde zwischen 30-40°, wobei durch Zutropfen von Natriumhydroxydlösung der pH-Wert zwischen 5 und 7 gehalten wird. Anschliessend wird der pH-Wert mit Salzsäure auf 4 gestellt. Nun kommen 29 Teile

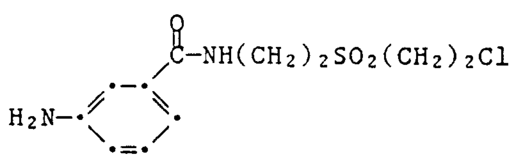

als Pulver hinzu. Man erwärmt auf 70°C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55° abkühlen und filtriert. Man erhält etwa 285 Teile Farbstoffpaste, die bei 50-55° im Vakuum getrocknet werden. Der hergestellte Reaktivfarbstoff hat folgende Konstitution:

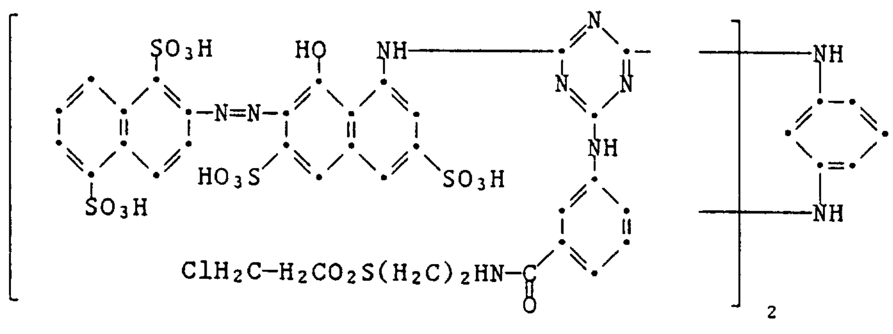

Er färbt Cellulosefasern nach dem Ausziehverfahren in echten kräftigen roten Tönen an.

Beispiel 2:

31,9 Teile 1,8-Aminonaphthol-3,6-disulfonsäure werden unter Zusatz von Natriumhydroxyd neutral gelöst, und die Lösung wird zu einer eiskalten wässrigen Suspension von 18,5 Teilen Cyanurchlorid gegeben. Die Mischung wird 2 Stunden zwischen 0 und 5° gerührt und mit einer verdünnten Natriumhydroxydlösung so neutralisiert, dass die Reaktion stets schwach kongosauer bleibt. Nach beendeter Kondensation fügt man eine aus 15,7 Teilen Orthanilsäure in üblicher Weise hergestellte Diazolösung hinzu. Im Laufe von 1 bis 2 Stunden werden etwa 50 Vol.-Teile 2n-Natriumhydroxydlösung zugetropft. Nach beendeter Kupplung fügt man eine Lösung von 5,4 Teilen m-Phenylendiamin in 100 Teilen Wasser hinzu, erwärmt auf 35° und hält 2 Stunden bei dieser Temperatur. Durch allmähliche Zugabe einer verdünnten Natriumhydroxydlösung wird das Reaktionsgemisch neutralisiert. Anschliessend wird der pH-Wert mit Salzsäure auf 4 gestellt. Nun kommen 29 Teile

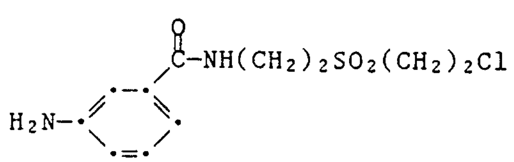

als Pulver hinzu. Man erwärmt auf 70°C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55° abkühlen und filtriert. Man erhält etwa 285 Teile Farbstoffpaste, die bei 50-55° im Vakuum getrocknet werden. Der hergestellte Reaktivfarbstoff hat folgende Konstitution:

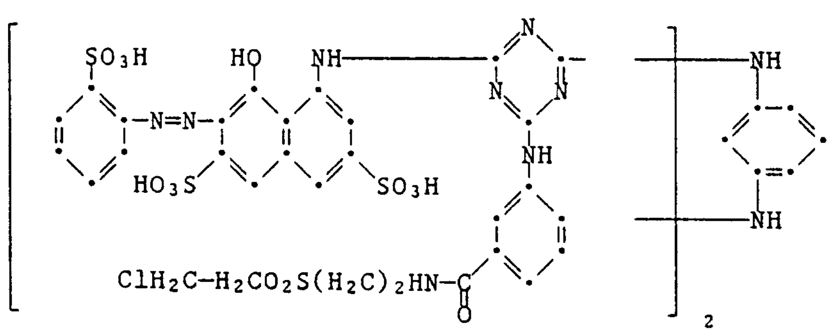

Er färbt Cellulosefasern nach dem Ausziehverfahren in echten kräftigen roten Tönen an.

Die nachfolgende Tabelle enthält weitere Beispiele von Farbstoffen, die gemäss Beispiel 2 erhalten werden, wenn man die Monoazofarbstoffe der Kolonne I mit Cyanurchlorid, dann mit den Diaminen der Kolonne II und mit den Aminoverbindungen der Kolonne III im Verhältnis 2:2:1:2 umsetzt.

Tabelle 1

| Bsp. | Monoazofarbstoff I | Diamin II | Aminoverbindung III | Nuance |
|---|---|---|---|---|
| 3 | Orthanilsäure ⟶ 1,8-Aminonaphthol-3,6-disulfonsäure | 1,4-Phenylendiamin | 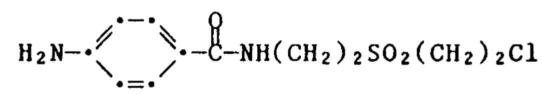 | Rot |
| 4 | Orthanilsäure ⟶ 1,8-Aminonaphthol-3,6-disulfonsäure | 1,4-Phenylendiamin | 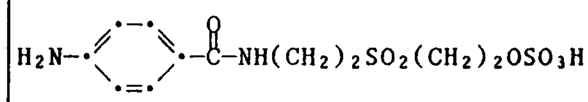 | Rot |
| 5 | Orthanilsäure ⟶ 1,8-Aminonaphthol-3,6-disulfonsäure | 1,4-Phenylendiamin | 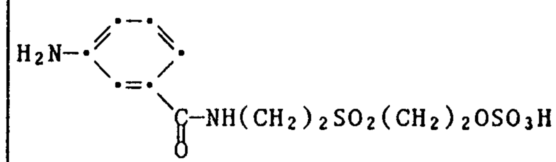 | Rot |
| 6 | Orthanilsäure ⟶ 1,8-Aminonaphthol-3,6-disulfonsäure | 1,4-Phenylendiamin | 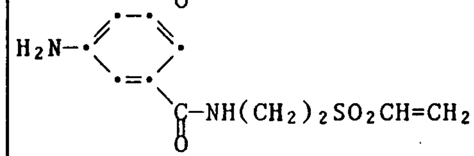 | Rot |
| 7 | Orthanilsäure ⟶ 1,8-Aminonaphthol-3,6-disulfonsäure | 1,3-Phenylendiamin | 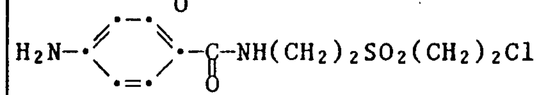 | Rot |
| 8 | Orthanilsäure ⟶ 1,8-Aminonaphthol-3,6-disulfonsäure | 1,3-Phenylendiamin | 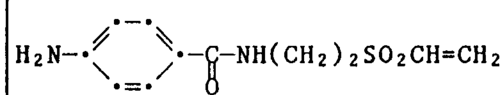 | Rot |
| 9 | Orthanilsäure ⟶ 1,8-Aminonaphthol-3,6-disulfonsäure | 1,3-Phenylendiamin | 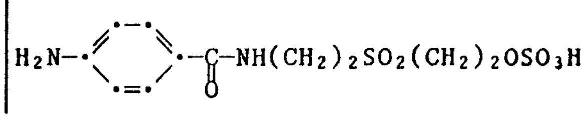 | Rot |

Tabelle 1 (Fortsetzung)

| Bsp. | Monoazofarbstoff I | Diamin II | Aminoverbindung III | Nuance |
|---|---|---|---|---|
| 10 | Orthanilsäure ⟶ 1,8-Aminonaphthol-3,6-disulfonsäure | 1,3-Phenylendiamin | 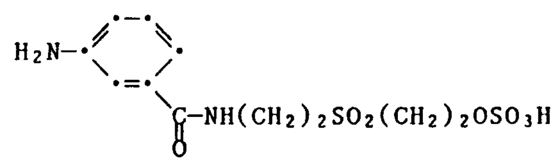 | Rot |
| 11 | Orthanilsäure ⟶ 1,8-Aminonaphthol-3,6-disulfonsäure | 1,3-Phenylendiamin | 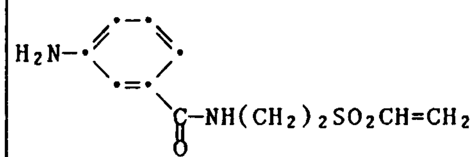 | Rot |
| 12 | Orthanilsäure ⟶ 1,8-Aminonaphthol-3,6-disulfonsäure | 1,3-Phenylendiamin | 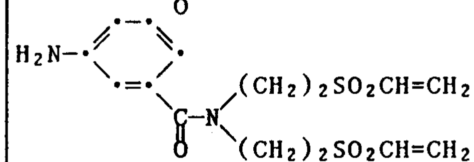 | Rot |
| 13 | Orthanilsäure ⟶ 1,8-Aminonaphthol-4,6-disulfonsäure | 1,4-Phenylendiamin | 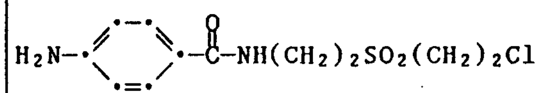 | Rot |
| 14 | Orthanilsäure ⟶ 1,8-Aminonaphthol-4,6-disulfonsäure | 1,4-Phenylendiamin | 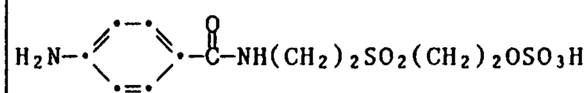 | Rot |
| 15 | Orthanilsäure ⟶ 1,8-Aminonaphthol-4,6-disulfonsäure | 1,4-Phenylendiamin | 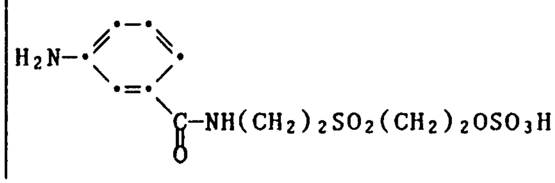 | Rot |

Tabelle 1 (Fortsetzung)

| Bsp. | Monoazofarbstoff I | Diamin II | Aminoverbindung III | Nuance |
|---|---|---|---|---|
| 16 | Orthanilsäure ⟶ 1,8-Aminonaphthol-4,6-disulfonsäure | 1,4-Phenylendiamin | 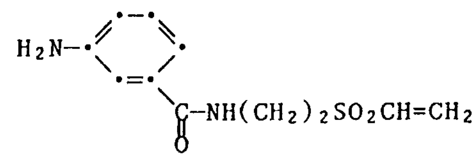 | Rot |
| 17 | Orthanilsäure ⟶ 1,8-Aminonaphthol-4,6-disulfonsäure | 1,3-Phenylendiamin | 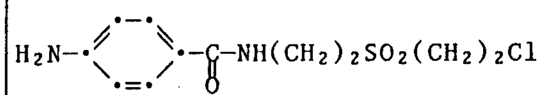 | Rot |
| 18 | Orthanilsäure ⟶ 1,8-Aminonaphthol-4,6-disulfonsäure | 1,3-Phenylendiamin | 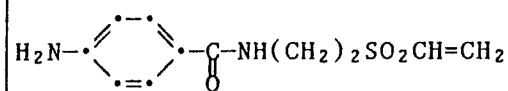 | Rot |
| 19 | Orthanilsäure ⟶ 1,8-Aminonaphthol-4,6-disulfonsäure | 1,3-Phenylendiamin | 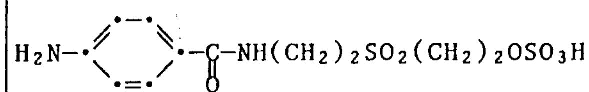 | Rot |
| 20 | Orthanilsäure ⟶ 1,8-Aminonaphthol-4,6-disulfonsäure | 1,3-Phenylendiamin | 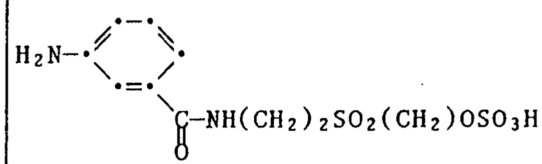 | Rot |
| 21 | Orthanilsäure ⟶ 1,8-Aminonaphthol-4,6-disulfonsäure | 1,3-Phenylendiamin | 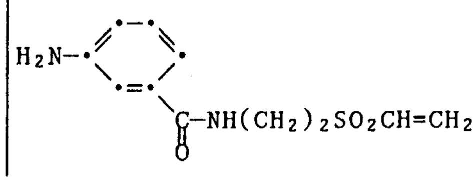 | Rot |

Tabelle 1 (Fortsetzung)

| Bsp. | Monoazofarbstoff I | Diamin II | Aminoverbindung III | Nuance |
|---|---|---|---|---|
| 22 | Orthanilsäure ⟶ 1,8-Aminonaphthol-4,6-disulfonsäure | 1,3-Phenylendiamin | 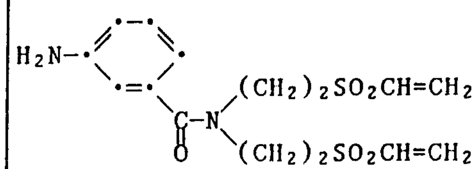 | Rot |
| 23 | Orthanilsäure ⟶ 1,8-Aminonaphthol-3,6-disulfonsäure | 2,4-Diaminotoluol | 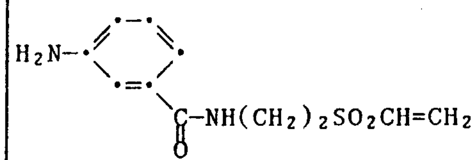 | Scharlach |
| 24 | Orthanilsäure ⟶ 1,8-Aminonaphthol-3,6-disulfonsäure | 2,4-Diamino-chlor-benzol | 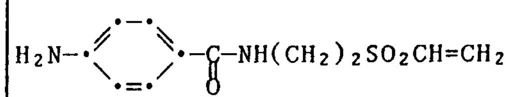 | Scharlach |
| 25 | Orthanilsäure ⟶ 1,8-Aminonaphthol-3,6-disulfonsäure | 2,5-Diaminotoluol | 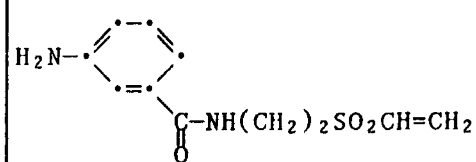 | Scharlach |
| 26 | Orthanilsäure ⟶ 1,8-Aminonaphthol-3,6-disulfonsäure | 1,2-Aethylendiamin | 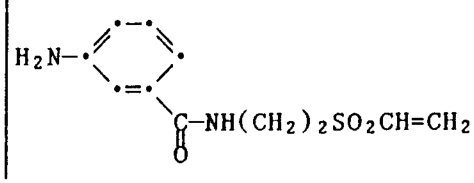 | Scharlach |

Tabelle 1 (Fortsetzung)

| Bsp. | Monoazofarbstoff I | Diamin II | Aminoverbindung III | Nuance |
|---|---|---|---|---|
| 27 | Orthanilsäure ⟶ 1,8-Aminonaphthol-3,6-disulfonsäure | 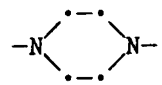 | 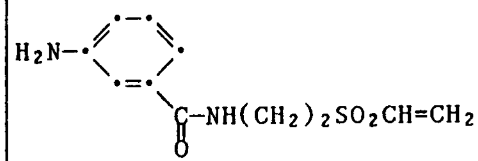 | Scharlach |
| 28 | Orthanilsäure ⟶ 1,8-Aminonaphthol-3,6-disulfonsäure | 1,3-Propylendiamin | 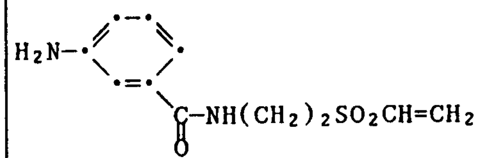 | Scharlach |
| 29 | 2-Naphthylamino-1,6-disulfonsäure ⟶ 1,8-Aminonaphthol-3,6-disulfonsäure | 1,4-Phenylendiamin | 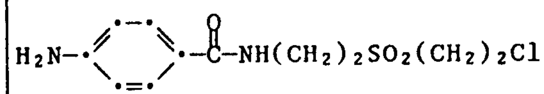 | blaustichig Rot |
| 30 | 2-Naphthylamino-1,6-disulfonsäure ⟶ 1,8-Aminonaphthol-3,6-disulfonsäure | 1,4-Phenylendiamin | 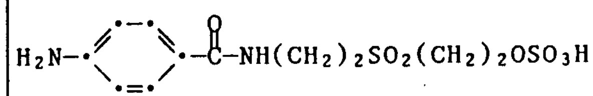 | blaustichig Rot |
| 31 | 2-Naphthylamino-1,6-disulfonsäure ⟶ 1,8-Aminonaphthol-3,6-disulfonsäure | 1,4-Phenylendiamin | 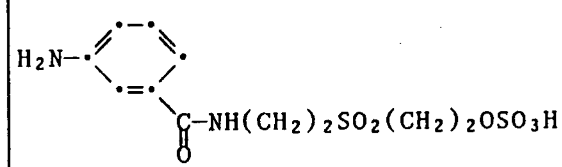 | blaustichig Rot |

Tabelle 1 (Fortsetzung)

| Bsp. | Monoazofarbstoff I | Diamin II | Aminoverbindung III | Nuance |
|---|---|---|---|---|
| 32 | 2-Naphthylamino-1,6-disulfonsäure ⟶ 1,8-Aminonaphthol-3,6-disulfonsäure | 1,4-Phenylendiamin | 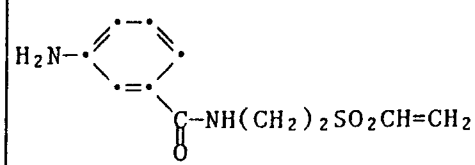 | blau-stichig Rot |
| 33 | 2-Naphthylamino-1,6-disulfonsäure ⟶ 1,8-Aminonaphthol-3,6-disulfonsäure | 1,3-Phenylendiamin | 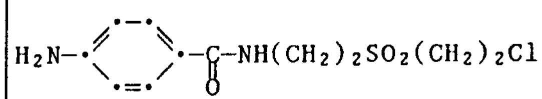 | blau-stichig Rot |
| 34 | 2-Naphthylamino-1,6-disulfonsäure ⟶ 1,8-Aminonaphthol-3,6-disulfonsäure | 1,3-Phenylendiamin | 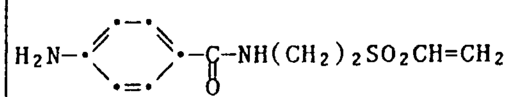 | blau-stichig Rot |
| 35 | 2-Naphthylamino-1,6-disulfonsäure ⟶ 1,8-Aminonaphthol-3,6-disulfonsäure | 1,3-Phenylendiamin | 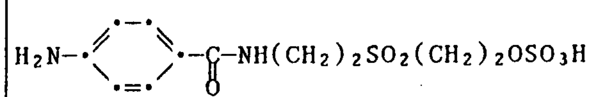 | blau-stichig Rot |
| 36 | 2-Naphthylamino-1,6-disulfonsäure ⟶ 1,8-Aminonaphthol-3,6-disulfonsäure | 1,3-Phenylendiamin | 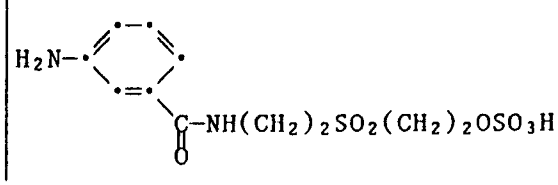 | blau-stichig Rot |

Tabelle 1 (Fortsetzung)

| Bsp. | Monoazofarbstoff I | Diamin II | Aminoverbindung III | Nuance |
|---|---|---|---|---|
| 37 | 2-Naphthylamino-1,6-disulfonsäure ⟶ 1,8-Aminonaphthol-3,6-disulfonsäure | 1,3-Phenylendiamin | 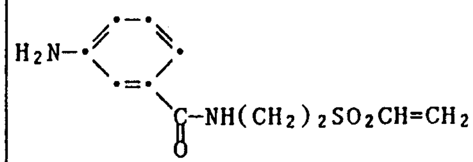 | blaustichig Rot |
| 38 | 2-Naphthylamino-1,6-disulfonsäure ⟶ 1,8-Aminonaphthol-3,6-disulfonsäure | 1,3-Phenylendiamin | 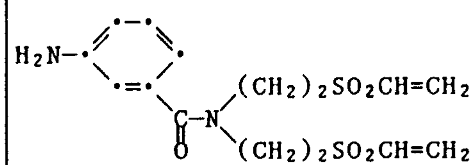 | blaustichig Rot |
| 39 | 2-Naphthylamino-1,6-disulfonsäure ⟶ 1,8-Aminonaphthol-4,6-disulfonsäure | 1,3-Phenylendiamin | 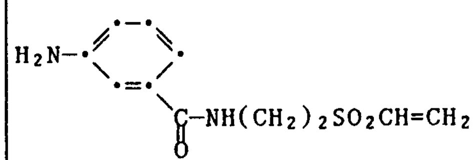 | Rot |
| 40 | 2-Naphthylamino-1,6-disulfonsäure ⟶ 1,8-Aminonaphthol-4,6-disulfonsäure | 1,2-Aethylendiamin | 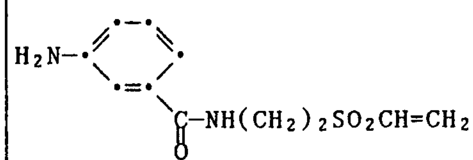 | Rot |
| 41 | 2-Naphthylamino-1,6-disulfonsäure ⟶ 1,8-Aminonaphthol-3,6-disulfonsäure | 1,3-Propylendiamin | 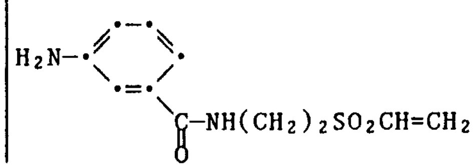 | Rot |

Tabelle 1 (Fortsetzung)

| Bsp. | Monoazofarbstoff I | Diamin II | Aminoverbindung III | Nuance |
|---|---|---|---|---|
| 42 | 2-Naphthylamino-1,6-disulfonsäure ⟶ 1,8-Aminonaphthol-4,6-disulfonsäure | 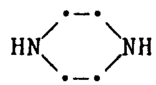 | 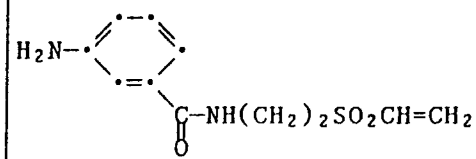 | Rot |
| 43 | 2-Naphthylamino-1,6-disulfonsäure ⟶ 1,8-Aminonaphthol-4,6-disulfonsäure | 1,4-Phenylendiamin | 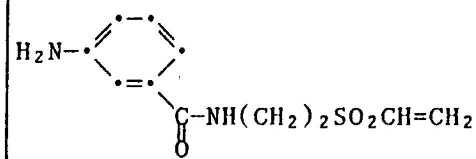 | Rot |
| 44 | 2-Naphthylamino-1,6-disulfonsäure ⟶ 1,8-Aminonaphthol-4,6-disulfonsäure | 2,4-Diaminotoluol | 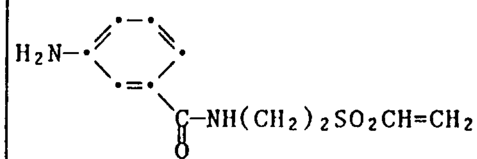 | Rot |
| 45 | 2-Naphthylamino-1,6-disulfonsäure ⟶ 1,8-Aminonaphthol-4,6-disulfonsäure | 2,4-Diamino-chlor-benzol | 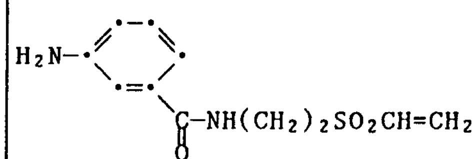 | Rot |
| 46 | 2-Naphthylamino-1,5-disulfonsäure ⟶ 1,8-Aminonaphthol-3,6-disulfonsäure | 1,4-Phenylendiamin | 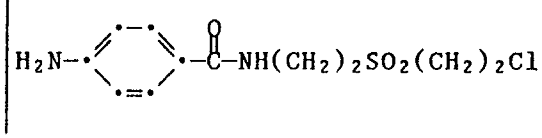 | blau-stichig Rot |

Tabelle 1 (Fortsetzung)

| Bsp. | Monoazofarbstoff I | Diamin II | Aminoverbindung III | Nuance |
|---|---|---|---|---|
| 47 | 2-Naphthylamino-1,5-disulfonsäure ⟶ 1,8-Aminonaphthol-3,6-disulfonsäure | 1,4-Phenylendiamin | 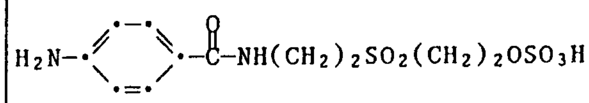 | blaustichig Rot |
| 48 | 2-Naphthylamino-1,5-disulfonsäure ⟶ 1,8-Aminonaphthol-3,6-disulfonsäure | 1,4-Phenylendiamin | 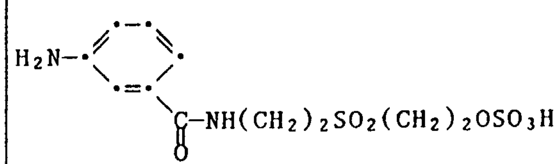 | blaustichig Rot |
| 49 | 2-Naphthylamino-1,5-disulfonsäure ⟶ 1,8-Aminonaphthol-3,6-disulfonsäure | 1,4-Phenylendiamin | 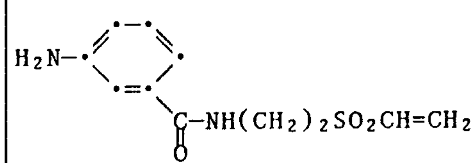 | blaustichig Rot |
| 50 | 2-Naphthylamino-1,5-disulfonsäure ⟶ 1,8-Aminonaphthol-3,6-disulfonsäure | 1,3-Phenylendiamin | 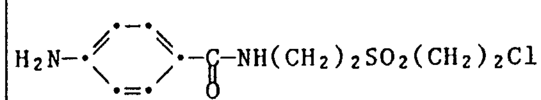 | blaustichig Rot |
| 51 | 2-Naphthylamino-1,5-disulfonsäure ⟶ 1,8-Aminonaphthol-3,6-disulfonsäure | 1,3-Phenylendiamin | 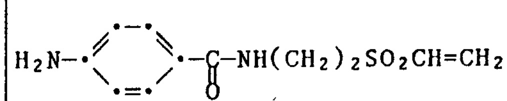 | blaustichig Rot |

Tabelle 1 (Fortsetzung)

| Bsp. | Monoazofarbstoff I | Diamin II | Aminoverbindung III | Nuance |
|---|---|---|---|---|
| 52 | 2-Naphthylamino-1,5-disulfonsäure ⟶ 1,8-Aminonaphthol-3,6-disulfonsäure | 1,3-Phenylendiamin | 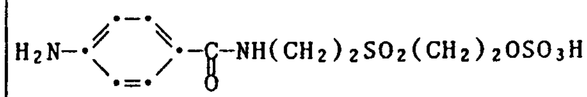 | blau-stichig Rot |
| 53 | 2-Naphthylamino-1,5-disulfonsäure ⟶ 1,8-Aminonaphthol-3,6-disulfonsäure | 1,3-Phenylendiamin | 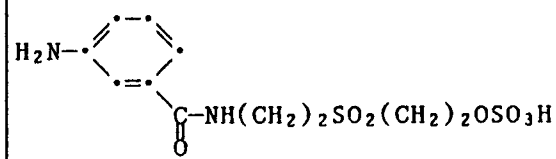 | blau-stichig Rot |
| 54 | 2-Naphthylamino-1,5-disulfonsäure ⟶ 1,8-Aminonaphthol-3,6-disulfonsäure | 1,3-Phenylendiamin | 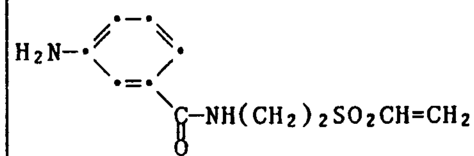 | blau-stichig Rot |
| 55 | 2-Naphthylamino-1,5-disulfonsäure ⟶ 1,8-Aminonaphthol-3,6-disulfonsäure | 1,3-Phenylendiamin | 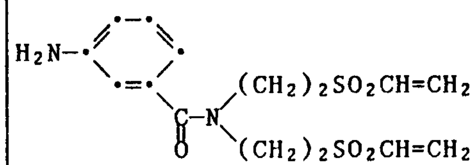 | blau-stichig Rot |
| 56 | 2-Naphthylamino-1,5-disulfonsäure ⟶ 1,8-Aminonaphthol-4,6-disulfonsäure | 1,3-Phenylendiamin | 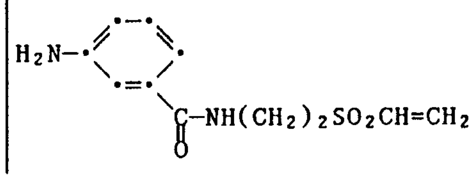 | Rot |

Tabelle 1 (Fortsetzung)

| Bsp. | Monoazofarbstoff I | Diamin II | Aminoverbindung III | Nuance |
|---|---|---|---|---|
| 57 | 2-Naphthylamino-1,5-disulfonsäure → 1,8-Aminonaphthol-4,6-disulfonsäure | 1,3-Phenylendiamin | 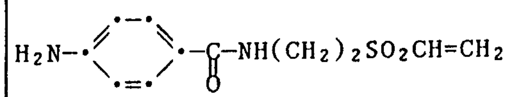 | Rot |
| 58 | 2-Naphthylamino-1,5-disulfonsäure → 1,8-Aminonaphthol-4,6-disulfonsäure | 1,4-Phenylendiamin | 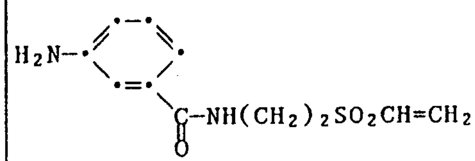 | Rot |
| 59 | 2-Naphthylamino-1,5-disulfonsäure → 1,8-Aminonaphthol-4,6-disulfonsäure | 1,4-Phenylendiamin | 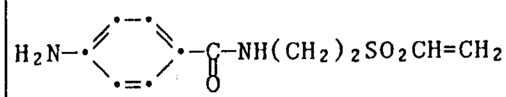 | Rot |
| 60 | 2-Naphthylamino-1,5-disulfonsäure → 1,8-Aminonaphthol-4,6-disulfonsäure | 1,2-Aethylendiamin | 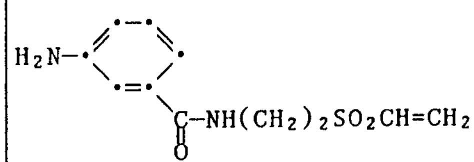 | Rot |
| 61 | 2-Naphthylamino-1,5-disulfonsäure → 1,8-Aminonaphthol-4,6-disulfonsäure | 1,3-Propylendiamin | 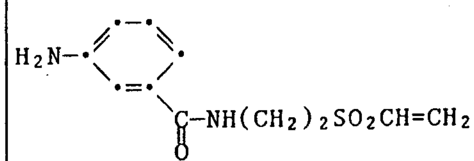 | Rot |

Tabelle 1 (Fortsetzung)

| Bsp. | Monoazofarbstoff I | Diamin II | Aminoverbindung III | Nuance |
|---|---|---|---|---|
| 62 | 2-Naphthylamino-1,5-disulfonsäure ⟶ 1,8-Aminonaphthol-4,6-disulfonsäure | 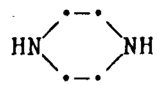 | 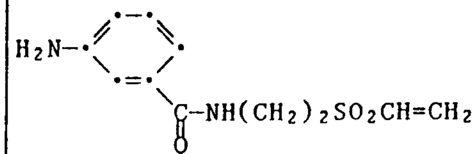 | Rot |
| 63 | Metanilsäure ⟶ 1,8-Aminonaphthol-3,6-disulfonsäure | 1,4-Phenylendiamin | 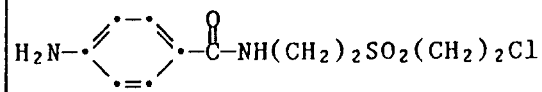 | Rot |
| 64 | Metanilsäure ⟶ 1,8-Aminonaphthol-3,6-disulfonsäure | 1,4-Phenylendiamin | 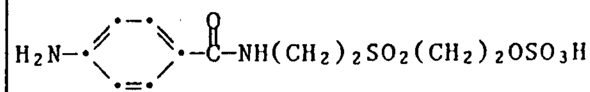 | Rot |
| 65 | Metanilsäure ⟶ 1,8-Aminonaphthol-3,6-disulfonsäure | 1,4-Phenylendiamin | 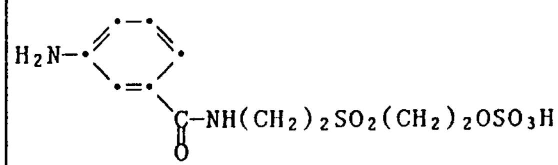 | Rot |
| 66 | Metanilsäure ⟶ 1,8-Aminonaphthol-3,6-disulfonsäure | 1,4-Phenylendiamin | 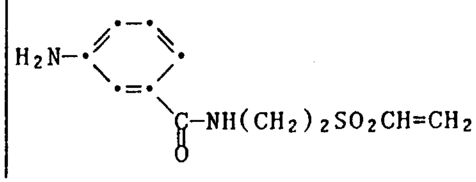 | Rot |

Tabelle 1 (Fortsetzung)

| Bsp. | Monoazofarbstoff I | Diamin II | Aminoverbindung III | Nuance |
|---|---|---|---|---|
| 67 | Metanilsäure ⟶ 1,8-Aminonaphthol-3,6-disulfonsäure | 1,3-Phenylendiamin | 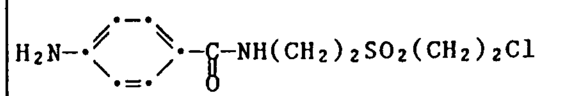 | Rot |
| 68 | Metanilsäure ⟶ 1,8-Aminonaphthol-3,6-disulfonsäure | 1,3-Phenylendiamin | 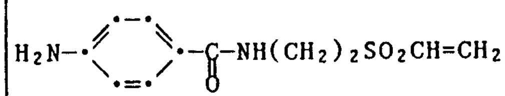 | Rot |
| 69 | Metanilsäure ⟶ 1,8-Aminonaphthol-3,6-disulfonsäure | 1,3-Phenylendiamin | 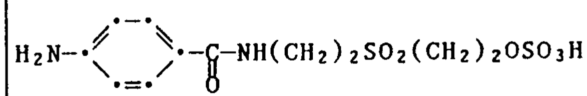 | Rot |
| 70 | Metanilsäure ⟶ 1,8-Aminonaphthol-3,6-disulfonsäure | 1,3-Phenylendiamin | 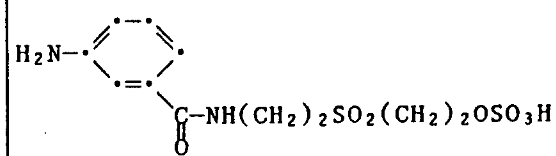 | Rot |
| 71 | Metanilsäure ⟶ 1,8-Aminonaphthol-3,6-disulfonsäure | 1,3-Phenylendiamin | 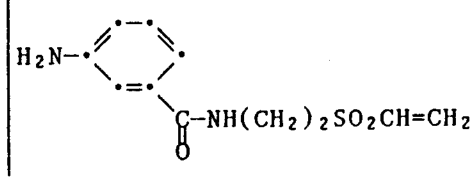 | Rot |

Tabelle 1 (Fortsetzung)

| Bsp. | Monoazofarbstoff I | Diamin II | Aminoverbindung III | Nuance |
|---|---|---|---|---|
| 72 | Metanilsäure → 1,8-Aminonaphthol-3,6-disulfonsäure | 1,3-Phenylendiamin | 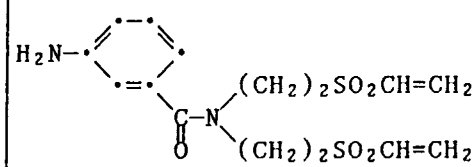 | Rot |
| 73 | Sulfanilsäure → 1,8-Aminonaphthol-4,6-disulfonsäure | 1,3-Phenylendiamin | 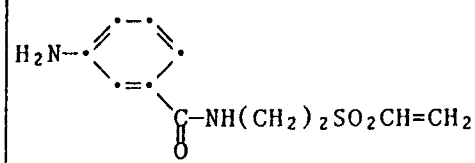 | Scharlach |
| 74 | Sulfanilsäure → 1,8-Aminonaphthol-4,6-disulfonsäure | 1,4-Phenylendiamin | 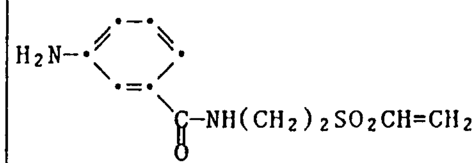 | Scharlach |
| 75 | Sulfanilsäure → 1,8-Aminonaphthol-4,6-disulfonsäure | 1,3-Propylendiamin | 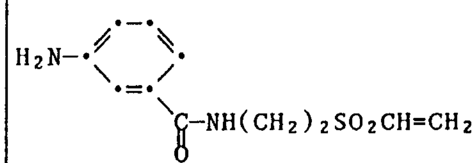 | Scharlach |
| 76 | Sulfanilsäure → 1,8-Aminonaphthol-4,6-disulfonsäure | 1,2-Aethylendiamin | 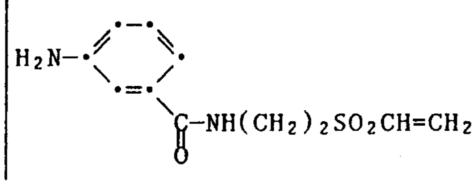 | Scharlach |

Tabelle 1 (Fortsetzung)

| Bsp. | Monoazofarbstoff I | Diamin II | Aminoverbindung III | Nuance |
|---|---|---|---|---|
| 77 | Sulfanilsäure ⟶ 1,8-Aminonaphthol-4,6-disulfonsäure | 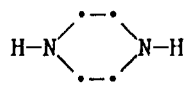 | 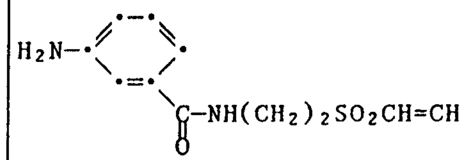 | Scharlach |
| 78 | Anilin-2,5-disulfonsäure ⟶ 1,8-Aminonaphthol-3,6-disulfonsäure | 2,4-Diaminotoluol | 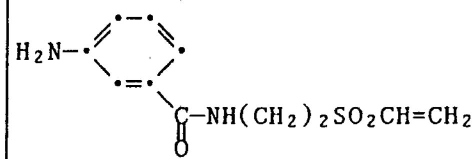 | Rot |
| 79 | Anilin-2,5-disulfonsäure ⟶ 1,8-Aminonaphthol-3,6-disulfonsäure | 2,4-Diaminochlorbenzol | 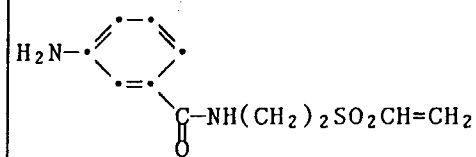 | Rot |
| 80 | Anilin-2,5-disulfonsäure ⟶ 1,8-Aminonaphthol-3,6-disulfonsäure | 2,5-Diaminotuluol | 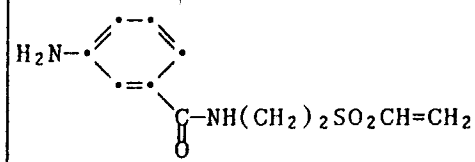 | Rot |
| 81 | Anilin-2,5-disulfonsäure ⟶ 1,8-Aminonaphthol-3,6-disulfonsäure | m-Phenylendiamin | 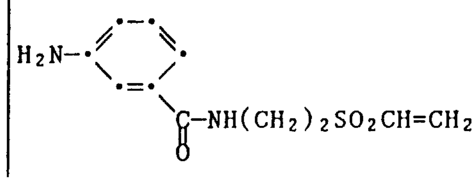 | Rot |

Tabelle 1 (Fortsetzung)

| Bsp. | Monoazofarbstoff I | Diamin II | Aminoverbindung III | Nuance |
|---|---|---|---|---|
| 82 | m-Aminobenzoesäure ⟶ 1,8-Aminonaphthol-3,6-disulfonsäure | p-Phenylendiamin | 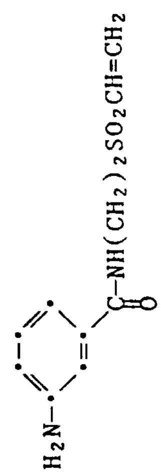 | Rot |
| 83 | m-Aminobenzoesäure ⟶ 1,8-Aminonaphthol-3,6-disulfonsäure | 4,4'-Diamindiphenyl-oxyd | 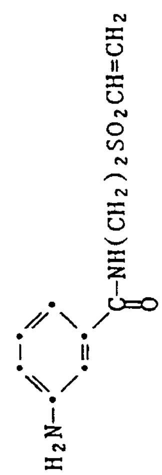 | Rot |

Aehnlich wertvolle Reaktivfarbstoffe erhält man auch, wenn man anstelle des oben eingesetzten Ausgangsfarbstoffes 1-Amino-8-hydroxy-2',7-azonaphthalin-1',3,5',6-tetrasulfonsäure die aus den in der nachstehenden Tabelle angegebenen Diazo- und Kupplungskomponenten erhältlichen Azofarbstoffe einsetzt und im übrigen wie vorangehend beschrieben verfährt.

Diazokomponenten:

2-Aminobenzol-sulfonsäure, 3-Aminobenzol-sulfonsäure, 4-Aminobenzolsulfonsäure, 5-Chlor-2-aminobenzol-sulfonsäure, 6-Chlor-2-aminobenzolsulfonsäure, 5-Nitro-2-aminobenzol-sulfonsäure, 4-Chlor-3-aminobenzolsulfonsäure, 6-Chlor-3-aminobenzol-sulfonsäure, 3-Chlor-4-aminobenzolsulfonsäure, 2-Aminotoluol-4-sulfonsäure, 2-Aminotoluol-5-sulfonsäure, 3-Aminotoluol-6-sulfonsäure, 4-Aminotoluol-2-sulfonsäure, 4-Aminotoluol-3-sulfonsäure, 5-Chlor-2-aminotoluol-3-sulfonsäure, 3-Chlor-2-aminotoluol-5-sulfonsäure, 6-Chlor-3-aminotoluol-4-sulfonsäure, 2-Chlor-4-aminotoluol-5-sulfonsäure, 2-Chlor-4-aminotoluol-6-sulfonsäure, 4-Nitro-2-aminotoluol-6-sulfonsäure, 6-Nitro-4-aminotoluol-2-sulfonsäure, 3-Amino-1,2-dimethylbenzol-4-sulfonsäure, 4-Amino-1,3-dimethylbenzol-5-sulfonsäure, 4-Amino-1,3-dimethylbenzol-6-sulfonsäure, 2-Amino-anisol-4-sulfonsäure, 4-Amino-anisol-2-sulfonsäure, 4-Amino-anisol-3-sulfonsäure, 4-Chlor-2-amino-anisol-5-sulfonsaure, 4-Amino-phenetol-2-sulfonsäure, 4-Amino-phenetol-3-sulfonsäure, 2-Amino-phenetol-4-sulfonsäure, 4-Aminobenzol-1,3-disulfonsäure, 2-Aminobenzol-1,4-disulfonsäure, 2-Aminotoluol-3,4-disulfonsäure, 2-Aminotoluol-3,5-disulfonsäure, Anilin, 4-Aminotoluol, 4-Aminoanisol, 4-Aminochlorbenzol, 2-Aminobenzol-sulfonsäure, 2-Naphthylamin-1-sulfonsäure, 2-Naphthylamin-5-sulfonsäure, 2-Naphthylamin-6-sulfonsäure, 2-Naphthylamin-7-sulfonsäure, 2-Naphthylamin-8-sulfonsäure, 2-Naphthylamin-1,7-disulfonsäure, 2-Naphthylamin-3,6-disulfonsäure, 2-Naphthylamin-3,7-disulfonsäure, 2-Naphthylamin-4,7-disulfonsäure, 2-Naphthylamin-4,8-disulfonsäure, 2-Naphthylamin-5,7-disulfonsäure, 2-Naphthylamin-6,8-disulfonsäure, 2-Naphthylamin-1,5,7-trisulfonsäure, 2-Naphthylamin-3,6,8-trisulfonsäure, 2-Naphthylamin-4,6,8-trisulfonsäure, 1-Naphthylamin-4-sulfonsäure, 1-Naphthylamin-5-sulfonsäure, 1-Naphthylamin-6-sulfonsäure, 1-Naphthylamin-7-sulfonsäure, 1-Naphthylamin-3,6-disulfonsäure, 1-Naphthylamin-3,7-disulfonsäure, 1-Naphthylamin-3,8-disulfonsäure, 1-Naphthylamin-4,6-disulfonsäure, 1-Naphthylamin-4,7-disulfonsäure, 1-Naphthylamin-4,8-disulfonsäure, 1-Naphthylamin-5,7-disulfonsäure, 1-Naphthylamin-6,8-disulfonsäure, 1-Naphthylamin-2,4,6-trisulfonsäure, 1-Naphthylamin-3,6,8-trisulfonsäure, 1-Naphthylamin-4,6,8-trisulfonsäure, 1-Amino-4-β-chloräthylsulfonylbenzol, 1-Amino-3-vinylsulfonylbenzol, 1-Amino-2-brom-4-β-sulfatoäthylsulfonylbenzol, 1-Amino-4-β-sulfatoäthylsulfonylbenzol-2-sulfonsäure, 1-Amino-3-δ-(β-chloräthylsulfonyl)-butyrylbenzol-6-sulfonsäure, 2-Amino-8-β-sulfatoäthylsulfonylnaphthalin,2-Amino-6-β-sulfatoäthylsulfonylnaphthalin-1-sulfonsäure, 2-Amino-8-vinylsulfonylnaphthalin-6-sulfonsäure.

Kupplungskomponenten:

1-Amino-8-naphthol-4,6-disulfonsäure, 1-Amino-8-naphthol-4-sulfonsäure, 1-Amino-8-naphthol-6-sulfonsäure, 1-Amino-8-naphthol-3,5-disulfonsäure, 1-(4'-Aminobenzoylamino)-8-naphthol-3,6- oder -4,6-disulfonsäure, 1-(3'-Aminobenzoylamino)-8-naphthol-3,6- oder -4,6-disulfonsaure.

Beispiel 84: 63,1 Teile 1-[2'-Sulfo-4'-(4'',6''-dichlor-1'',3'',5''-triazin-2''-yl-amino)-phenyl]-4-(2''-sulfophenylazo)-pyrazolon-(5)-3-carbonsäure werden in Wasser bei pH 6,8-7,2 gelöst. Nach beendeter Kupplung fügt man eine Lösung von 5,4 Teilen m-Phenylendiamin in 100 Teilen Wasser hinzu, erwärmt auf 35° und halt 2 Stunden bei dieser Temperatur. Durch allmähliche Zugabe einer verdünnten Natriumhydroxydlösung wird das Reaktionsgemisch neutralisiert. Anschliessend wird der pH-Wert mit Salzsäure auf 4 gestellt. Nun kommen 29 Teile

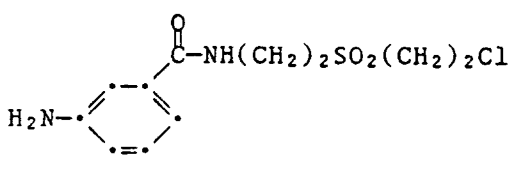

als Pulver hinzu. Man erwärmt auf 70°C und halt diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55° abkühlen und filtriert. Man erhält etwa 185 Teile Farbstoffpaste, die bei 50-55° im Vakuum getrocknet werden. Der hergestellte Reaktivfarbstoff hat folgende Konstitution:

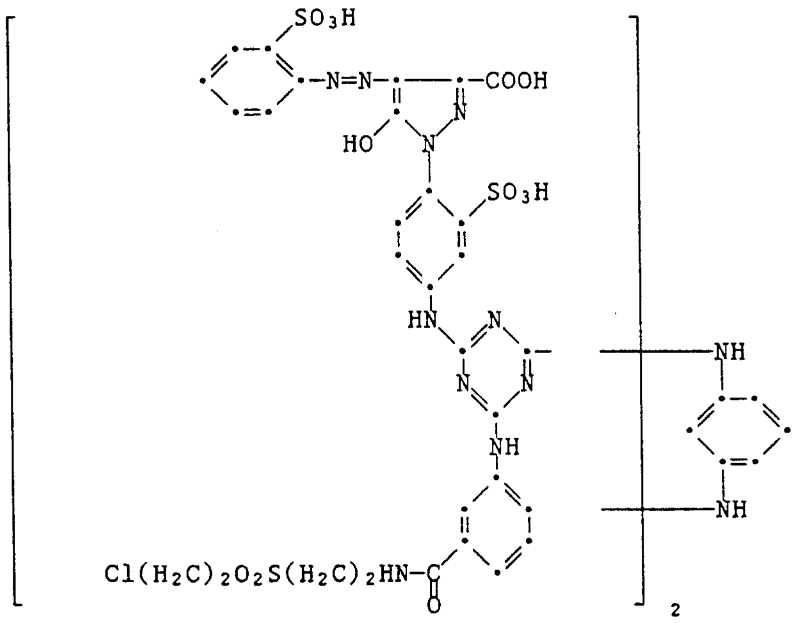

und kann durch Aussalzen oder Sprühtrocknen isoliert werden. Er färbt Cellulosefasern in reinen grünstichigen, gelben Tönen an.

Beispiel 85: 63,1 Teile 1-[2'-Sulfo-4'-(4",6"-dichlor-1",3",5"-triazin-2"-yl-amino)-phenyl]-4-(2'''-sulfophenylazo)-pyrazolon-(5)-3-carbonsäure werden in Wasser bei pH 6,8-7,2 gelöst. Nach beendeter Kupplung fügt man eine Lösung von 5,4 Teilen p-Phenylendiamin in 100 Teilen Wasser hinzu, erwärmt auf 35° und hält 2 Stunden bei dieser Temperatur. Durch allmähliche Zugabe einer verdünnten Natriumhydroxydlösung wird das Reaktionsgemisch neutralisiert. Anschliessend wird der pH-Wert mit Salzsäure auf 4 gestellt. Nun kommen 29 Teile

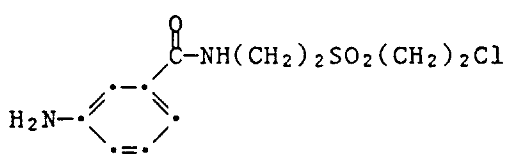

als Pulver hinzu. Man erwärmt auf 70°C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55° abkühlen und filtriert. Man erhält etwa 185 Teile Farbstoffpaste, die bei 50-55° im Vakuum getrocknet werden. Der hergestellte Reaktivfarbstoff hat folgende Konstitution:

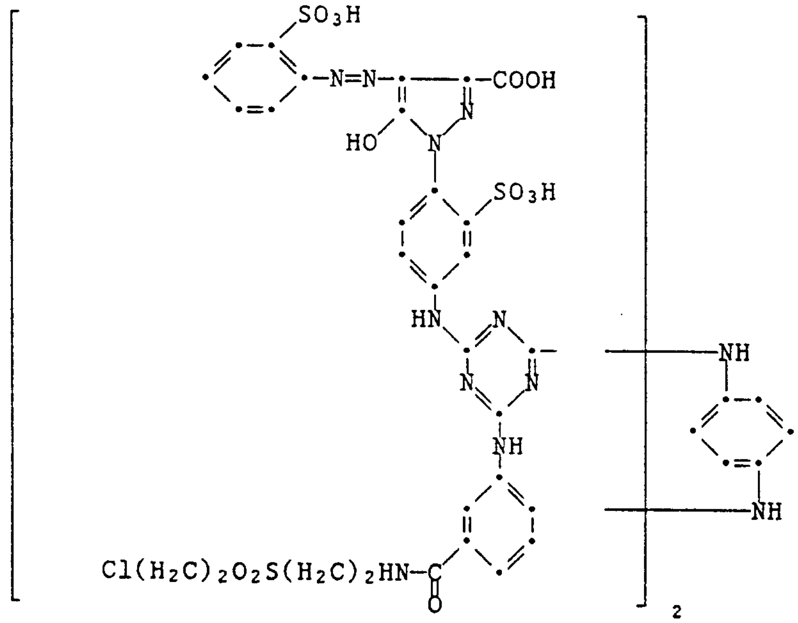

und kann durch Aussalzen oder Sprühtrocknen isoliert werden. Er färbt Cellulosefasern in reinen grünstichigen, gelben Tönen an.

Beispiel 86: 63,1 Teile 1-[2'-Sulfo-4'-(4",6"-dichlor-1",3",5"-triazin-2"-yl-amino)-phenyl]-4-(2'"-sulfophenylazo)-pyrazolon-(5)-3-carbonsäure werden in Wasser bei pH 6,8-7,2 gelöst. Nach beendeter Kupplung fügt man eine Lösung von 5,4 Teilen m-Phenylendiamin in 100 Teilen Wasser hinzu, erwärmt auf 35° und hält 2 Stunden bei dieser Temperatur. Durch allmähliche Zugabe einer verdünnten Natriumhydroxydlösung wird das Reaktionsgemisch neutralisiert. Anschliessend wird der pH-Wert mit Salzsäure auf 4 gestellt. Nun kommen 29 Teile

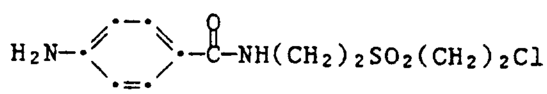

als Pulver hinzu. Man erwärmt auf 70°C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55° abkühlen und filtriert. Man erhält etwa 185 Teile Farbstoffpaste, die bei 50-55° im Vakuum getrocknet werden. Der hergestellte Reaktivfarbstoff hat folgende Konstitution:

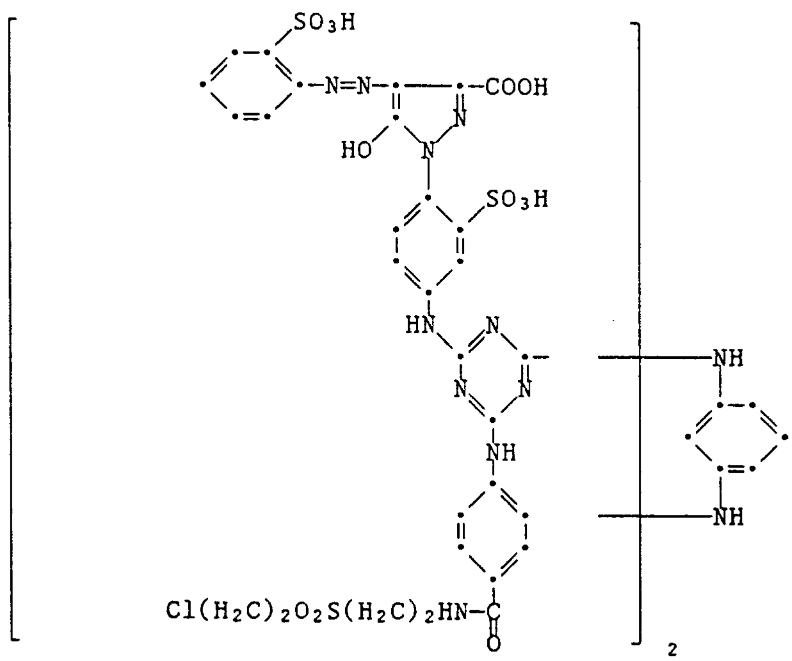

und kann durch Aussalzen oder Sprühtrocknen isoliert werden. Er färbt Cellulosefasern in reinen grünstichigen, gelben Tönen an.

Aehnliche wertvolle, erfindungsgemässe Reaktivfarbstoffe erhält man, wenn man anstelle des oben eingesetzten Zwischenfarbstoffes die Kondensationsprodukte der aus den in der nachstehenden Tabelle angegebenen Diazo- und Kupplungskomponenten erhältlichen Azofarbstoffe mit Cyanurchlorid einsetzt und im übrigen wie oben beschrieben verfährt.

Diazokomponenten:

3-Amino-benzol-sulfonsäure
4-Amino-benzol-sulfonsäure
5-Chlor-2-amino-benzol-sulfonsäure
2,5-Dichlor-4-amino-benzol-sulfonsäure
2-Amino-toluol-4-sulfonsäure
4-Amino-toluol-3-sulfonsäure
2-Amino-anisol-4-sulfonsäure
4-Amino-benzol-1,3-disulfonsäure
2-Amino-benzol-1,4-disulfonsäure
2-Amino-toluol-3,5-disulfonsäure
2-Amino-naphthalin-1,5-disulfonsäure
2-Amino-naphthalin-4,8-disulfonsäure
2-Amino-naphthalin-6,8-disulfonsäure
2-Amino-naphthalin-1-sulfonsäure
2-Amino-naphthalin-6-sulfonsäure
4-β-Aethylsulfonylanilin
3-β-Chloräthylsulfonyl-anilin
2-Methoxy-4-β-sulfatoäthylsulfonyl-anilin
2-Methoxy-5-methyl-4-β-sulfatoäthylsulfonyl-anilin
2-Brom-4-β-sulfatoäthylsulfonyl-anilin
2-Sulfo-4-β-sulfatoäthylsulfonyl-anilin
2-Methoxy-5-β-sulfatoäthylsulfonyl-anilin
2-Sulfo-5-δ-(β-chloräthylsulfonylbutyryl)-aminoanilin
2-Amino-8-β-sulfatoäthylsulfonylnaphthalin-5-sulfonsäure
2-Amino-8-β-sulfatoäthylsulfonylnaphthalin
2-Amino-6-vinylsulfonylnaphthalin-1-sulfonsäure.

Kupplungskomponenten:

1-(3'-Amino-6'-sulfo-phenyl)-3-methyl-5-pyrazolon
1-(4'-Amino-3'-sulfo-phenyl)-3-methyl-5-pyrazolon
1-(4'-Amino-2'-sulfo-phenyl)-3-methyl-5-pyrazolon
1-(3'-Amino-6'-sulfo-phenyl)-5-pyrazolon-3-carbonsäure
1-(4'-Amino-3'-sulfo-phenyl)-5-pyrazolon-3-carbonsäure
1-(3'-Amino-5'-sulfo-6'-methyl-phenyl)-5-pyrazolon-3-carbonsäure
1-(2'-Methyl-3'-amino-5'-sulfo-phenyl)-5-pyrazolon-3-carbonsäure
1-(2'-Methyl-3'-amino-5'-sulfo-phenyl)-3-methyl-5-pyrazolon
1-(3'-Amino-5'-sulfo-6'-methyl-phenyl)-3-methyl-5-pyrazolon
1-(4'-Amino-2',5'-disulfo-phenyl)-5-pyrazolon-3-carbonsäure.

Beispiel 87: 54,5 Teile des Farbstoffes 2-(4'-Amino-2'-ureido-phenylazo)-naphthalin-3,6,8-trisulfonsäure werden mit 250 Teilen Wasser neutral gelöst. Diese neutrale Lösung gibt man zu einer hergestellten Suspension von 18,5 Teilen Cyanurchlorid in Aceton und Wasser. Durch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt. Nach beendeter Kupplung fügt man eine Lösung von 5,4 Teilen m-Phenylendiamin in 100 Teilen Wasser hinzu, erwärmt auf 35° und hält 2 Stunden bei dieser Temperatur. Durch allmähliche Zugabe einer verdünnten Natriumhydroxydlösung wird das Reaktionsgemisch neutralisiert. Anschliessend wird der pH-Wert mit Salzsäure auf 4 gestellt. Nun kommen 29 Teile

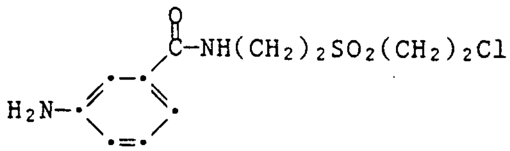

als Pulver hinzu. Man erwarmt auf 70°C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55° abkühlen und filtriert. Der hergestellte Reaktivfarbstoff hat folgende Konstitution:

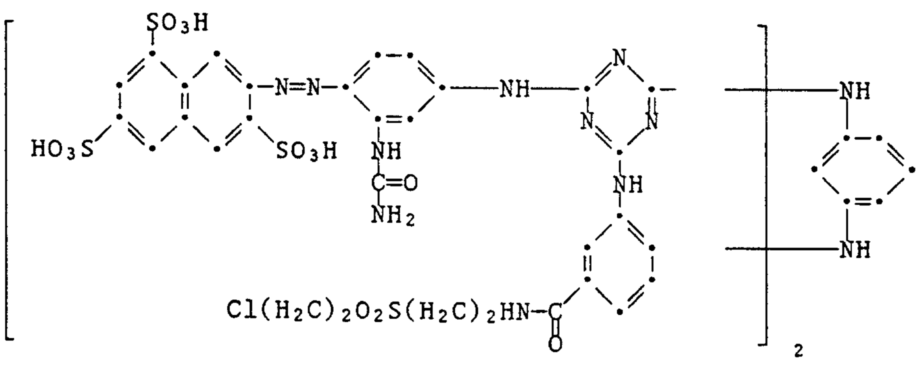

Er färbt Cellulosefasern nach dem Ausziehverfahren in echten goldgelben Tönen.

Beispiel 88: 54,5 Teile des Farbstoffes 2-(4'-Amino-2'-ureido-phenylazo)-naphthalin-3,6,8-trisulfonsäure werden mit 250 Teilen Wasser neutral gelöst. Diese neutrale Lösung gibt man zu einer hergestellten Suspension von 18,5 Teilen Cyanurchlorid in Aceton und Wasser. Durch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt. Nach beendeter Kupplung fügt man eine Lösung von 5,4 Teilen m-Phenylendiamin in 100 Teilen Wasser hinzu, erwärmt auf 35° und hält 2 Stunden bei dieser Temperatur. Durch allmähliche Zugabe einer verdünnten Natriumhydroxydlösung wird das Reaktionsgemisch neutralisiert. Anschliessend wird der pH-Wert mit Salzsäure auf 4 gestellt. Nun kommen 29 Teile

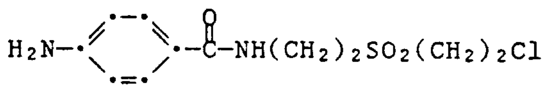

als Pulver hinzu. Man erwärmt auf 70 ° C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55 ° abkühlen und filtriert. Der hergestellte Reaktivfarbstoff hat folgende Konstitution:

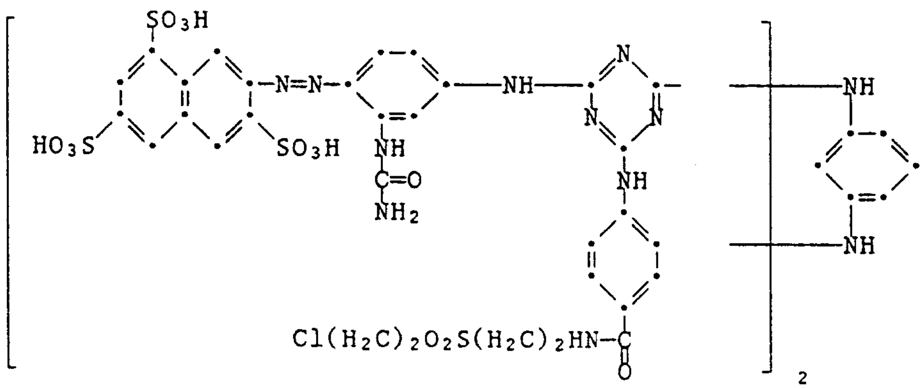

Er färbt Cellulosefasern nach dem Ausziehverfahren in echten goldgelben Tönen.

Beispiel 89: 54,5 Teile des Farbstoffes 2-(4'-Amino-2'-ureido-phenylazo)-naphthalin-3,6,8-trisulfonsäure werden mit 250 Teilen Wasser neutral gelöst. Diese neutrale Lösung gibt man zu einer hergestellten Suspension von 18,5 Teilen Cyanurchlorid in Aceton und Wasser. Durch Kühlung mit Eis hält man die Temperatur bei 0 ° bis 3 °. Im Verlauf der Acylierungsreaktion werden 9 g Bicarbonat so eingetragen, dass der pH zwischen 5,5 und 7 bleibt. Nach beendeter Kupplung fügt man eine Lösung von 5,4 Teilen p-Phenylendiamin in 100 Teilen Wasser hinzu, erwärmt auf 35 ° und hält 2 Stunden bei dieser Temperatur. Durch allmähliche Zugabe einer verdünnten Natriumhydroxydlösung wird das Reaktionsgemisch neutralisiert. Anschliessend wird der pH-Wert mit Salzsäure auf 4 gestellt. Nun kommen 29 Teile

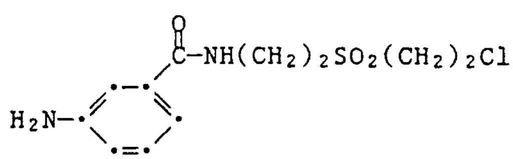

als Pulver hinzu. Man erwärmt auf 70 ° C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55 ° abkühlen und filtriert. Der hergestellte Reaktivfarbstoff hat folgende Konstitution:

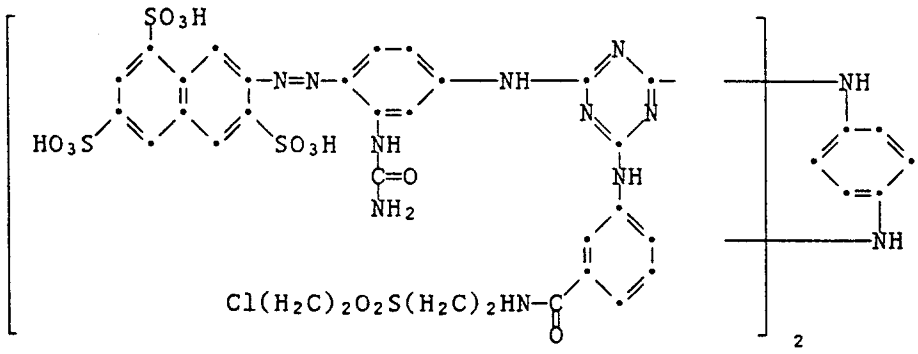

Er färbt Cellulosefasern nach dem Ausziehverfahren in echten goldgelben Tönen.

Aehnliche wertvolle Reaktivfarbstoffe erhält man auch, wenn man anstelle des oben eingesetzten Ausgangsfarbstoffes 2-(4'-Amino-2'-ureidophenylazo)-naphthalin-3,6,8-trisulfonsäure die aus den in der nachstehenden Tabelle angegebenen Diazo- und Kupplungskomponenten erhältlichen Azofarbstoffe einsetzt und im übrigen wie oben beschrieben verfährt:

Diazokomponenten:

2-Naphthylamin-1,5-disulfonsäure
2-Naphthylamin-4,8-disulfonsäure
2-Naphthylamin-5,7-disulfonsäure
2-Naphthylamin-6,8-disulfonsäure
2-Naphthylamin-1,5,7-trisulfonsäure
2-Naphthylamin-4,6,8-trisulfonsäure
Anilin-2,5-disulfonsäure.

Kupplungskomponenten:

Anilin, N-Methylanilin
3-Amino-anisol, 3-Amino-toluol
2-Amino-4-acetamino-toluol
2-Amino-4-acetamino-anisol
3-Amino-acetanilid
3-Amino-4-methoxy-toluol
3-Toluidin
1-Naphthylamin-5-sulfonsäure
1-Naphthylamin-7-sulfonsaure
1-Naphthylamin-8-sulfonsäure
2-Amino-toluol
2-Amino-anisol
2,5-Dimethyl-anilin
2-Methoxy-5-methyl-anilin
2,5-Dimethoxy-anilin
o-Phenetidin
m-Phenetidin
3-Amino-phenyl-harnstoff

Beispiel 90: 50,3 Teile des Farbstoffs 2-Amino-5-hydroxy-6-(2',5'-disulfophenylazo)-naphthalin-7-sulfonsaure werden in 800 ml Wasser neutral gelöst und die Lösung auf 0° bis 5° abgekühlt. Bei dieser Temperatur werden 18,5 Teile Cyanurchlorid zugegeben, wobei der pH der Reaktionslösung durch gleichzeitige Zugabe von 2n Natriumhydroxidlösung bei 6-6,5 gehalten wird. Nach beendeter Kondensation lässt man eine Lösung von 5,4 Teilen p-Phenylendiamin in 100 Teile Wasser zufliessen und rührt die Mischung 1 Stunde zwischen 30-40°, wobei durch Zutropfen von Natriumhydroxydlösung der pH-Wert zwischen 5 und 7 gehalten wird. Anschliessend wird der pH-Wert mit Salzsäure auf 4 gestellt. Nun kommen 29 Teile

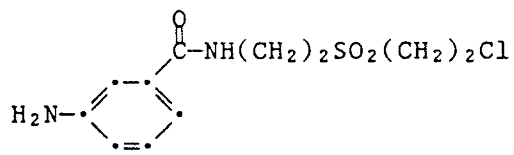

als Pulver hinzu. Man erwärmt auf 70 °C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55 ° abkühlen und filtriert. Man erhält etwa 200 Teile Farbstoffpaste, die bei 50-55 ° im Vakuum getrocknet werden. Der hergestellte Reaktivfarbstoff hat folgende Konstitution:

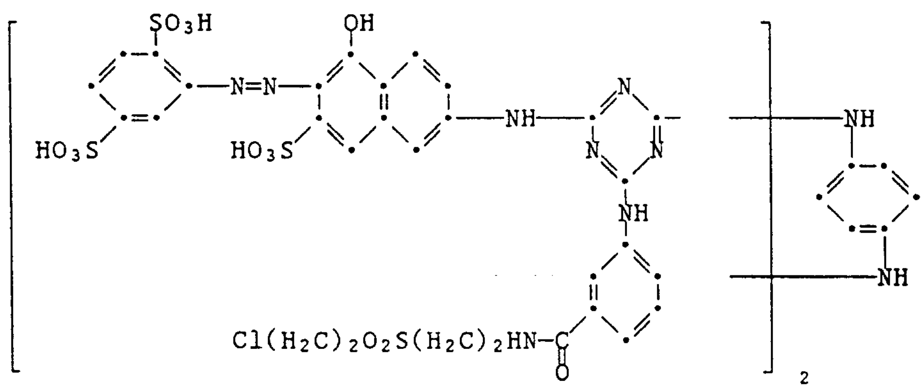

Er färbt Cellulosefasern nach dem Ausziehverfahren in farbstarken, reinen orangen Tönen an.

Beispiel 91: 50,3 Teile des Farbstoffs 2-Amino-5-hydroxy-6-(2',5'-disulfophenylazo)-naphthalin-7-sulfonsäure werden in 800 ml Wasser neutral gelöst und die Lösung auf 0 ° bis 5 ° abgekühlt. Bei dieser Temperatur werden 18,5 Teile Cyanurchlorid zugegeben, wobei der pH der Reaktionslösung durch gleichzeitige Zugabe von 2n Natriumhydroxidlösung bei 6-6,5 gehalten wird. Nach beendeter Kondensation lässt man eine Lösung von 5,4 Teilen m-Phenylendiamin in 100 Teile Wasser zufliessen und rührt die Mischung 1 Stunde zwischen 30-40 °, wobei durch Zutropfen von Natriumhydroxydlösung der pH-Wert zwischen 5 und 7 gehalten wird. Anschliessend wird der pH-Wert mit Salzsäure auf 4 gestellt. Nun kommen 29 Teile

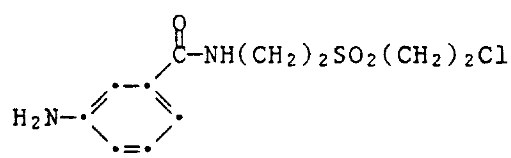

als Pulver hinzu. Man erwärmt auf 70 °C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55 ° abkühlen und filtriert. Man erhält etwa 200 Teile Farbstoffpaste, die bei 50-55 ° im Vakuum getrocknet werden. Der hergestellte Reaktivfarbstoff hat folgende Konstitution:

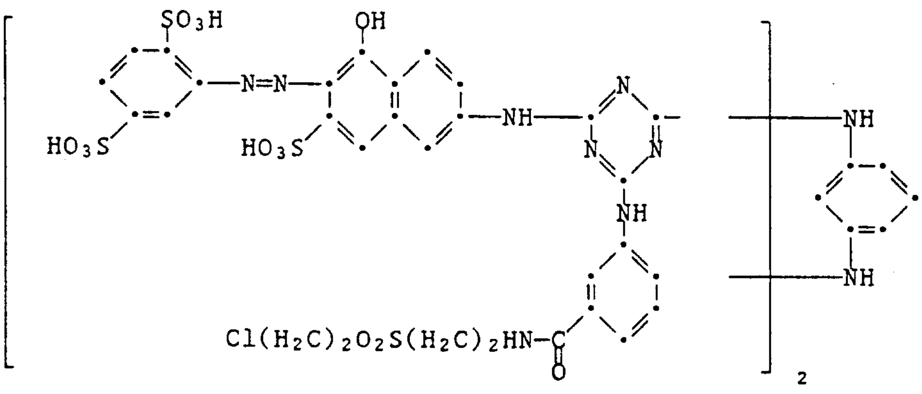

Er färbt Cellulosefasern nach dem Ausziehverfahren in farbstarken, reinen orangen Tönen an.

Beispiel 92: 50,3 Teile des Farbstoffs 2-Amino-5-hydroxy-6-(2',5'-disulfophenylazo)-naphthalin-7-sulfonsäure werden in 800 ml Wasser neutral gelöst und die Lösung auf 0° bis 5° abgekühlt. Bei dieser Temperatur werden 18,5 Teile Cyanurchlorid zugegeben, wobei der pH der Reaktionslösung durch gleichzeitige Zugabe von 2n Natriumhydroxidlösung bei 6-6,5 gehalten wird. Nach beendeter Kondensation lässt man eine Lösung von 5,4 Teilen m-Phenylendiamin in 100 Teile Wasser zufliessen und rührt die Mischung 1 Stunde zwischen 30-40°, wobei durch Zutropfen von Natriumhydroxydlösung der pH-Wert zwischen 5 und 7 gehalten wird. Anschliessend wird der pH-Wert mit Salzsäure auf 4 gestellt. Nun kommen 29 Teile

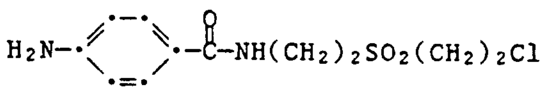

als Pulver hinzu. Man erwärmt auf 70°C und hält diese Temperatur 3 Stunden, wobei durch Zutropfen von Natriumhydroxydlösung der pH-Wert zwischen 4 und 5 gehalten wird. Nun gibt man 10 % Kaliumchlorid hinzu, lässt unter Rühren auf 20-55° abkühlen und filtriert. Man erhält etwa 200 Teile Farbstoffpaste, die bei 50-55° im Vakuum getrocknet werden. Der hergestellte Reaktivfarbstoff hat folgende Konstitution:

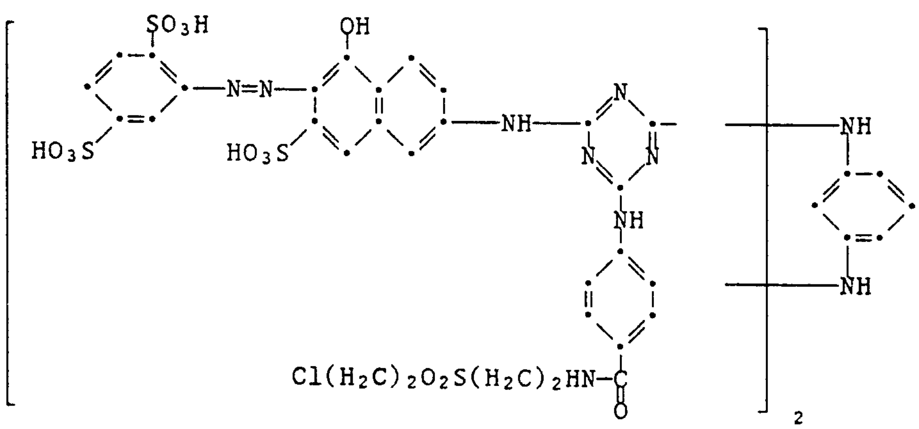

Er färbt Cellulosefasern nach dem Ausziehverfahren in farbstarken, reinen orangen Tönen an.

Ersetzt man die 2-Amino-benzol-1,4-disulfonsäure durch molare Menge einer der im folgenden genannten Diazokomponenten und verfährt im übrigen wie beschrieben, so erhält man ebenfalls wertvolle, erfindungsgemässe Farbstoffe:

2-Amino-benzol-sulfonsäure

3-Amino-benzol-sulfonsaure

4-Amino-benzol-sulfonsäure

2-Naphthylamin-1,5-disulfonsäure
5-Chlor-2-amino-benzol-sulfonsäure
6-Chlor-2-amino-benzol-sulfonsäure
5-Nitro-2-amino-benzol-sulfonsäure
4-Chlor-3-amino-benzol-sulfonsäure
6-Chlor-3-amino-benzol-sulfonsäure
3-Chlor-4-amino-benzol-sulfonsäure
2-Amino-toluol-4-sulfonsäure
2-Amino-toluol-5-sulfonsäure
3-Amino-toluol-6-sulfonsäure
4-Amino-toluol-2-sulfonsäure
4-Amino-toluol-3-sulfonsäure
5-Chlor-2-amino-toluol-3-sulfonsäure
3-Chlor-2-amino-toluol-5-sulfonsäure
6-Chlor-3-amino-toluol-4-sulfonsäure
2-Chlor-4-amino-toluol-5-sulfonsäure
2-Chlor-4-amino-toluol-6-sulfonsäure
4-Nitro-2-amino-toluol-6-sulfonsäure
6-Nitro-4-amino-toluol-2-sulfonsäure
3-Amino-1,2-dimethyl-benzol-4-sulfonsäure
4-Amino-1,3-dimethyl-benzol-5-sulfonsäure
4-Amino-1,3-dimethyl-benzol-6-sulfonsäure
2-Amino-anisol-4-sulfonsäure
4-Amino-anisol-2-sulfonsäure
4-Amino-anisol-3-sulfonsäure
4-Chlor-2-amino-anisol-5-sulfonsäure
4-Amino-phenetol-2-sulfonsäure
4-Amino-phenetol-3-sulfonsäure
2-Amino-phenetol-4-sulfonsäure
4-Amino-benzol-1,3-disulfonsäure
2-Amino-toluol-3,4-disulfonsäure
2-Amino-toluol-3,5-disulfonsäure
Anilin
4-Amino-toluol
4-Amino-anisol
4-Amino-chlorbenzol
2-Amino-chlorbenzol
2-Naphthylamin-1-sulfonsäure
2-Naphthylamin-5-sulfonsäure
2-Naphthylamin-6-sulfonsäure
2-Naphthylamin-7-sulfonsäure
2-Naphthylamin-8-sulfonsäure
2-Naphthylamin-1,7-disulfonsäure
2-Naphthylamin-3,6-disulfonsäure
2-Naphthylamin-3,7-disulfonsäure
2-Naphthylamin-4,7-disulfonsäure
2-Naphthylamin-5,7-disulfonsäure
2-Naphthylamin-6,8-disulfonsäure
2-Naphthylamin-1,5,7-trisulfonsäure
2-Naphthylamin-3,6,8-trisulfonsäure
2-Naphthylamin-4,6,8-trisulfonsäure.

Ersetzt man die als Kupplungskomponente zur Herstellung des Ausgangsfarbstoffs eingesetzte 2-Acetamino-5-naphthol-7-sulfonsäure durch molare Mengen der Acetylverbindung einer der im folgenden genannten Kupplungskomponenten und verfährt im übrigen wie oben beschrieben, so erhält man ebenfalls wertvolle erfindungsgemässe Farbstoffe:

2-Amino-8-naphthol-6-sulfonsäure, 2-Methylamino-8-naphthol-6-sulfonsäure, 2-Carboxymethylamino-8-naphthol-6-sulfonsäure, 2-$\beta$-Sulfoäthylamino-8-naphthol-6-sulfonsäure, 2-iso-Propylamino-8-naphthol-6-sulfonsäure, 2-Methylamino-5-naphthol-7-sulfonsäure, 2-Aethylamino-5-naphthol-7-sulfonsäure, 2-n-Butylamino-5-naphthol-7-sulfonsäure, 2-Amino-8-naphthol-4-sulfonsäure, 2-Amino-5-naphthol-4,7-disulfonsäure, 1-Amino-5-naphthol-7-sulfonsäure, 2-Amino-5-naphthol-1,7-disulfonsäure.

Beispiel 93: 46,7 Teile des Monoazofarbstoffes, den man durch Kuppeln von diazotierter p-Aminobenzoesäure auf 1-Amino-8-naphthol-3,6-disulfonsäure in alkalischem Medium erhält, werden in Form des Natriumsalzes in 600 Teilen Wasser gelöst und in eine eiskalte Suspension in 18,5 Teile Cyanurchlorid gegeben. Das Gemisch wird zwischen 0 und 5° gerührt und durch allmähliche Zugabe einer verdünnten Natriumhydroxydlösung neutralisiert. Nach beendeter Kondensation lässt man eine Lösung von 40 Teilen

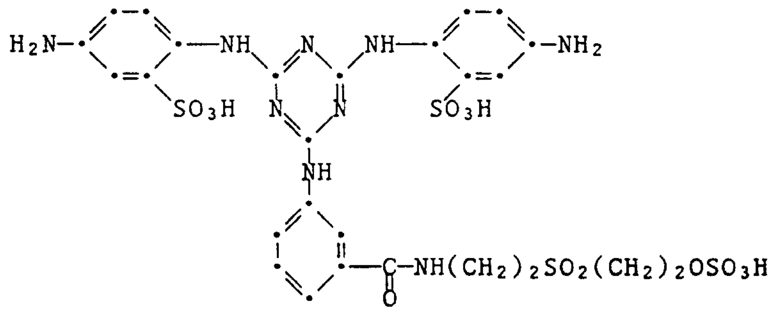

in 100 Teile Wasser zufliessen und rührt die Mischung eine Stunde zwischen 30-40°, wobei durch Zutropfen von Natriumhydroxydlösung der pH-Wert zwischen 5 und 7 gehalten wird. Nach beendeter Kondensation wird der pH-Wert mit Natriumcarbonat auf 8 gestellt und der Disazofarbstoff durch Zugabe von Aceton gefällt, abfiltriert und getrocknet.

Der erhaltene Disazofarbstoff der Formel

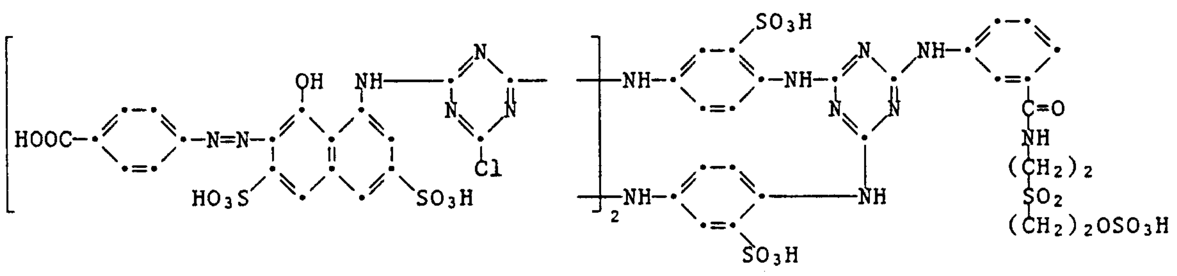

färbt Cellulosefasern nach dem Ausziehverfahren in Gegenwart von Elektrolyten aus alkalischem Bad in farbstarken, reinen blaustichig roten Tönen an.

Beispiel 94: 18,5 Teile Cyanurchlorid werden in 110 Teilen Aceton gelöst und unter kräftigem Rühren auf 250 Teile Eis gegeben. Dazu lässt man eine Lösung von 63 Teilen des Farbstoffs der folgenden Konstitution

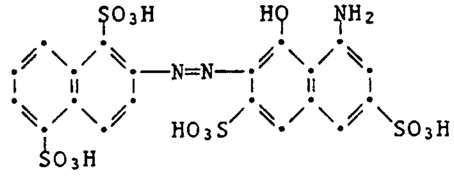

bei 0° hinzufliessen. Anschliessend werden 50 Teile 2-normale Sodalösung zugetropft, wobei sich ein pH-Wert von 6-6,5 ergibt. Nun kommen 32,6 Teile

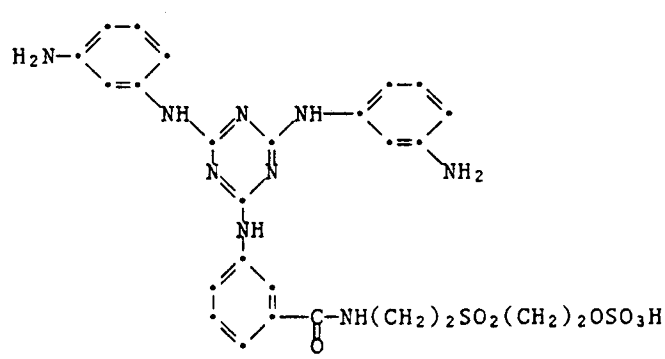

als Pulver hinzu. Man erwärmt in 1/2 Stunden auf 40 ° C und hält diese Temperatur 3 Stunden. Gleichzeitig werden 100 Teile 2-normale Sodalösung bei einem pH-Wert von 6,0-6,5 zugetropft. Zur Abscheidung gibt man 20 % Kaliumchlorid hinzu, lässt unter Rühren auf 20-55 ° abkühlen und filtriert. Man erhält etwa 235 Teile Farbstoffpaste, die bei 50-55 ° im Vakuum getrocknet werden. Der hergestellte Reaktivfarbstoff hat folgende Konstitution:

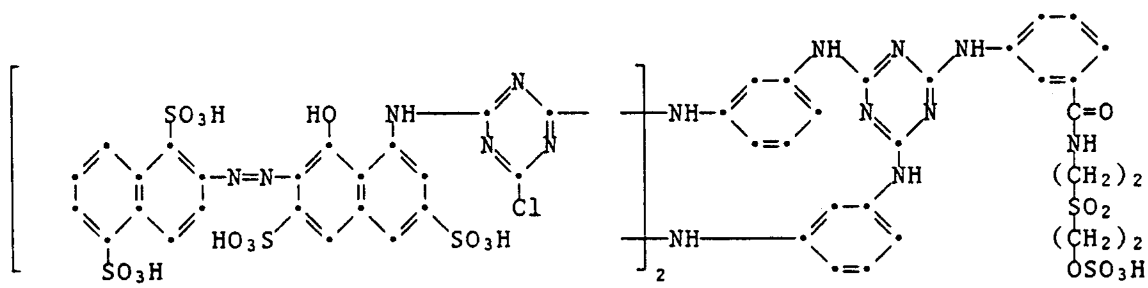

Er färbt Cellulosefasern nach dem Ausziehverfahren in echten kräftigen roten Tönen an.

Die nachfolgende Tabelle 2 enthält weitere Beispiele von Farbstoffen, die gemäss Beispiel 93 erhalten werden, wenn man die Monoazofarbstoffe der Kolonne I mit Cyanurchlorid und dann mit Diaminen der Kolonne II im Verhältnis 2:2:1 umsetzt.

Tabelle 2

| Beispiel | Monoazofarbstoff I | Diamin II | Nuance |
|---|---|---|---|
| 95 | Orthanilsäure ⟶ 1,8-Aminonaphthol-3,6-disulfonsäure | 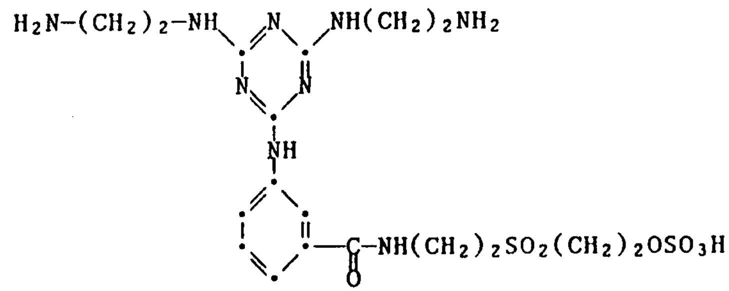 | Rot |
| 96 | Orthanilsäure ⟶ 1,8-Aminonaphthol-3,6-disulfonsäure | 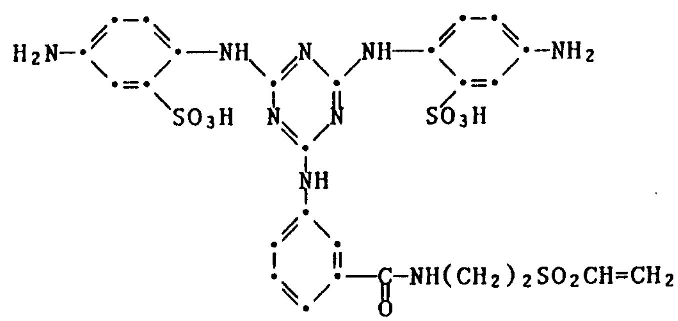 | Rot |

Tabelle 2 (Fortsetzung)

| Beispiel | Monoazofarbstoff I | Diamin II | Nuance |
|---|---|---|---|
| 97 | Orthanilsäure ⟶ 1,8-Aminonaphthol-3,6-disulfonsäure | 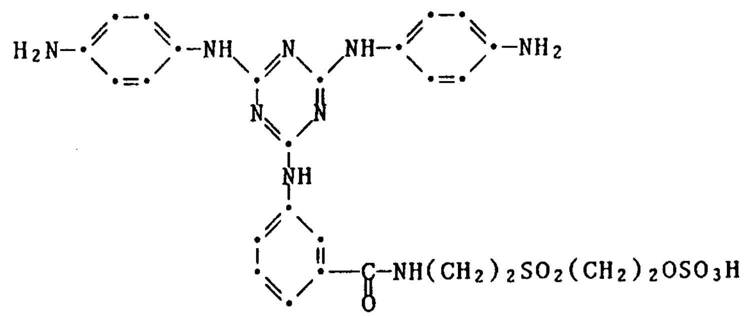 | Rot |
| 98 | Orthanilsäure ⟶ 1,8-Aminonaphthol-3,6-disulfonsäure | 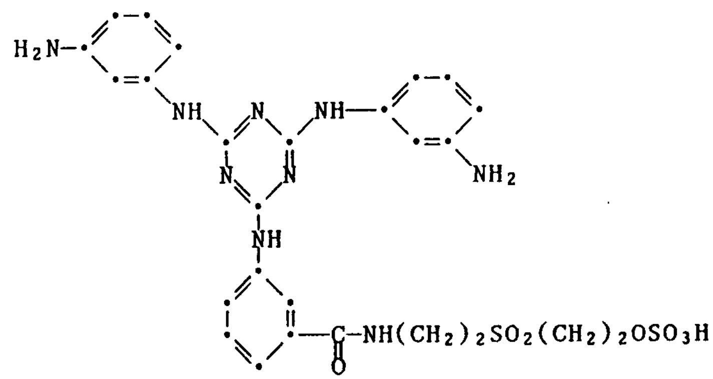 | Rot |

Tabelle 2 (Fortsetzung)

| Beispiel | Monoazofarbstoff I | Diamin II | Nuance |
|---|---|---|---|
| 99 | Orthanilsäure ⟶ 1,8-Aminonaphthol-3,6-disulfonsäure | 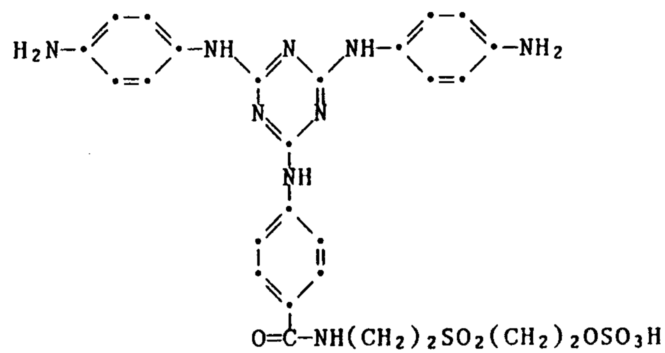 | Rot |
| 100 | Orthanilsäure ⟶ 1,8-Aminonaphthol-3,6-disulfonsäure | 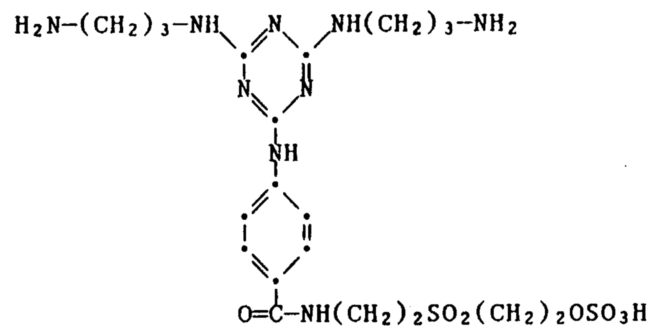 | Rot |

Tabelle 2 (Fortsetzung)

| Beispiel | Monoazofarbstoff I | Diamin II | Nuance |
| --- | --- | --- | --- |
| 101 | Orthanilsäure ⟶ 1,8-Aminonaphthol-4,6-disulfonsäure | 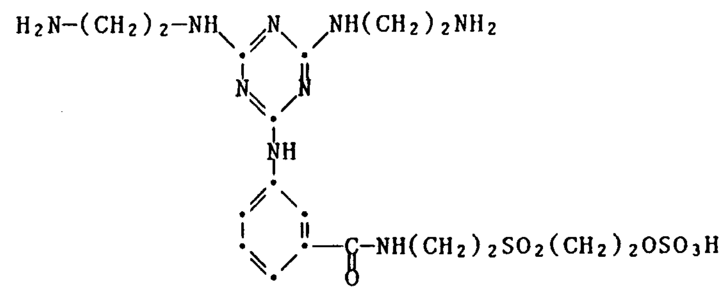 | Rot |
| 102 | Orthanilsäure ⟶ 1,8-Aminonaphthol-4,6-disulfonsäure | 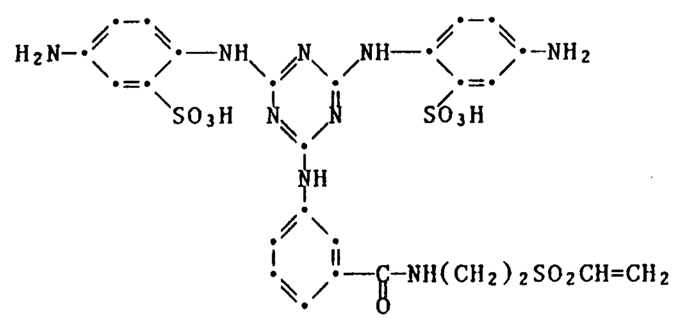 | Rot |

Tabelle 2 (Fortsetzung)

| Beispiel | Monoazofarbstoff I | Diamin II | Nuance |
|---|---|---|---|
| 103 | Orthanilsäure ⟶ 1,8-Aminonaphthol-4,6-disulfonsäure | 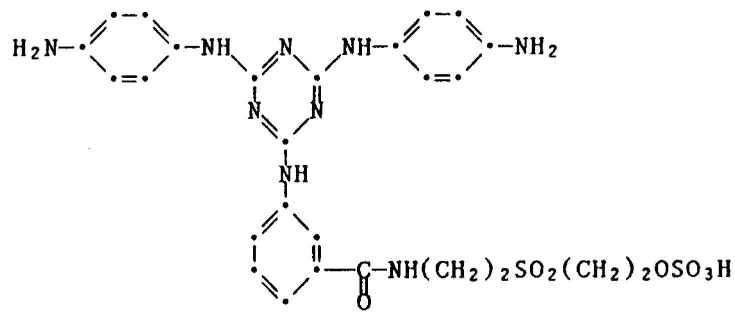 | Rot |
| 104 | Orthanilsäure ⟶ 1,8-Aminonaphthol-4,6-disulfonsäure | 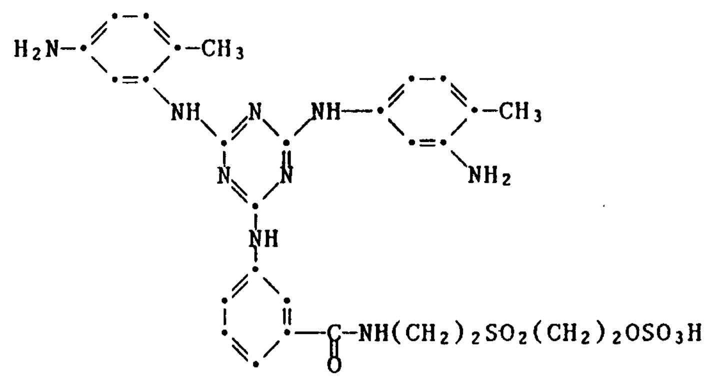 | Rot |

Tabelle 2 (Fortsetzung)

| Beispiel | Monoazofarbstoff I | Diamin II | Nuance |
| --- | --- | --- | --- |
| 105 | Orthanilsäure ⟶ 1,8-Aminonaphthol-4,6-disulfonsäure | 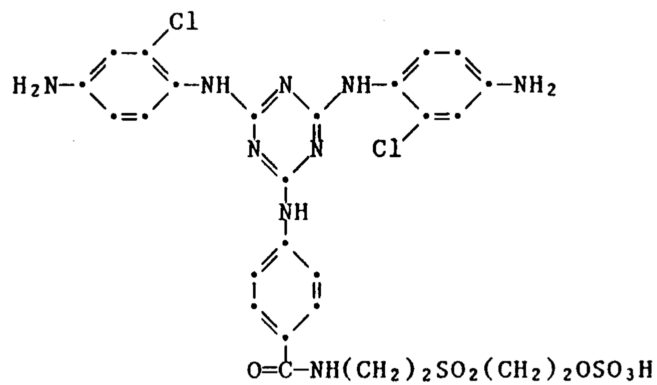 | Rot |
| 106 | Orthanilsäure ⟶ 1,8-Aminonaphthol-4,6-disulfonsäure | 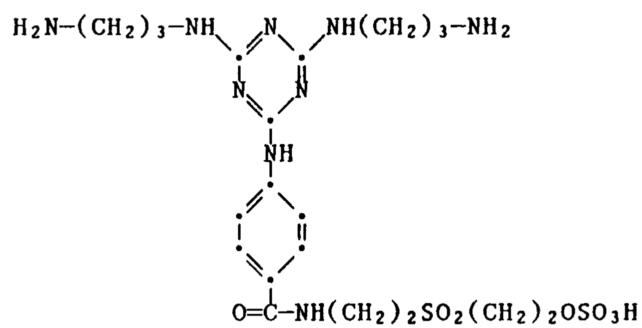 | Rot |

Tabelle 2 (Fortsetzung)

| Beispiel | Monoazofarbstoff I | Diamin II | Nuance |
|---|---|---|---|
| 107 | Anilin-2,5-disulfonsäure ⟶ 1,8-Aminonaphthol-3,6-disulfonsäure | 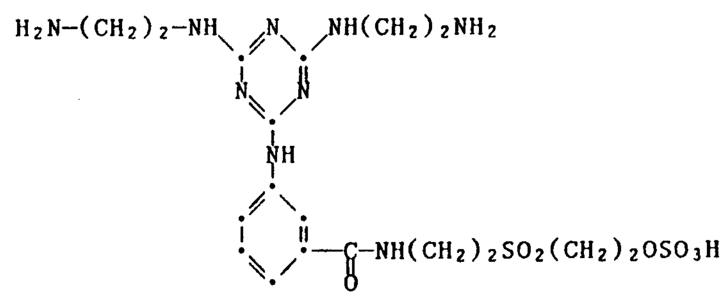 | Rot |
| 108 | Anilin-2,5-disulfonsäure ⟶ 1,8-Aminonaphthol-3,6-disulfonsäure | 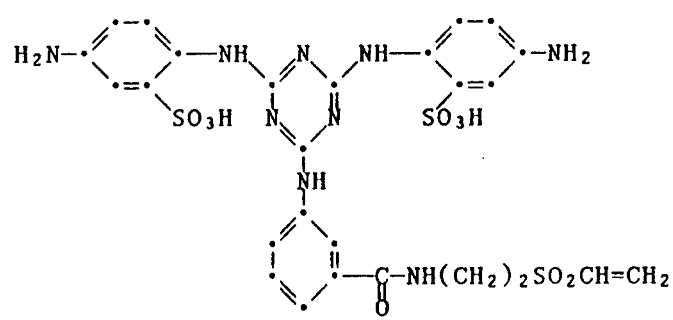 | Rot |

Tabelle 2 (Fortsetzung)

| Beispiel | Monoazofarbstoff I | Diamin II | Nuance |
|---|---|---|---|
| 109 | Anilin-2,5-disulfonsäure ⟶ 1,8-Aminonaphthol-3,6-disulfonsäure | 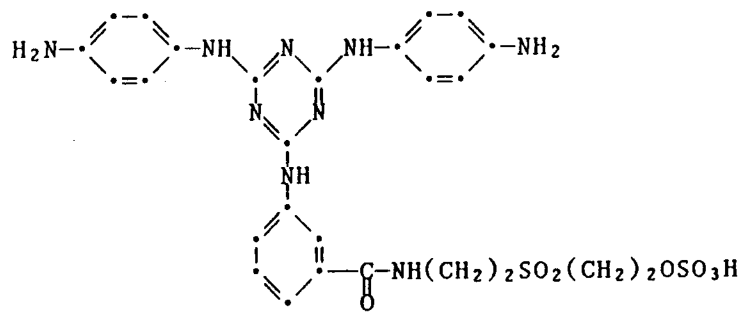 | Rot |
| 110 | Anilin-2,5-disulfonsäure ⟶ 1,8-Aminonaphthol-3,6-disulfonsäure | 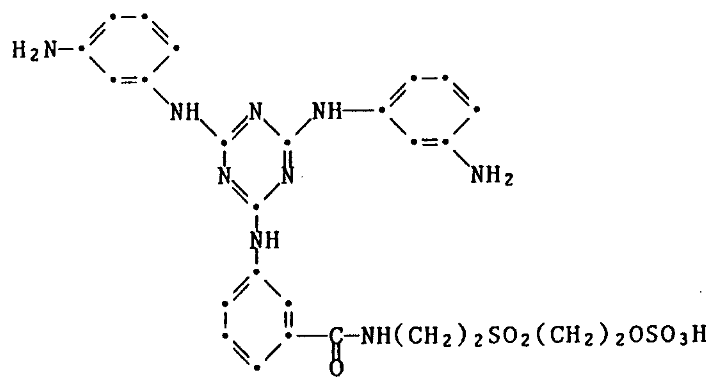 | Rot |

Tabelle 2 (Fortsetzung)

| Beispiel | Monoazofarbstoff I | Diamin II | Nuance |
|---|---|---|---|
| 111 | Anilin-2,4-disulfonsäure ⟶ 1,8-Aminonaphthol-3,6-disulfonsäure | 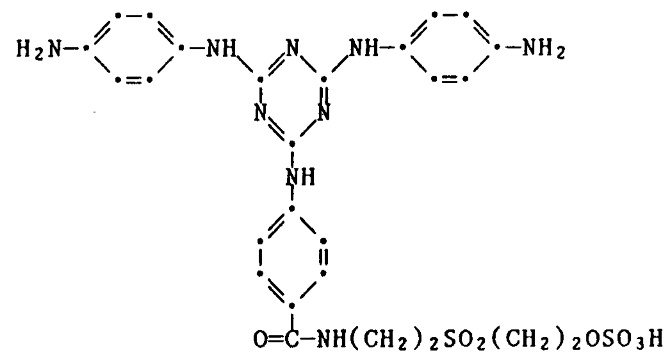 | Rot |
| 112 | Anilin-2,4-disulfonsäure ⟶ 1,8-Aminonaphthol-3,6-disulfonsäure | 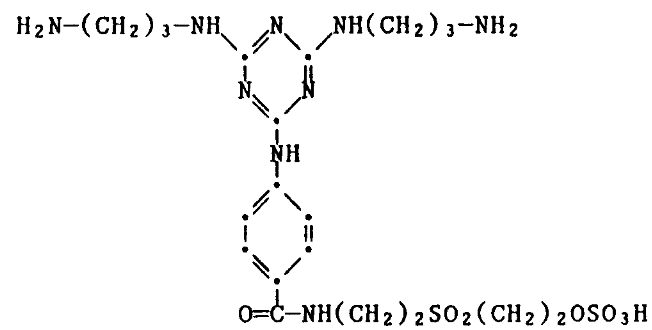 | Rot |

Tabelle 2 (Fortsetzung)

| Beispiel | Monoazofarbstoff I | Diamin II | Nuance |
| --- | --- | --- | --- |
| 113 | Anilin-2,5-disulfonsäure ⟶ 1,8-Aminonaphthol-4,6-disulfonsäure | 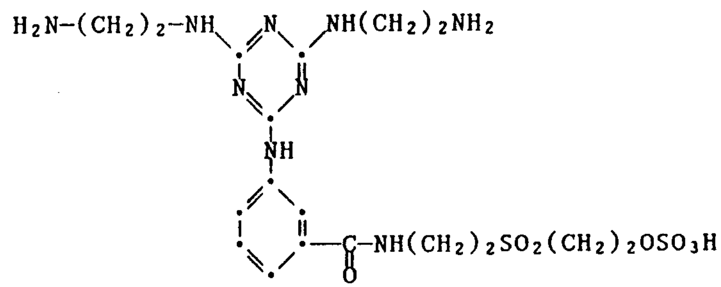 | Scharlach |
| 114 | Anilin-2,5-disulfonsäure ⟶ 1,8-Aminonaphthol-4,6-disulfonsäure | 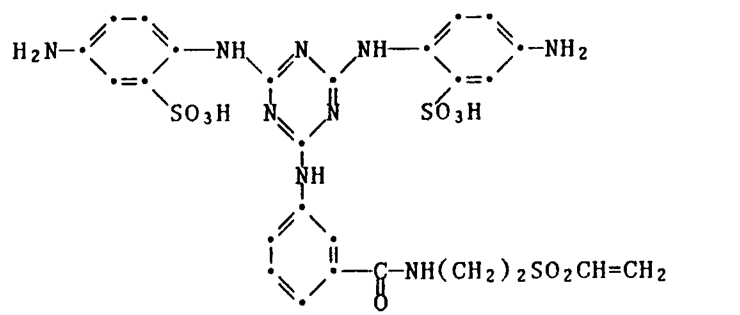 | Scharlach |

Tabelle 2 (Fortsetzung)

| Beispiel | Monoazofarbstoff I | Diamin II | Nuance |
|---|---|---|---|
| 115 | Anilin-2,5-disulfonsäure ⟶ 1,8-Aminonaphthol-4,6-disulfonsäure | 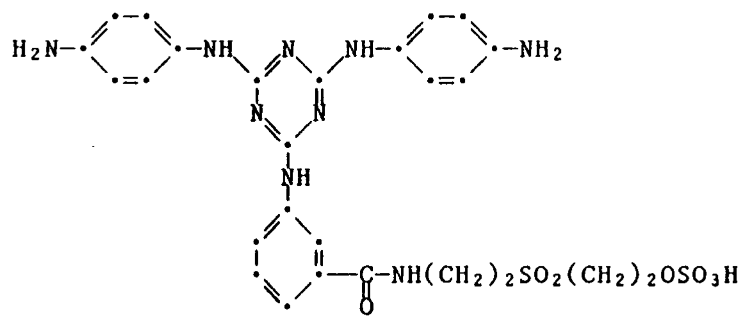 | Scharlach |
| 116 | Anilin-2,5-disulfonsäure ⟶ 1,8-Aminonaphthol-4,6-disulfonsäure | 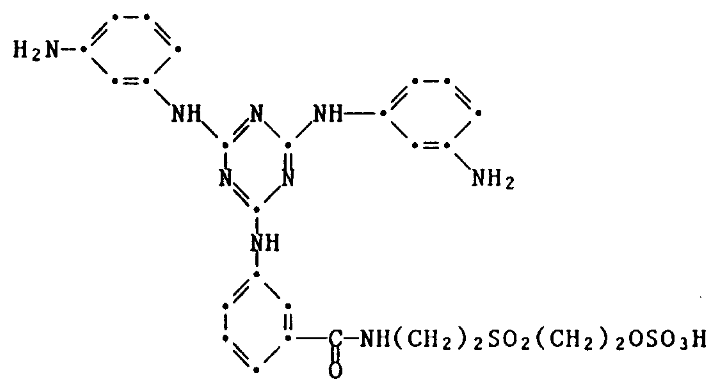 | Scharlach |

Tabelle 2 (Fortsetzung)

| Beispiel | Monoazofarbstoff I | Diamin II | Nuance |
|---|---|---|---|
| 117 | Anilin-2,4-disulfon-säure ⟶ 1,8-Aminonaphthol-4,6-disulfonsäure | 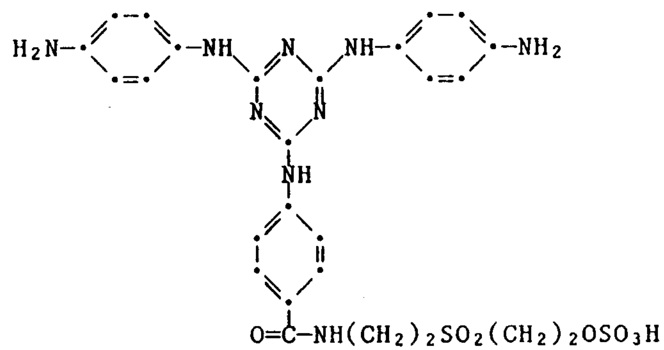 | Scharlach |
| 118 | Anilin-2,4-disulfon-säure ⟶ 1,8-Aminonaphthol-4,6-disulfonsäure | 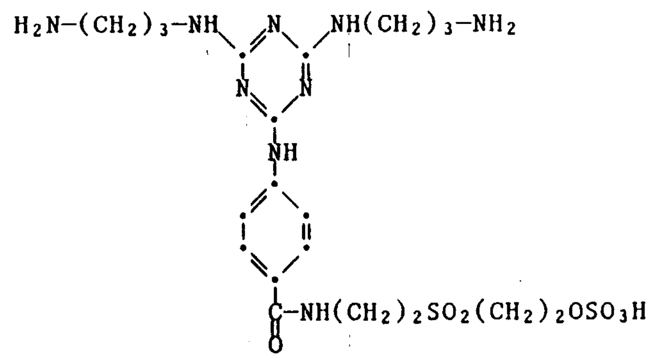 | Scharlach |

Tabelle 2 (Fortsetzung)

| Beispiel | Monoazofarbstoff I | Diamin II | Nuance |
|---|---|---|---|
| 119 | 2-Naphthylamin-1,5-disulfonsäure ⟶ 1,8-Aminonaphthol-3,6-disulfonsäure | 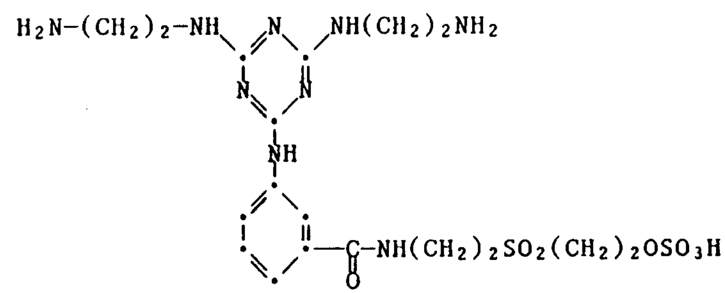 | blaustichig Rot |
| 120 | 2-Naphthylamin-1,5-disulfonsäure ⟶ 1,8-Aminonaphthol-3,6-disulfonsäure | 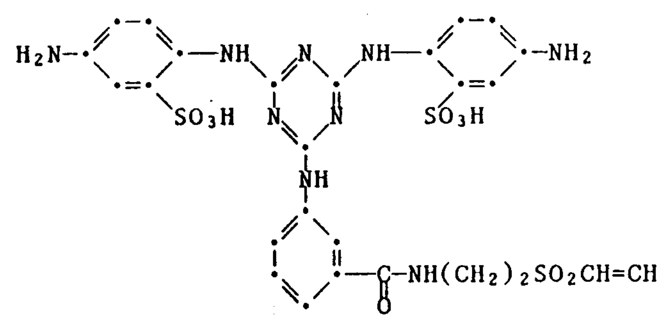 | blaustichig Rot |

Tabelle 2 (Fortsetzung)

| Beispiel | Monoazofarbstoff I | Diamin II | Nuance |
|---|---|---|---|
| 121 | 2-Naphthylamin-1,5-disulfonsäure ⟶ 1,8-Aminonaphthol-3,6-disulfonsäure | 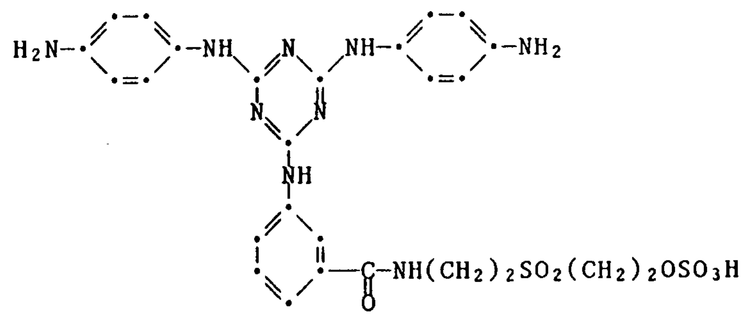 | blaustichig Rot |
| 122 | 2-Naphthylamin-1,6-disulfonsäure ⟶ 1,8-Aminonaphthol-3,6-disulfonsäure | 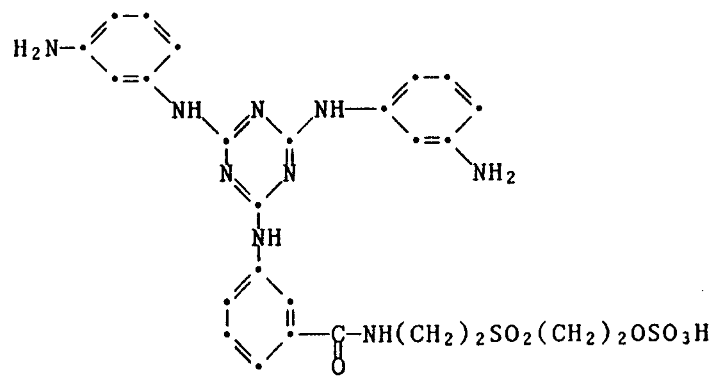 | blaustichig Rot |

Tabelle 2 (Fortsetzung)

| Beispiel | Monoazofarbstoff I | Diamin II | Nuance |
|---|---|---|---|
| 123 | 2-Naphthylamin-1,6-disulfonsäure ⟶ 1,8-Aminonaphthol-3,6-disulfonsäure | 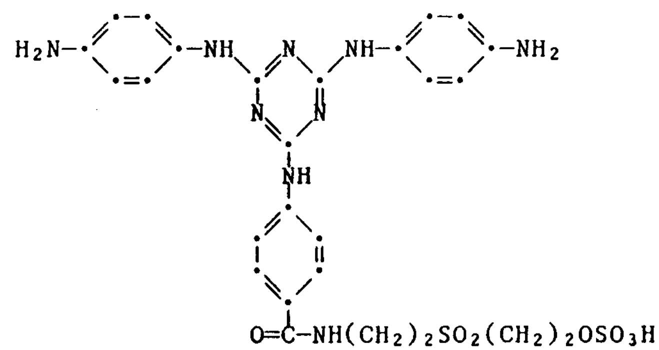 | blaustichig Rot |
| 124 | 2-Naphthylamin-1,6-disulfonsäure ⟶ 1,8-Aminonaphthol-3,6-disulfonsäure | 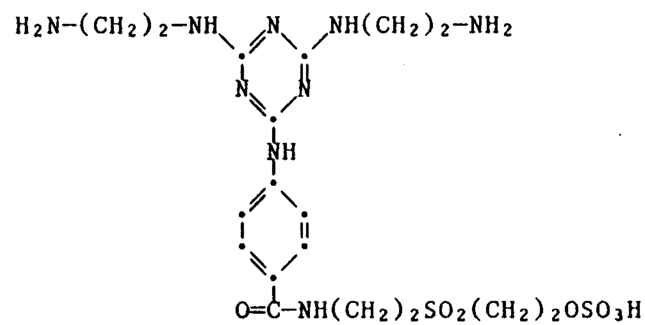 | blaustichig Rot |

Tabelle 2 (Fortsetzung)

| Beispiel | Monoazofarbstoff I | Diamin II | Nuance |
|---|---|---|---|
| 125 | 2-Naphthylamin-1,5-disulfonsäure ⟶ 1,8-Aminonaphthol-4,6-disulfonsäure | 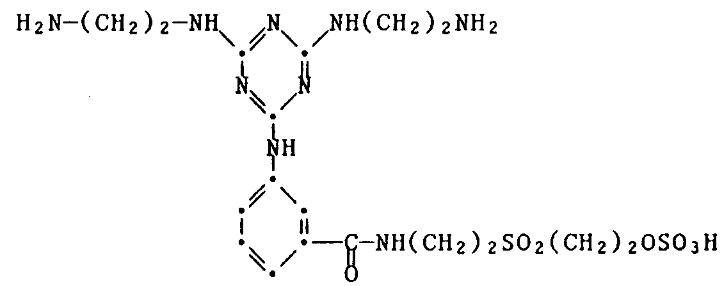 | Rot |
| 126 | 2-Naphthylamin-1,5-disulfonsäure ⟶ 1,8-Aminonaphthol-4,6-disulfonsäure | 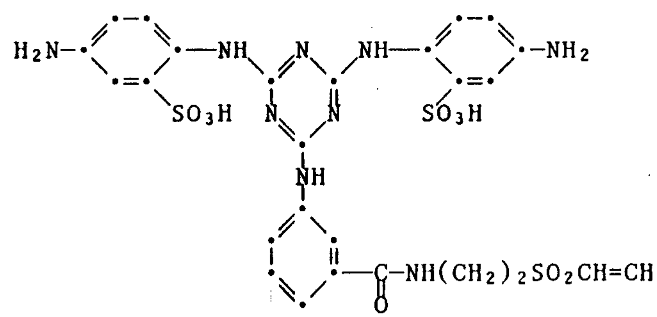 | Rot |

Tabelle 2 (Fortsetzung)

| Beispiel | Monoazofarbstoff I | Diamin II | Nuance |
|---|---|---|---|
| 127 | 2-Naphthylamin-1,5-disulfonsäure ⟶ 1,8-Aminonaphthol-4,6-disulfonsäure | 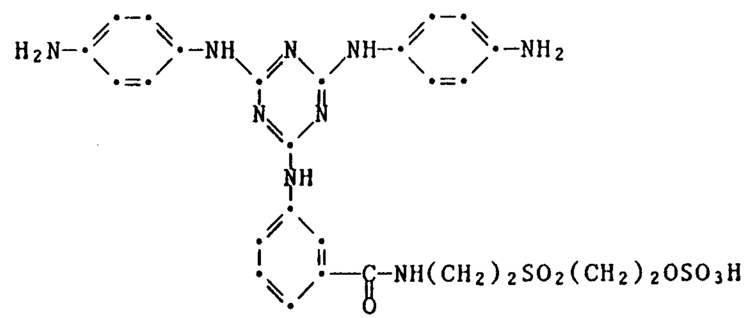 | Rot |
| 128 | 2-Naphthylamin-1,6-disulfonsäure ⟶ 1,8-Aminonaphthol-4,6-disulfonsäure | 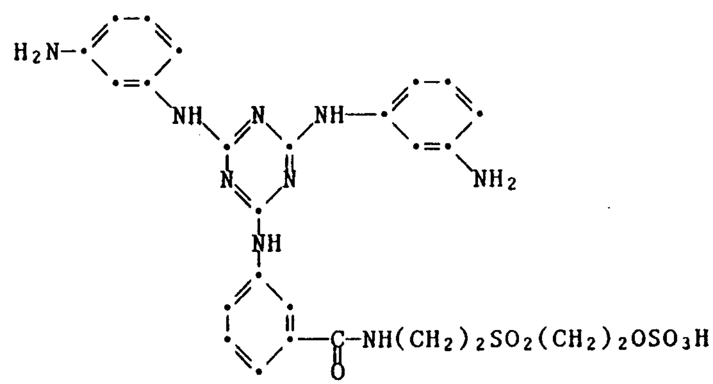 | Rot |

Tabelle 2 (Fortsetzung)

| Beispiel | Monoazofarbstoff I | Diamin II | Nuance |
|---|---|---|---|
| 129 | 2-Naphthylamin-1,6-disulfonsäure ⟶ 1,8-Aminonaphthol-4,6-disulfonsäure | 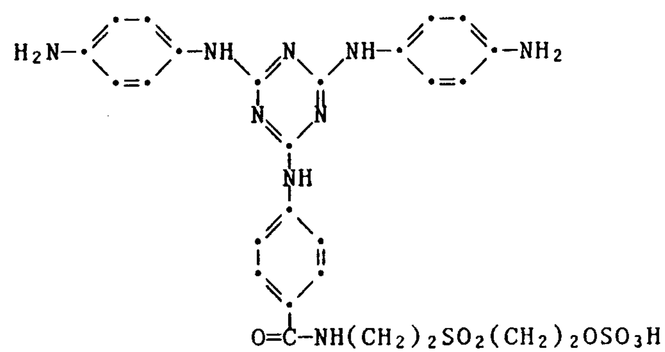 | Rot |
| 130 | 2-Naphthylamin-1,6-disulfonsäure ⟶ 1,8-Aminonaphthol-4,6-disulfonsäure | 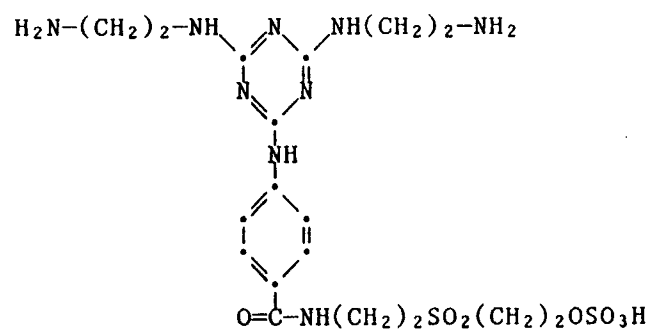 | Rot |

Tabelle 2 (Fortsetzung)

| Beispiel | Monoazofarbstoff I | Diamin II | Nuance |
|---|---|---|---|
| 131 | Metanilsäure ⟶ 1,8-Aminonaphthol-3,6-disulfonsäure | 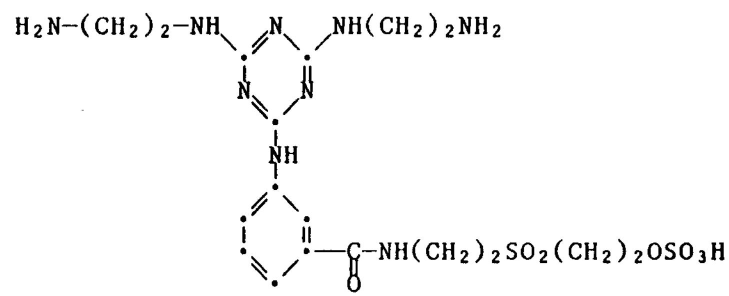 | Rot |
| 132 | Metanilsäure ⟶ 1,8-Aminonaphthol-3,6-disulfonsäure | 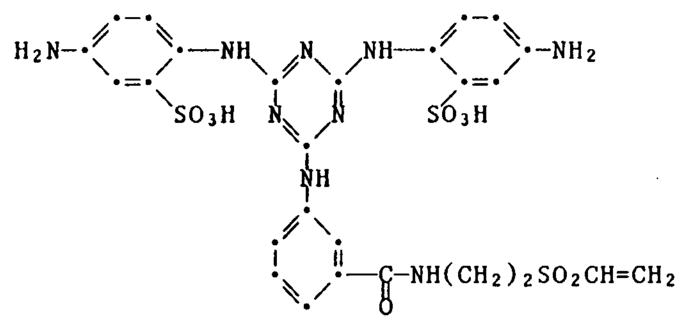 | Rot |

Tabelle 2 (Fortsetzung)

| Beispiel | Monoazofarbstoff I | Diamin II | Nuance |
|---|---|---|---|
| 133 | Metanilsäure ⟶ 1,8-Aminonaphthol-3,6-disulfonsäure | 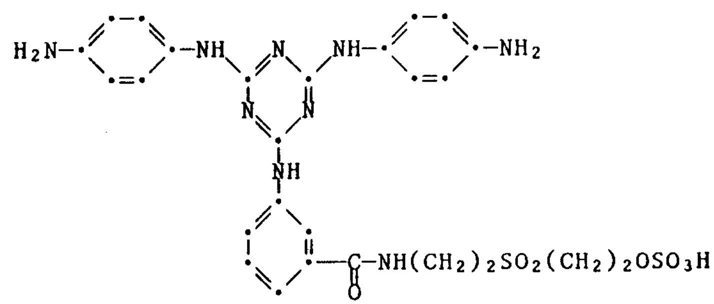 | Rot |
| 134 | Metanilsäure ⟶ 1,8-Aminonaphthol-3,6-disulfonsäure | 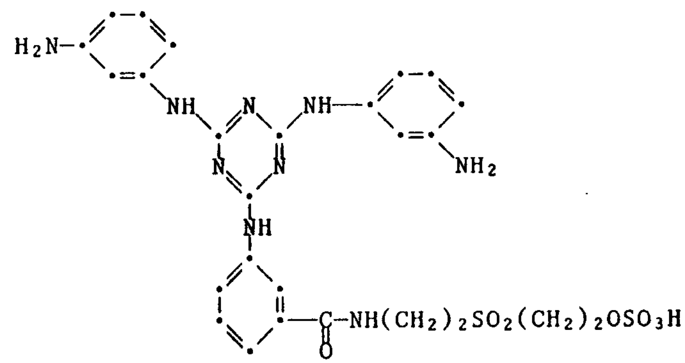 | Rot |

Tabelle 2 (Fortsetzung)

| Beispiel | Monoazofarbstoff I | Diamin II | Nuance |
|---|---|---|---|
| 135 | Metanilsäure ⟶ 1,8-Aminonaphthol-4,6-disulfonsäure | 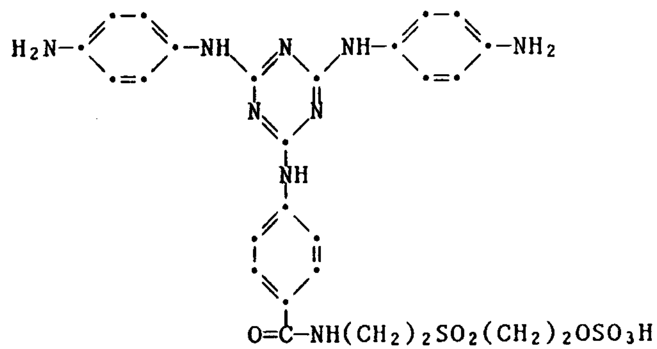 | Rot |
| 136 | Metanilsäure ⟶ 1,8-Aminonaphthol-4,6-disulfonsäure | 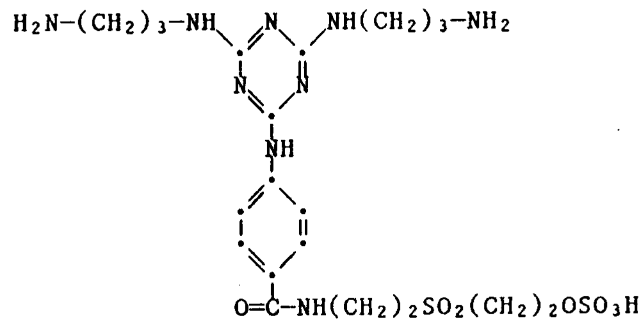 | Rot |

Tabelle 2 (Fortsetzung)

| Beispiel | Monoazofarbstoff I | Diamin II | Nuance |
|---|---|---|---|
| 137 | Anthranilsäure ⟶ 1,8-Aminonaphthol-3,6-disulfonsäure | 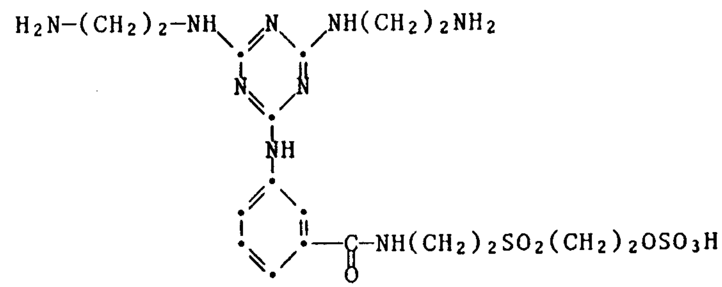 | Rot |
| 138 | Anthranilsäure ⟶ 1,8-Aminonaphthol-3,6-disulfonsäure | 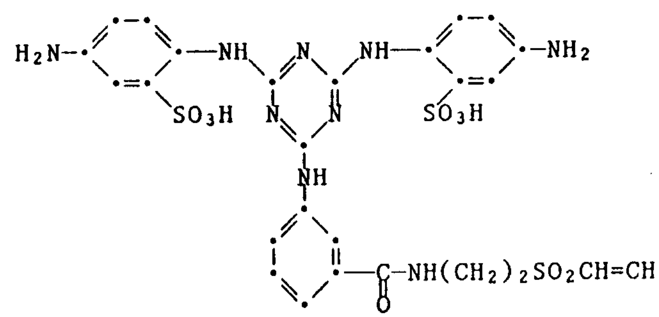 | Rot |

Tabelle 2 (Fortsetzung)

| Beispiel | Monoazofarbstoff I | Diamin II | Nuance |
|---|---|---|---|
| 139 | Anthranilsäure ⟶ 1,8-Aminonaphthol-3,6-disulfonsäure | 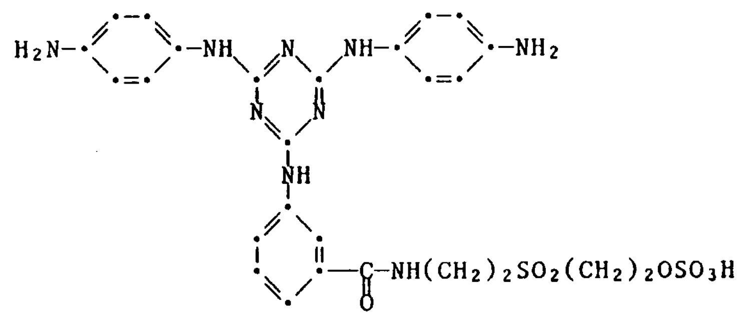 | Rot |
| 140 | Anthranilsäure ⟶ 1,8-Aminonaphthol-3,6-disulfonsäure | 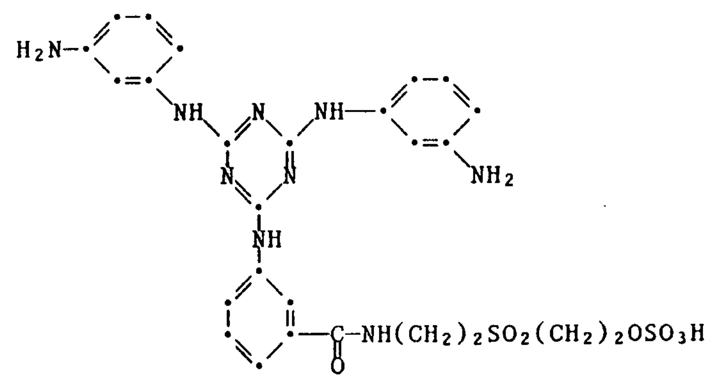 | Rot |

Tabelle 2 (Fortsetzung)

| Beispiel | Monoazofarbstoff I | Diamin II | Nuance |
|---|---|---|---|
| 141 | Anthranilsäure ⟶ 1,8-Aminonaphthol-4,6-disulfonsäure | 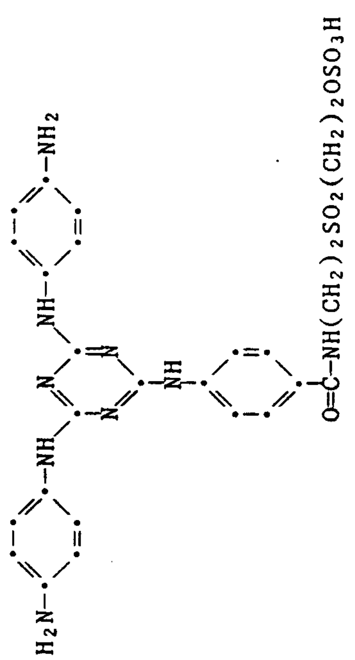 | Rot |
| 142 | Anthranilsäure ⟶ 1,8-Aminonaphthol-4,6-disulfonsäure | 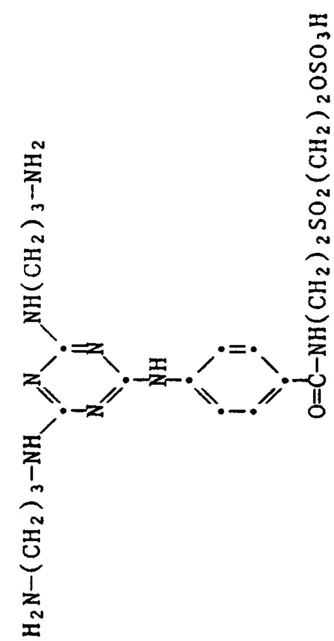 | Rot |

Aehnlich wertvolle Reaktivfarbstoffe erhält man auch, wenn man anstelle des oben eingesetzten Ausgangsfarbstoffes 1-Amino-8-hydroxy-2',7-azonaphthalin-1',3,5',6-tetrasulfonsäure die aus den in der nachstehenden Tabelle angegebenen Diazo- und Kupplungskomponenten erhältlichen Azofarbstoffe einsetzt und im übrigen wie vorangehend beschrieben verfährt.

Diazokomponenten:

2-Aminobenzol-sulfonsäure, 3-Aminobenzol-sulfonsäure, 4-Aminobenzolsulfonsäure, 5-Chlor-2-aminobenzol-sulfonsäure, 6-Chlor-2-aminobenzolsulfonsäure, 5-Nitro-2-aminobenzol-sulfonsäure, 4-Chlor-3-aminobenzolsulfonsäure, 6-Chlor-3-aminobenzol-sulfonsäure, 3-Chlor-4-aminobenzolsulfonsäure, 2-Aminotoluol-4-sulfonsäure, 2-Aminotoluol-5-sulfonsäure, 3-Aminotoluol-6-sulfonsäure, 4-Aminotoluol-2-sulfonsäure, 4-Aminotoluol-3-sulfonsäure, 5-Chlor-2-aminotoluol-3-sulfonsäure, 3-Chlor-2-aminotoluol-5-sulfonsäure, 6-Chlor-3-aminotoluol-4-sulfonsäure, 2-Chlor-4-aminotoluol-5-sulfonsäure, 2-Chlor-4-aminotoluol-6-sulfonsäure, 4-Nitro-2-aminotoluol-6-sulfonsäure, 6-Nitro-4-aminotoluol-2-sulfonsäure, 3-Amino-1,2-dimethylbenzol-4-sulfonsäure, 4-Amino-1,3-dimethylbenzol-5-sulfonsäure, 4-Amino-1,3-dimethylbenzol-6-sulfonsäure, 2-Amino-anisol-4-sulfonsäure, 4-Amino-anisol-2-sulfonsäure, 4-Amino-anisol-3-sulfonsäure, 4-Chlor-2-amino-anisol-5-sulfonsäure, 4-Amino-phenetol-2-sulfonsäure, 4-Amino-phenetol-3-sulfonsäure, 2-Amino-phenetol-4-sulfonsäure, 4-Aminobenzol-1,3-disulfonsäure, 2-Aminobenzol-1,4-disulfonsäure, 2-Aminotoluol-3,4-disulfonsäure, 2-Aminotoluol-3,5-disulfonsäure, Anilin, 4-Aminotoluol, 4-Aminoanisol, 4-Aminochlorbenzol, 2-Aminobenzol-sulfonsäure, 2-Naphthylamin-1-sulfonsäure, 2-Naphthylamin-5-sulfonsäure, 2-Naphthylamin-6-sulfonsäure, 2-Naphthylamin-7-sulfonsäure, 2-Naphthylamin-8-sulfonsäure, 2-Naphthylamin-1,7-disulfonsäure, 2-Naphthylamin-3,6-disulfonsäure, 2-Naphthylamin-3,7-disulfonsäure, 2-Naphthylamin-4,7-disulfonsäure, 2-Naphthylamin-4,8-disulfonsäure, 2-Naphthylamin-5,7-disulfonsäure, 2-Naphthylamin-6,8-disulfonsäure, 2-Naphthylamin-1,5,7-trisulfonsäure, 2-Naphthylamin-3,6,8-trisulfonsäure, 2-Naphthylamin-4,6,8-trisulfonsäure, 1-Naphthylamin-4-sulfonsäure, 1-Naphthylamin-5-sulfonsäure, 1-Naphthylamin-6-sulfonsäure, 1-Naphthylamin-7-sulfonsäure, 1-Naphthylamin-3,6-disulfonsäure, 1-Naphthylamin-3,7-disulfonsäure, 1-Naphthylamin-3,8-disulfonsäure, 1-Naphthylamin-4,6-disulfonsäure, 1-Naphthylamin-4,7-disulfonsäure, 1-Naphthylamin-4,8-disulfonsäure, 1-Naphthylamin-5,7-disulfonsäure, 1-Naphthylamin-6,8-disulfonsäure, 1-Naphthylamin-2,4,6-trisulfonsäure, 1-Naphthylamin-3,6,8-trisulfonsäure, 1-Naphthylamin-4,6,8-trisulfonsäure, 1-Amino-4-β-chloräthylsulfonylbenzol, 1-Amino-3-vinylsulfonylbenzol, 1-Amino-2-brom-4-β-sulfatoäthylsulfonylbenzol, 1-Amino-4-β-sulfatoäthylsulfonylbenzol-2-sulfonsäure, 1-Amino-3-δ-(β-chloräthylsulfonyl)-butyrylbenzol-6-sulfonsäure, 2-Amino-8-β-sulfatoäthylsulfonylnaphthalin,2-Amino-6-β-sulfatoäthylsulfonylnaphthalin-1-sulfonsäure, 2-Amino-8-vinylsulfonylnaphthalin-6-sulfonsäure.

Kupplungskomponenten:

1-Amino-8-naphthol-4,6-disulfonsäure, 1-Amino-8-naphthol-4-sulfonsäure, 1-Amino-8-naphthol-6-sulfonsäure, 1-Amino-8-naphthol-3,5-disulfonsäure, 1-(4'-Aminobenzoylamino)-8-naphthol-3,6- oder -4,6-disulfonsäure, 1-(3'-Aminobenzoylamino)-8-naphthol-3,6- oder -4,6-disulfonsäure.

Beispiel 143: 63,1 Teile 1-[2'-Sulfo-4'-(4'',6''-dichlor-1'',3'',5''-triazin-2''-yl-amino)-phenyl]-4-(2'''-sulfophenylazo)-pyrazolon-(5)-3-carbonsäure, werden in Wasser bei pH 6,8-7,2 gelöst. Zu dieser Lösung gibt man bei etwa 25° 27 Teile der Verbindung der Formel

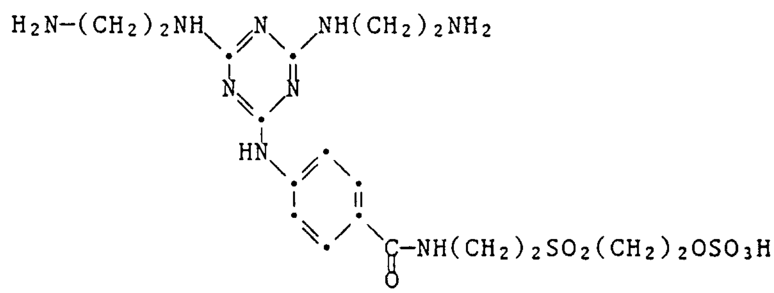

und erwärmt auf 35-40°. Der pH beginnt zu fallen. Wenn er einen Wert von etwa 3,5 erreicht hat, wird er durch portionsweise Zugabe von ca. 11 g Soda in einem Bereich von 3,5-4,5 gehalten. Die Reaktion ist nach etwa 3 Stunden beendet, was man daran erkennt, dass kein weiteres Alkali mehr verbraucht wird. Die Farbstofflösung wird jetzt durch Zugabe von Dinatriumhydrogenphosphat auf 7,0 gestellt. Der erhaltene Farbstoff der Konstitution:

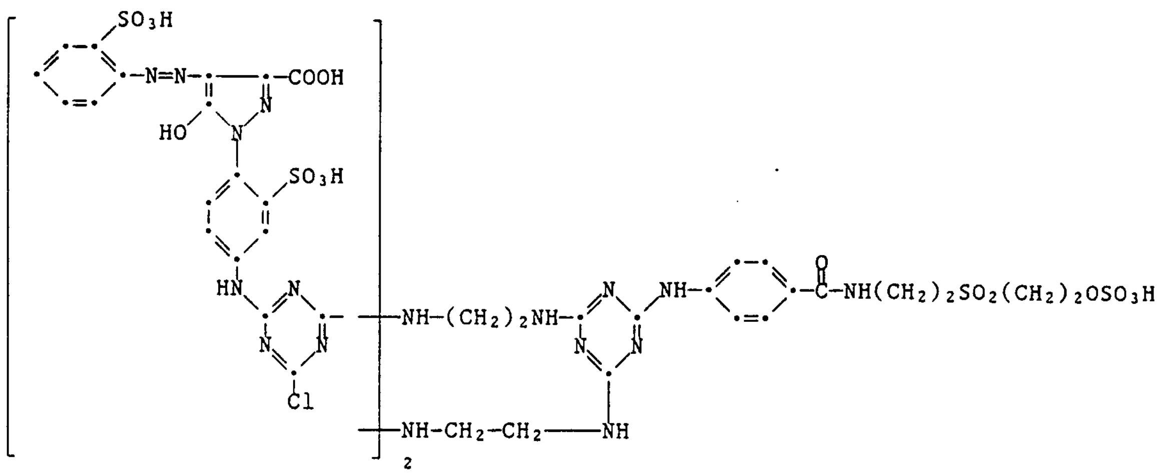

kann durch Aussalzen oder Sprühtrocknen isoliert werden. Er färbt Cellulosefasern in reinen grünstichigen, gelben Tönen an.

Aehnlich wertvolle erfindungsgemässe Reaktivfarbstoffe erhält man, wenn man anstelle des oben eingesetzten Zwischenfarbstoffes die Kondensationsprodukte der aus den in der nachstehenden Tabelle angegebenen Diazo- und Kupplungskomponenten erhältlichen Azofarbstoffe mit Cyanurchlorid einsetzt und im übrigen wie oben beschrieben verfährt.

Diazokomponenten:

3-Amino-benzol-sulfonsäure
4-Amino-benzol-sulfonsäure
5-Chlor-2-amino-benzol-sulfonsäure
2,5-Dichlor-4-amino-benzol-sulfonsäure
2-Amino-toluol-4-sulfonsäure
4-Amino-toluol-3-sulfonsäure
2-Amino-anisol-4-sulfonsäure
4-Amino-benzol-1,3-disulfonsäure
2-Amino-benzol-1,4-disulfonsäure
2-Amino-toluol-3,5-disulfonsäure
2-Amino-naphthalin-1,5-disulfonsäure
2-Amino-naphthalin-4,8-disulfonsäure
2-Amino-naphthalin-6,8-disulfonsäure
2-Amino-naphthalin-1-sulfonsäure
2-Amino-naphthalin-6-sulfonsäure
4-β-Aethylsulfonylanilin
3-β-Chloräthylsulfonyl-anilin
2-Methoxy-4-β-sulfatoäthylsulfonyl-anilin
2-Methoxy-5-methyl-4-β-sulfatoäthylsulfonyl-anilin
2-Brom-4-β-sulfatoäthylsulfonyl-anilin
2-Sulfo-4-β-sulfatoäthylsulfonyl-anilin
2-Methoxy-5-β-sulfatoäthylsulfonyl-anilin
2-Sulfo-5-δ-(β-chloräthylsulfonylbutyryl)-aminoanilin
2-Amino-8-β-sulfatoäthylsulfonylnaphthalin-5-sulfonsäure
2-Amino-8-β-sulfatoäthylsulfonylnaphthalin
2-Amino-6-vinylsulfonylnaphthalin-1-sulfonsäure.

Kupplungskomponenten:

1-(3'-Amino-6'-sulfo-phenyl)-3-methyl-5-pyrazolon
1-(4'-Amino-3'-sulfo-phenyl)-3-methyl-5-pyrazolon
1-(4'-Amino-2'-sulfo-phenyl)-3-methyl-5-pyrazolon

1-(3'-Amino-6'-sulfo-phenyl)-5-pyrazolon-3-carbonsäure
1-(4'-Amino-3'-sulfo-phenyl)-5-pyrazolon-3-carbonsäure
1-(3'-Amino-5'-sulfo-6'-methyl-phenyl)-5-pyrazolon-3-carbonsäure
1-(2'-Methyl-3'-amino-5'-sulfo-phenyl)-5-pyrazolon-3-carbonsäure
1-(2'-Methyl-3'-amino-5'-sulfo-phenyl)-3-methyl-5-pyrazolon
1-(3'-Amino-5'-sulfo-6'-methyl-phenyl)-3-methyl-5-pyrazolon
1-(4'-Amino-2',5'-disulfo-phenyl)-5-pyrazolon-3-carbonsäure.

Beispiel 144: 54,5 Teile des Farbstoffes 2-(4'-Amino-2'-ureido-phenylazo)-naphthalin-3,6,8-trisulfonsäure werden mit 250 Teilen Wasser neutral gelöst. Diese neutrale Lösung gibt man zu einer hergestellten Suspension von 18,5 Teilen Cyanurchlorid in Aceton und Wasser. Durch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man 32,6 Teile der Verbindung der Formel

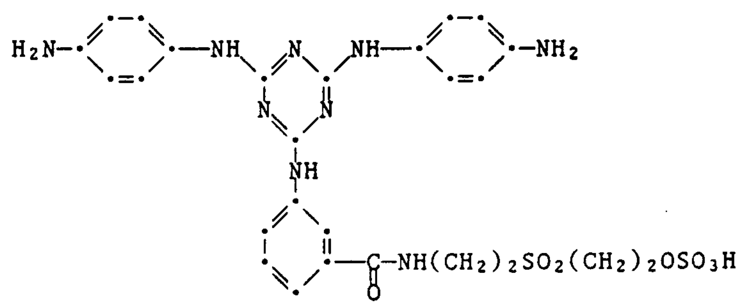

zu und erwärmt auf 30°. Durch Zugabe von weiteren 18 g Bicarbonat hält man den pH-Wert in den Grenzen von 6,5 bis 7,0. Die Reaktion ist beendet, wenn kein weiteres Alkali mehr verbraucht wird. Der entstandene Farbstoff der Formel:

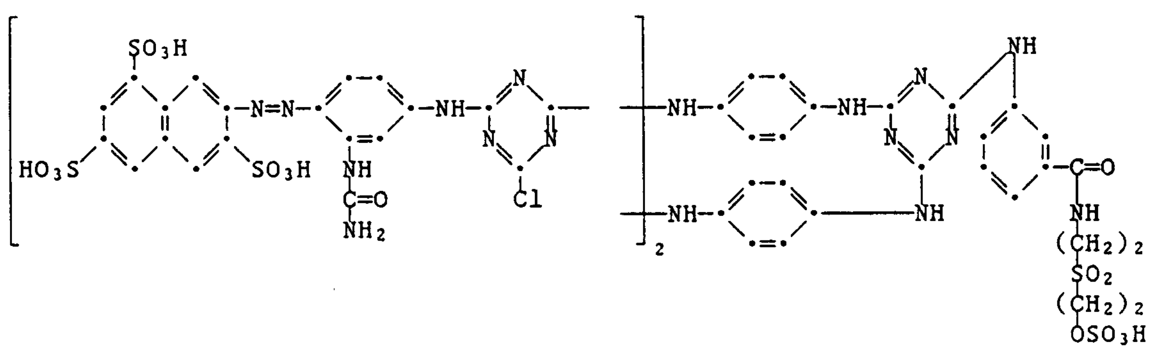

wird durch Zugabe von Kochsalz abgeschieden und im Vakuum bei 50 bis 55° getrocknet. Er färbt Cellulosefasern nach dem Ausziehverfahen in farbstarken, reinen goldgelben Tönen an.

Aehnlich wertvolle Reaktivfarbstoffe erhält man auch, wenn man anstelle des oben eingesetzten Ausgangsfarbstoffes 2-(4'-Amino-2'-ureidophenylazo)-naphthalin-3,6,8-trisulfonsäure die aus den in der nachstehenden Tabelle angegebenen Diazo- und Kupplungskomponenten erhältlichen Azofarbstoffe einsetzt und im übrigen wie oben beschrieben verfährt:

Diazokomponenten:

2-Naphthylamin-1,5-disulfonsäure
2-Naphthylamin-4,8-disulfonsäure
2-Naphthylamin-5,7-disulfonsäure
2-Naphthylamin-6,8-disulfonsäure
2-Naphthylamin-1,5,7-trisulfonsäure
2-Naphthylamin-4,6,8-trisulfonsäure
Anilin-2,5-disulfonsäuren.

Kupplungskomponenten:

Anilin, N-Methylanilin
3-Amino-anisol, 3-Amino-toluol
2-Amino-4-acetamino-toluol
2-Amino-4-acetamino-anisol
3-Amino-acetanilid
3-Amino-4-methoxy-toluol
3-Toluidin
1-Naphthylamin-5-sulfonsäure
1-Naphthylamin-7-sulfonsäure
1-Naphthylamin-8-sulfonsäure
2-Amino-toluol
2-Amino-anisol
2,5-Dimethyl-anilin
2-Methoxy-5-methyl-anilin
2,5-Dimethoxy-anilin
o-Phenetidin
m-Phenetidin
3-Amino-phenyl-harnstoff.

Beispiel 145: 50,3 Teile des Farbstoffs 2-Amino-5-hydroxy-6-(2',5'-disulfophenylazo)-naphthalin-7-sulfonsäure werden in 800 ml Wasser neutral gelöst und die Lösung auf 0° bis 5° abgekühlt. Bei dieser Temperatur werden 14 Teile Cyanurfluorid zugegeben, wobei der pH der Reaktionslösung durch gleichzeitige Zugabe von 2n Natriumhydroxydlösung bei 6-6,5 gehalten wird. Nach Zusatz von 27,0 Teilen der Verbindung der Formel

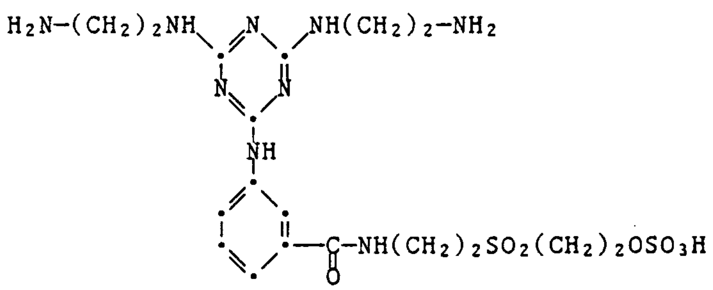

wird die Temperatur auf 20 bis 25°C erhöht und der pH bei 5,5-6,5 gehalten. Reaktionsdauer ca. 4 Stunden. Zur Abscheidung des Farbstoffes wird die neutrale Lösung mit 10 % Natriumchlorid und 10 % Kaliumchlorid versetzt und filtriert. Die erhaltene Paste wird im Vakuum bei 40 bis 50° getrocknet. Der so hergestellte Reaktivfarbstoff hat die folgende Konstitution:

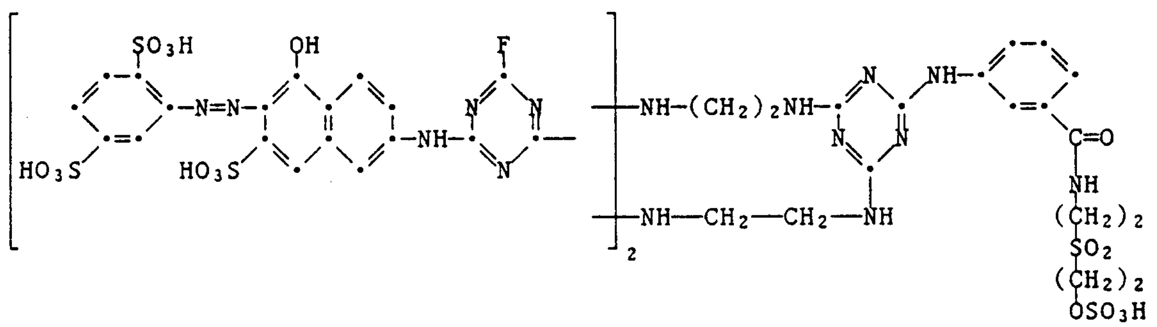

Er färbt Cellulosefasern nach dem Ausziehverfahren in farbstarken, reinen orangen Tönen an.

Ersetzt man die 2-Amino-benzol-1,4-disulfonsäure durch molare Mengen einer der im folgenden genannten Diazokomponenten und verfährt im übrigen wie beschrieben, so erhält man ebenfalls wertvolle, erfindungsgemässe Farbstoffe:
2-Amino-benzol-sulfonsäure
3-Amino-benzol-sulfonsäure
4-Amino-benzol-sulfonsäure
2-Naphthylamin-1,5-disulfonsäure
5-Chlor-2-amino-benzol-sulfonsäure
6-Chlor-2-amino-benzol-sulfonsäure
5-Nitro-2-amino-benzol-sulfonsäure
4-Chlor-3-amino-benzol-sulfonsäure
6-Chlor-3-amino-benzol-sulfonsäure
3-Chlor-4-amino-benzol-sulfonsäure
2-Amino-toluol-4-sulfonsäure
2-Amino-toluol-5-sulfonsäure
3-Amino-toluol-6-sulfonsäure
4-Amino-toluol-2-sulfonsäure
4-Amino-toluol-3-sulfonsäure
5-Chlor-2-amino-toluol-3-sulfonsäure
3-Chlor-2-amino-toluol-5-sulfonsäure
6-Chlor-3-amino-toluol-4-sulfonsäure
2-Chlor-4-amino-toluol-5-sulfonsäure
2-Chlor-4-amino-toluol-6-sulfonsäure
4-Nitro-2-amino-toluol-6-sulfonsäure
6-Nitro-4-amino-toluol-2-sulfonsäure
3-Amino-1,2-dimethyl-benzol-4-sulfonsäure
4-Amino-1,3-dimethyl-benzol-5-sulfonsäure
4-Amino-1,3-dimethyl-benzol-6-sulfonsäure
2-Amino-anisol-4-sulfonsäure
4-Amino-anisol-2-sulfonsäure
4-Amino-anisol-3-sulfonsäure
4-Chlor-2-amino-anisol-5-sulfonsäure
4-Amino-phenetol-2-sulfonsäure
4-Amino-phenetol-3-sulfonsäure
2-Amino-phenetol-4-sulfonsäure
4-Amino-benzol-1,3-disulfonsäure
2-Amino-toluol-3,4-disulfonsäure
2-Amino-toluol-3,5-disulfonsäure
Anilin
4-Amino-toluol
4-Amino-anisol
4-Amino-chlorbenzol
2-Amino-chlorbenzol
2-Naphthylamin-1-sulfonsäure
2-Naphthylamin-5-sulfonsäure
2-Naphthylamin-6-sulfonsäure
2-Naphthylamin-7-sulfonsäure
2-Naphthylamin-8-sulfonsäure
2-Naphthylamin-1,7-disulfonsäure
2-Naphthylamin-3,6-disulfonsäure
2-Naphthylamin-3,7-disulfonsäure
2-Naphthylamin-4,7-disulfonsäure
2-Naphthylamin-5,7-disulfonsäure
2-Naphthylamin-6,8-disulfonsäure
2-Naphthylamin-1,5,7-trisulfonsäure
2-Naphthylamin-3,6,8-trisulfonsäure
2-Naphthylamin-4,6,8-trisulfonsäure.

Ersetzt man die als Kupplungskomponente zur Herstellung des Ausgangsfarbstoffs eingesetzte 2-Acetamino-5-naphthol-7-sulfonsäure durch molare Mengen der Acetylverbindung einer der im folgenden genannten Kupplungskomponenten und verfährt im übrigen wie oben beschrieben, so erhält man ebenfalls wertvolle erfindungsgemässe Farbstoffe:

2-Amino-8-naphthol-6-sulfonsäure, 2-Methylamino-8-naphthol-6-sulfonsäure, 2-Carboxymethylamino-8-naphthol-6-sulfonsäure, 2-β-Sulfoäthylamino-8-naphthol-6-sulfonsäure, 2-iso-Propylamino-8-naphthol-6-sulfonsäure, 2-Methylamino-5-naphthol-7-sulfonsäure, 2-Aethylamino-5-naphthol-7-sulfonsäure, 2-n-Butylamino-5-naphthol-7-sulfonsäure, 2-Amino-8-naphthol-4-sulfonsäure, 2-Amino-5-naphthol-4,7-disulfonsäure, 1-Amino-5-naphthol-7-sulfonsäure, 2-Amino-5-naphthol-1,7-disulfonsäure.

Analog zu den in den Beispielen 1 bis 145 beschriebenen Verfahren können auch die in der folgenden Tabelle aufgeführten Farbstoffe der Nrn. 146 bis 156 hergestellt werden. Die Farbstoffe färben Cellulosefasern in den in der dritten Spalte angegebenen Tönen.

Beispiel | Nuance

146

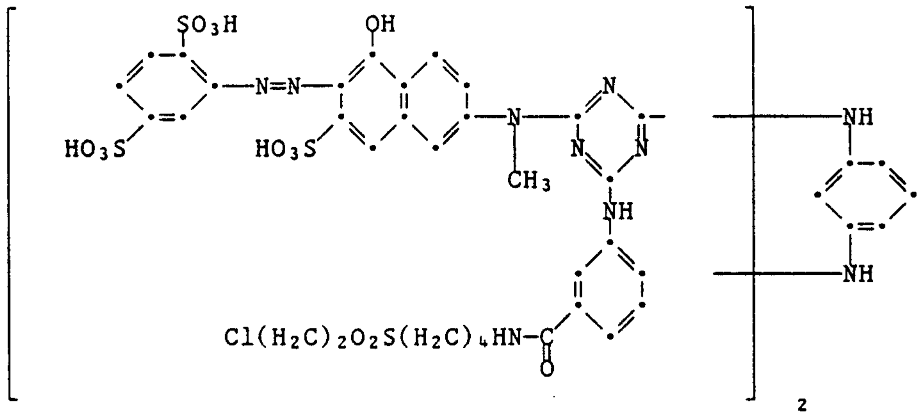

147

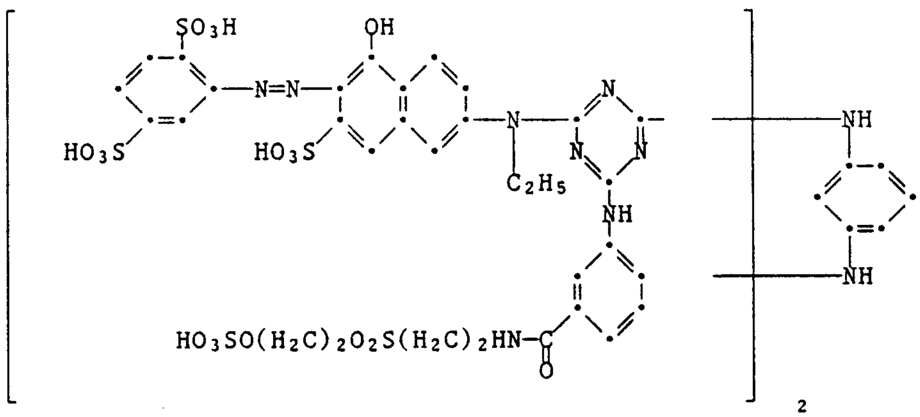

148

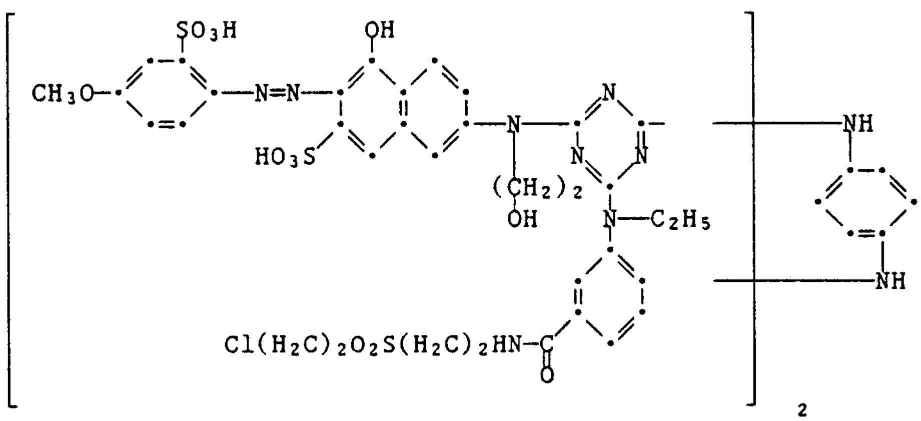

149

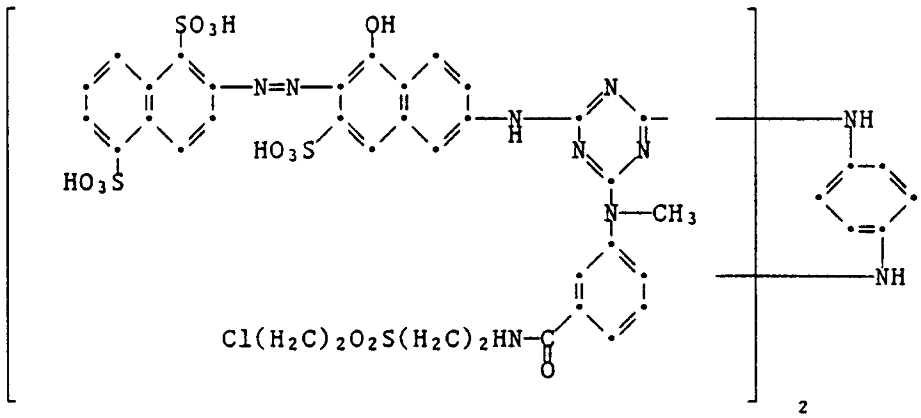

150

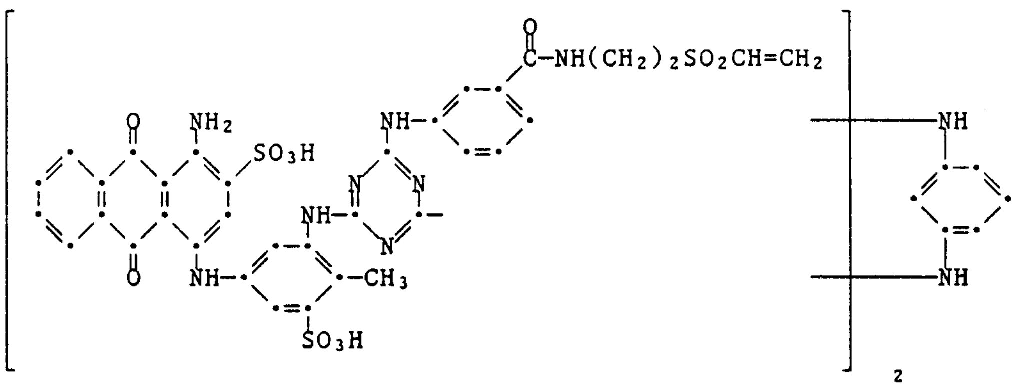

151

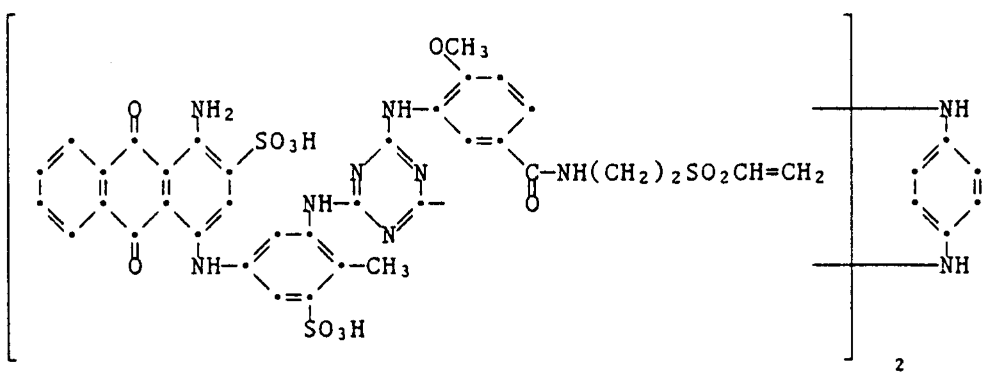

152

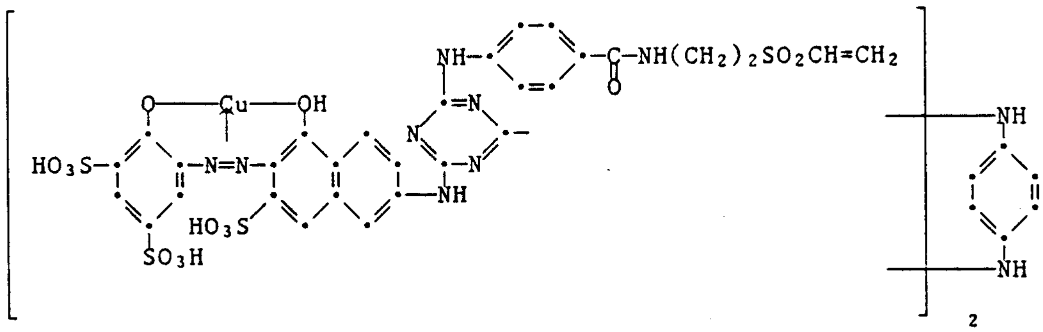

153

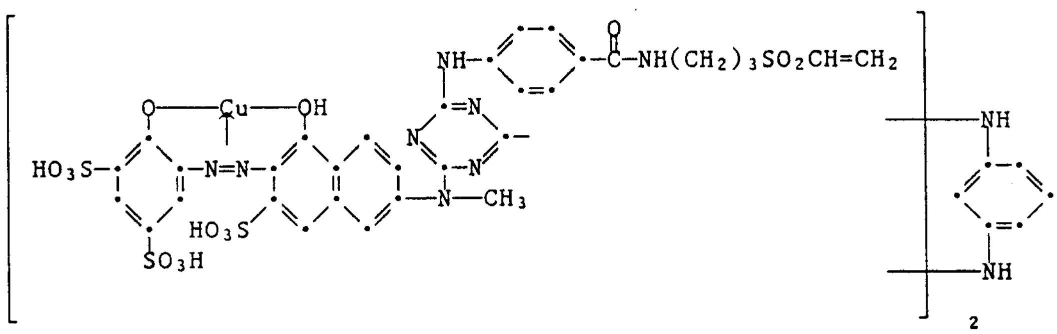

154

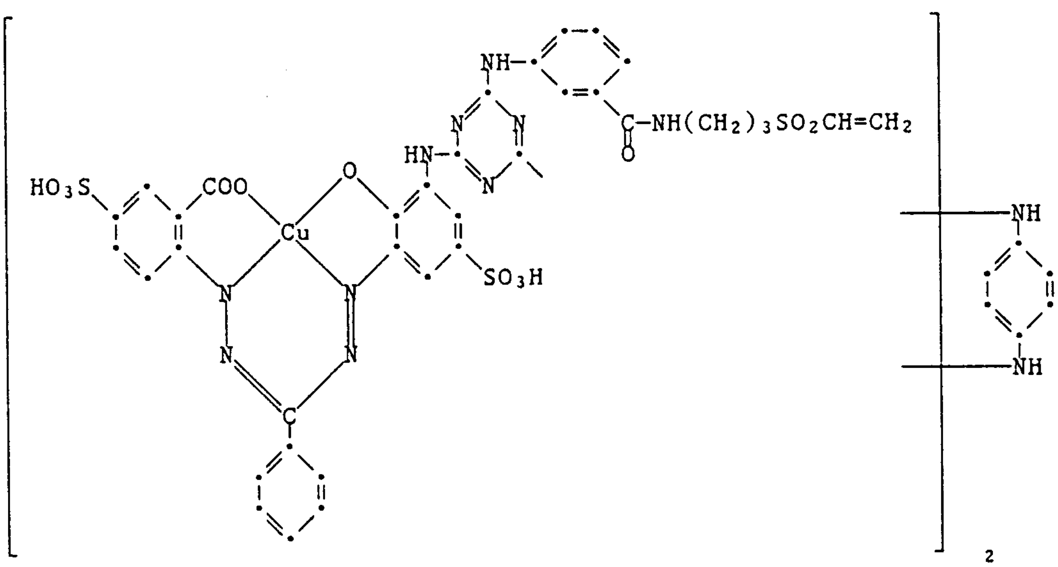

155

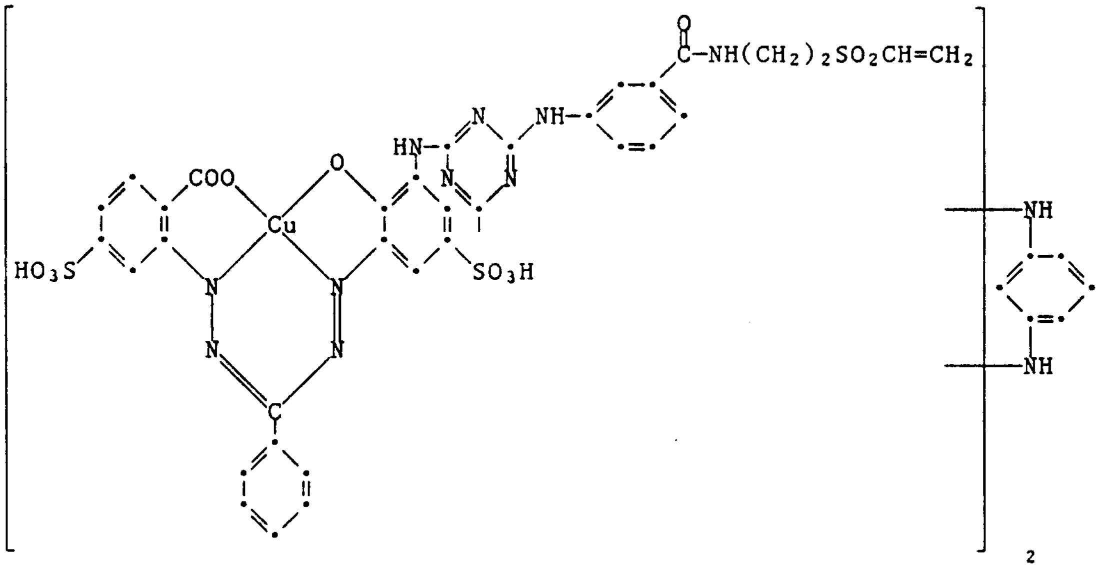

156

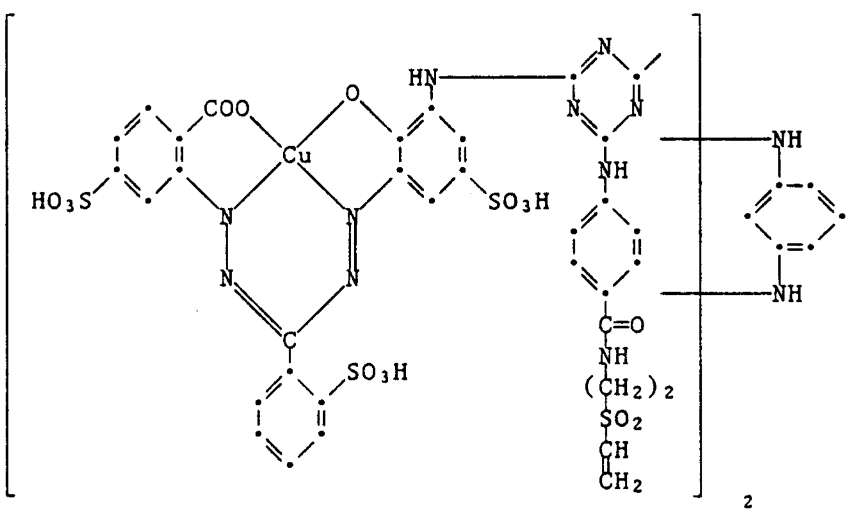

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40 ° C mit 100 Teilen eines Baumwollgewebes ein. Nach 45 Minuten werden 100 Teile einer Lösung, die pro Liter 16 g Natriumhydroxyd und 20 g kalzinierte Soda enthält, zugegeben. Die Temperatur des Färbebades wird weitere 45 Minuten bei 40 ° C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35 ° C mit 100 Teilen eines Baumwollgewebes ein. Nach 20 Minuten werden 100 Teile einer Lösung, die pro Liter 16 g Natriumhydroxyd und 20 g kalzinierte Soda enthält, zugegeben. Die Temperatur des Färbebades wird weitere 15 Minuten bei 35 ° C gehalten. Danach wird die Temperatur innerhalb von 20 Minuten auf 60 ° C erhöht. Die Temperatur wird weitere 35 Minuten bei 60 ° C gehalten. Danach wird

gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25 °C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60 °C erhöht. Die Temperatur wird weitere 90 Minuten auf 60 °C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalzinierte Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38 °Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20 °C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102 °C, spült, seift während einer Viertelstunde in einer 0,3%igen kochenden Lösung eines nichtionogenen Waschmittels, spült und trocknet.

Färbevorschrift VII

In 2000 Teile Wasser werden 2 Teile des Farbstoffes von Beispiel 2, 160 Teile Natriumsulfat und als Puffermittel 4 Teile $Na_2HPO_4 \cdot 12H_2O$ und 1 Teil $KH_2PO_4$ gegeben, so dass ein Färbebad mit einem pH von 7 erhalten wird. In dieses Bad werden 100 Teile einer Wirkware aus nicht-mercerisierter Baumwolle eingetaucht. Im Laufe von 30 Minuten wird die Temperatur des Bades auf 130 °C gebracht, und bei dieser Temperatur wird 60 Minuten lang gefärbt. Danach wird die gefärbte Ware aus dem Bad genommen, mit Wasser gewaschen, geseift, wieder mit Wasser gewaschen und getrocknet. Es wird eine tiefrote Färbung erhalten.

Färbevorschrift VIII

In 2000 Teile Wasser werden 2 Teile des Farbstoffes von Beispiel 2, 2 Teile des bekannten wasserunlöslichen Anthrachinonfarbstoffes der Formel

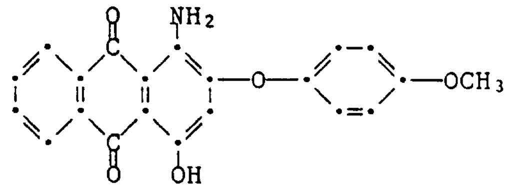

,

120 Teile Natriumsulfat und als Puffermittel 4 Teile $Na_2HPO_4 \cdot 12H_2O$ und 1 Teil $KH_2PO_4$ gegeben. In das so erhaltene Färbebad werden 100 Teile eines Polyester/Baumwoll-Mischgewebes (50:50) eingetaucht, und im Laufe von 30 Minuten wird die Temperatur des Bades auf 130 °C gebracht, bei welcher 60 Minuten gefärbt wird. Dann wird das gefärbte Gewebe aus dem Bad genommen, mit Wasser gewaschen, geseift, erneut mit Wasser gewaschen und getrocknet. Es wird ein egal rot gefärbtes Gewebe erhalten. Das Färbebad wird vor Beginn und während des Färbens auf pH 7 gehalten.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102 °C in gesättigtem Dampf. Das bedruckte Gewebe wird dann gespült, gegebenenfalls kochend geseift und nochmals gespült, und anschliessend getrocknet.

**Patentansprüche**
**Patentansprüche für folgende Vertragsstaaten : BE, CH, DE, FR, GB, IT, LI**

**1.** Reaktivfarbstoffe der Formel

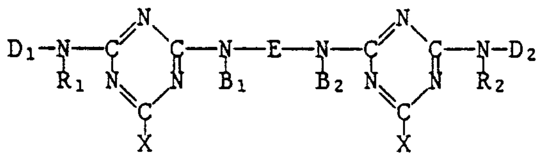

(1),

worin $D_1$ und $D_2$ unabhängig voneinander je ein Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; $R_1$, $R_2$, $B_1$ und $B_2$ unabhängig voneinander Wasserstoff oder Alkyl mit 1 bis 4 Kohlenstoffatomen, das durch Halogen, Hydroxy, Cyan, $C_1$-$C_4$-Alkoxy, $C_{1-4}$-Alkoxycarbonyl, Carboxy, Sulfamoyl, Sulfo oder Sulfato substituiert sein kann; X Fluor, Chlor, Brom, Sulfo, $C_{1-4}$-Alkylsulfonyl, Phenylsulfonyl oder Carboxypyridinium, und E ein Rest der Formel

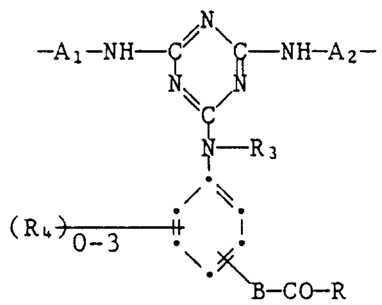

(2),

$A_1$ und $A_2$ unabhängig voneinander je ein Rest der Formel

$-(CH_2)_{1-6}-$ (3a)

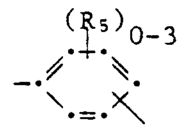

(3b)

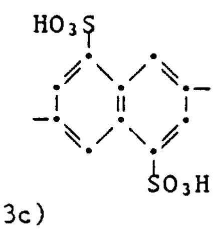

(3c) oder

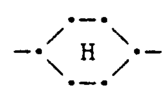

(3d);

oder
X ein Rest der Formel

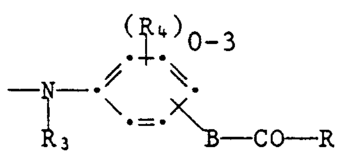

(4),

und E ein Rest der Formel (3a), (3b), (3c) oder (3d);
und $R_3$ Wasserstoff oder Alkyl mit 1 bis 4 Kohlenstoffatomen, das durch Halogen, Hydroxy, Cyan, $C_{1-4}$-Alkoxy, $C_{1-4}$-Alkoxycarbonyl, Carboxy, Sulfamoyl, Sulfo oder Sulfato substituiert sein kann, ist; $R_4$ und $R_5$ unabhängig voneinander für 0 bis 3 Substituenten aus der Gruppe $C_{1-4}$-Alkyl, $C_{1-4}$-Alkoxy, Halogen, Carboxy und Sulfo steht; B eine direkte Bindung oder ein Rest

$-(CH_2)_n-$ oder $-O-(CH_2)_n-$ ,

n = 1 bis 6; R ein Rest der Formel

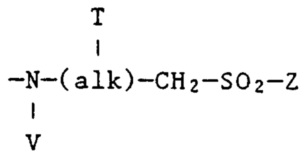

(5a),

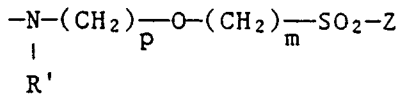

(5b),

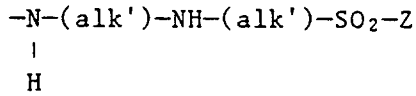

(5c),

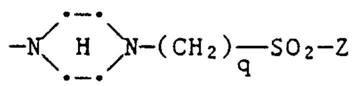

(5d),

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest $-SO_2-Z$, worin Z die oben angegebene Bedeutung hat;
V Wasserstoff oder ein Alkylrest mit 1 bis 4 C-Atomen, der durch Carboxy-oder Sulfogruppen oder durch deren Derivate, Alkoxygruppen mit 1 oder 2 C-Atomen, Halogen oder Hydroxy substituiert sein kann; oder ein Rest

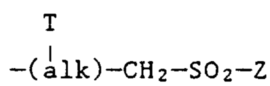

(5e)

worin Z, alk und T die angegebenen Bedeutungen haben; R' Wasserstoff oder $C_{1-6}$-Alkyl; alk' unabhängig voneinander Polymethylenreste mit 2 bis 6 C-Atomen oder deren verzweigte Isomere; und m = 1 bis 6, p = 1 bis 6 und q = 1 bis 6 ist.

**2.** Reaktivfarbstoffe gemäss Anspruch 1, der Formel

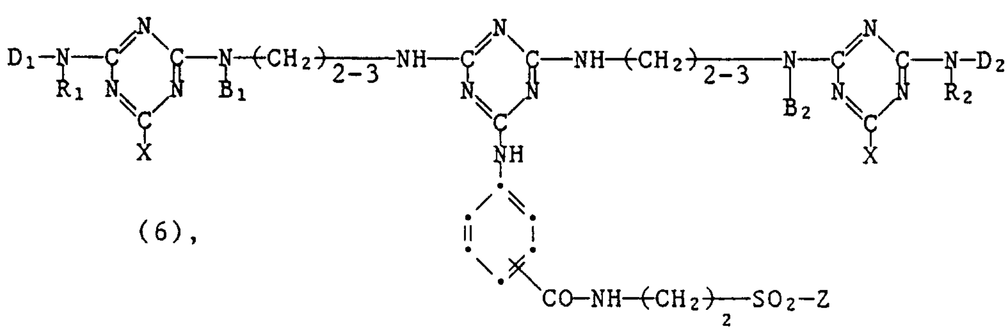

(6),

worin $D_1$, $D_2$, $R_1$, $R_2$, $B_1$, $B_2$, X und Z die in Anspruch 1 angegebenen Bedeutungen haben.

3. Reaktivfarbstoffe gemäss Anspruch 1, der Formel

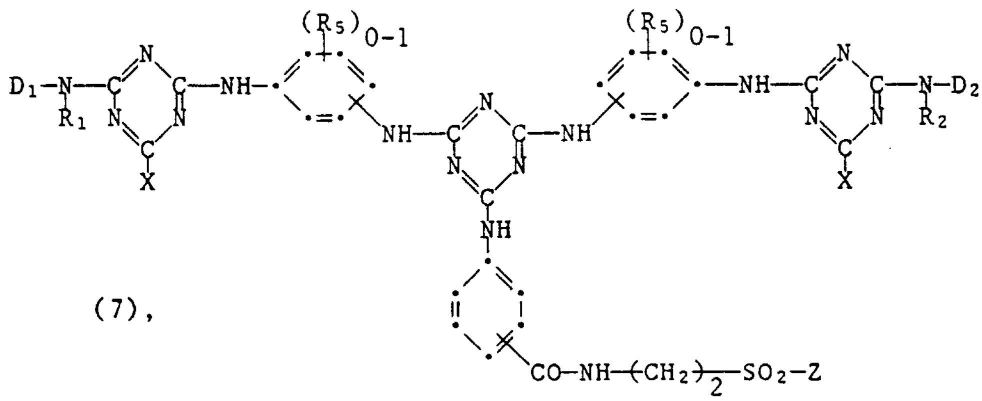

(7),

worin $D_1$, $D_2$, $R_1$, $R_2$, $B_1$, $B_2$, X und Z die in Anspruch 1 angegebenen Bedeutungen haben; und $R_5$ für 0 bis 1 Substituenten aus der Gruppe Methyl, Methoxy, Chlor und Sulfo steht.

4. Reaktivfarbstoffe gemäss Anspruch 1, der Formel

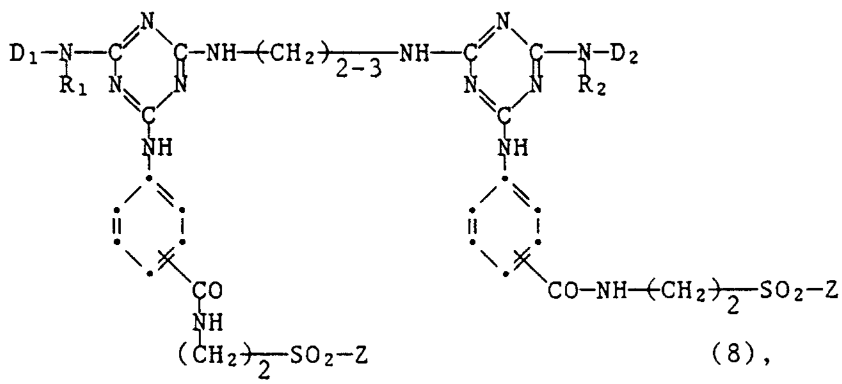

(8),

worin $D_1$, $D_2$, $R_1$, $R_2$ und Z die in Anspruch 1 angegebenen Bedeutungen haben.

5. Reaktivfarbstoffe gemäss Anspruch 1, der Formel

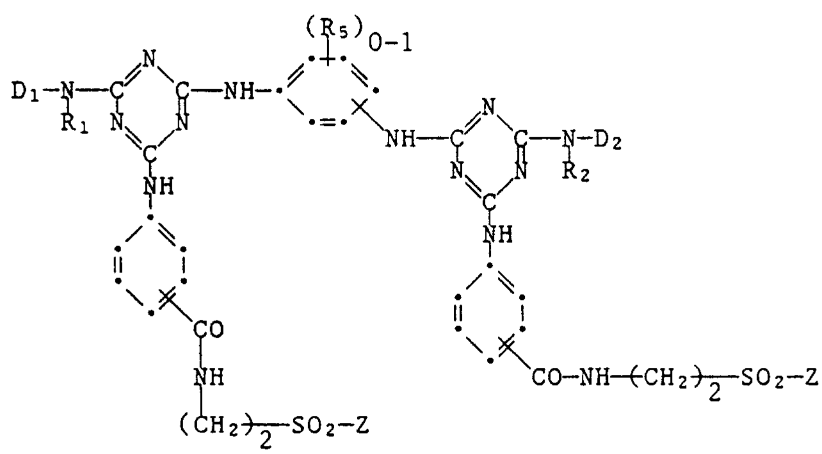

(9),

worin $D_1$, $D_2$, $R_1$, $R_2$ und Z die in Anspruch 1 angegebenen Bedeutungen haben; und $R_5$ für 0 bis 1 Substituenten aus der Gruppe Methyl, Methoxy, Chlor oder Sulfo steht.

**6.** Reaktivfarbstoffe gemäss einem der Ansprüche 1 bis 5, worin die Reste $D_1$-$N(R_1)$- und -$N(R_2)$-$D_2$ gleich sind.

**7.** Reaktivfarbstoffe gemäss einem der Ansprüche 1 bis 3 und 6, worin X Fluor oder Chlor ist.

**8.** Reaktivfarbstoffe gemäss einem der Ansprüche 1 bis 7, worin $R_1$ und $R_2$ Wasserstoff, Methyl, Aethyl oder $\beta$-Hydroxyäthyl sind.

**9.** Reaktivfarbstoffe gemäss einem der Ansprüche 1, 2 und 6 bis 8, worin $B_1$ und $B_2$ Wasserstoff sind.

**10.** Reaktivfarbstoffe gemäss einem der Ansprüche 1 bis 9, worin $D_1$ und $D_2$ je ein Rest eines Mono- oder Disazofarbstoffes ist.

**11.** Reaktivfarbstoffe gemäss einem der Ansprüche 1 bis 9, worin $D_1$ und $D_2$ je ein Rest eines Metallkomplexazo-, Anthrachinon- oder Formazanfarbstoffes ist.

**12.** Reaktivfarbstoffe gemäss Anspruch 10, worin $D_1$ und $D_2$ je ein Mono- oder Disazofarbstoffrest der Formel

$D\text{-}N=N\text{-}(M\text{-}N=N)_r\text{-}K\text{-}$ (10a),

oder

$\text{-}D\text{-}N=N\text{-}(M\text{-}N=N)_r\text{-}K$ (10b),

oder eines davon abgeleiteten Metallkomplexes; D der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei $D_1$, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; r = 0 oder 1 ist; und D, M und K zusammen mindestens zwei Sulfogruppen, vorzugsweise drei oder vier Sulfogruppen, enthalten.

**13.** Reaktivfarbstoffe gemäss Anspruch 11, worin $D_1$ und $D_2$ je ein Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

**14.** Reaktivfarbstoffe gemäss Anspruch 11, worin $D_1$ und $D_2$ je ein Rest eines Formazanfarbstoffes der Formel

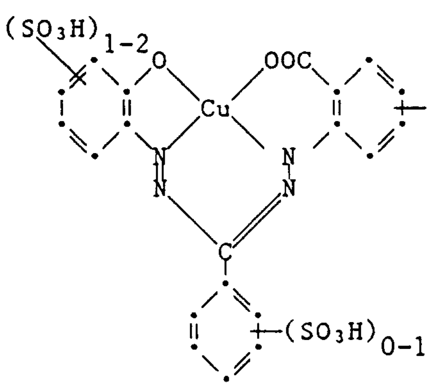

(11a) oder

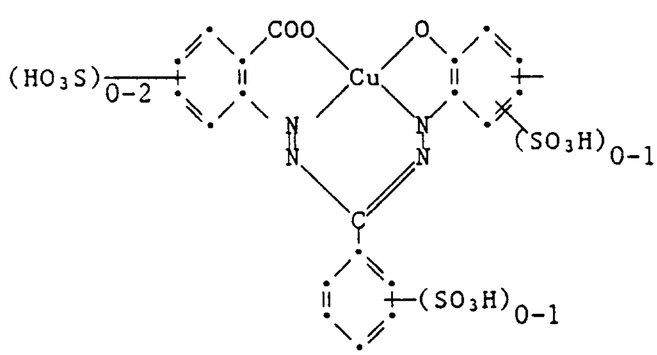

(11b),

ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

**15.** Reaktivfarbstoffe gemäss Anspruch 12, worin $D_1$ und $D_2$ je ein Rest der Formel

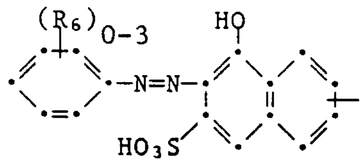

(12),

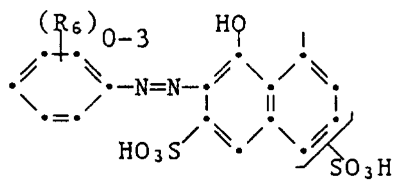

(13) oder

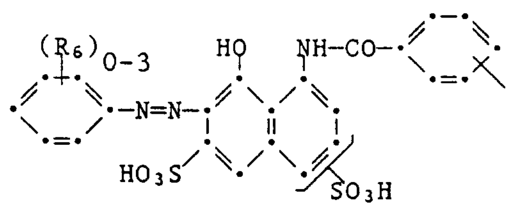

(14)

ist, worin $R_6$ für 0 bis 3 Substituenten aus der Gruppe $C_{1-4}$-Alkyl, $C_{1-4}$-Alkoxy, Halogen, Carboxy und Sulfo steht,

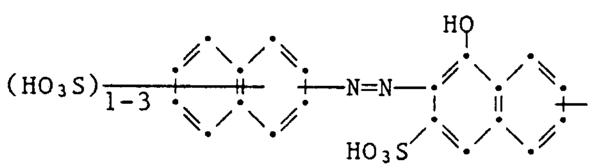

(15),

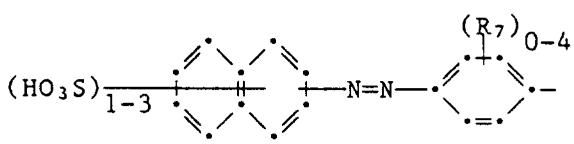

(16),

worin $R_7$ für 0 bis 4 Substituenten aus der Gruppe Halogen, Nitro, Cyan, Trifluormethyl, Sulfamoyl, Carbamoyl, $C_{1-4}$-Alkyl, $C_{1-4}$-Alkoxy, Amino, Acetylamino, Ureido, Hydroxy, Carboxy, Sulfomethyl und Sulfo unabhängig voneinander, steht,

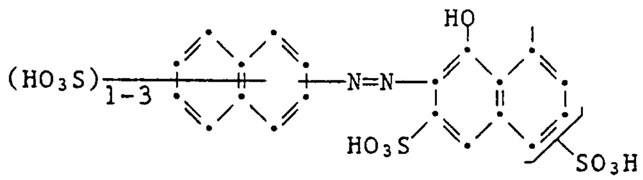 (17),

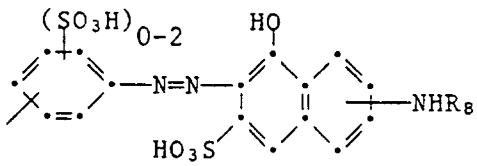 (18),

worin $R_8$ $C_{1-4}$-Alkanoyl oder Benzoyl ist,

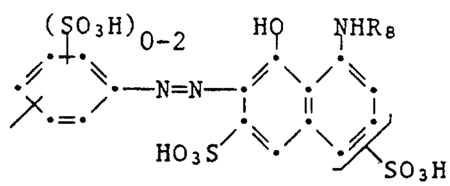 (19),

worin $R_8$ $C_{1-4}$-Alkanoyl oder Benzoyl ist,

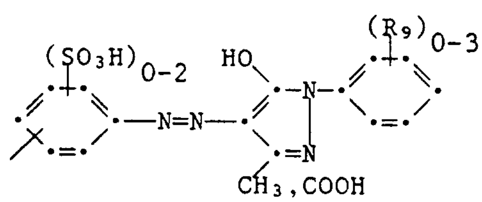 (20),

worin $R_9$ für 0 bis 3 Substituenten aus der Gruppe $C_{1-4}$-Alkyl, $C_{1-4}$-Alkoxy, Halogen, Carboxy und Sulfo steht,

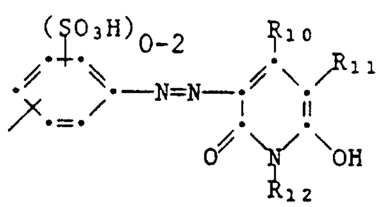 (21),

worin $R_{12}$ und $R_{10}$ unabhängig voneinander Wasserstoff, $C_{1-4}$-Alkyl oder Phenyl, und $R_{11}$ Wasserstoff, Cyano, Carbamoyl oder Sulfomethyl ist,

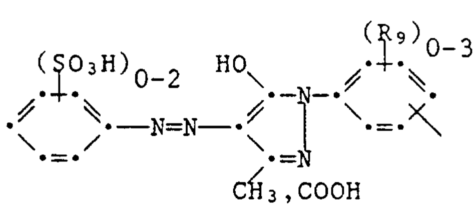 (22),

worin $R_9$ für 0 bis 3 Substituenten aus der Gruppe $C_{1-4}$-Alkyl, $C_{1-4}$-Alkoxy, Halogen, Carboxy und

Sulfo steht,

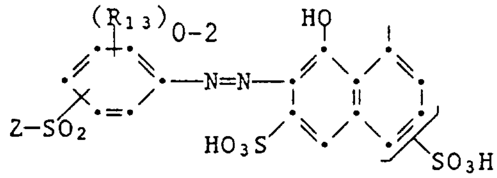 (23),

worin $R_{13}$ für 0 bis 2 Substituenten aus der Gruppe $C_{1-4}$-Alkyl, $C_{1-4}$-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist, oder

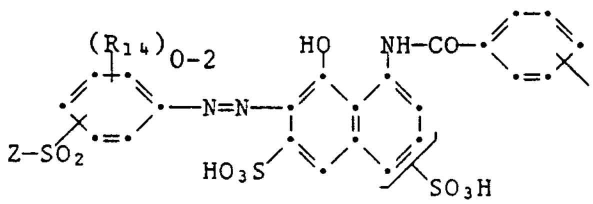 (24)

ist, worin $R_{14}$ für 0 bis 2 Substituenten aus der Gruppe $C_{1-4}$-Alkyl, $C_{1-4}$-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist.

**16.** Reaktivfarbstoffe gemäss einem der Ansprüche 1 und 6 bis 15, worin R ein Rest der Formel

$-NHCH_2CH_2SO_2-Z$ (25a)

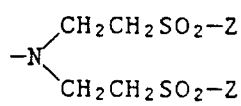 (25b)

$-NHCH_2CH_2OCH_2CH_2SO_2-Z$ (25c)

$-NHCH_2CH_2NHCH_2CH_2SO_2-Z$ (25d)

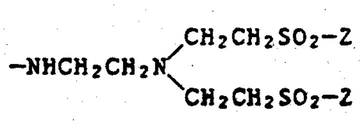 (25e)

oder 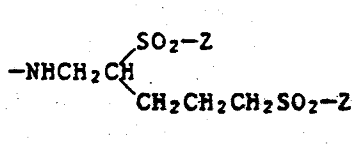 (25f)

ist, und Z β-Chloräthyl, Vinyl oder β-Sulfatoäthyl ist.

**17.** Reaktivfarbstoffe gemäss Anspruch 11, worin $D_1$ und $D_2$ je der Rest eines Anthrachinonfarbstoffes der Formel

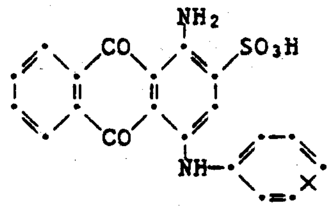

ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.

**18.** Reaktivfarbstoffe gemäss Anspruch 12, worin $D_1$ und $D_2$ je ein Monoazofarbstoffrest der Formel

D-N = N-K- (10c)

oder

-D-N = N-K (10d)

oder eines davon abgeleiteten Kupferkomplexes ist, D ein Benzol- oder Naphthalinrest der durch Hydroxy, Chlor, Nitro, Methyl, Methoxy, Aethoxy, Carboxy, β-Chloräthylsulfonyl, Vinylsulfonyl, β-Sulfatoäthylsulfonyl und β-Chloräthylsulfonylbutyryl substituiert sein kann, ist, und K ein Benzol-, Naphthalin-, 3-Methyl-1-phenyl-pyrazolon- oder 3-Carboxy-1-phenylpyrazolonrest ist, der durch Amino, N-Methylamino, Methyl, Methoxy, Aethoxy, Acetylamino, Ureido, Benzoylamino, Hydroxy und Carboxy substituiert sein kann, und D und K zusammen mindestens zwei Sulfogruppen, vorzugsweise drei oder vier Sulfogruppen, enthalten.

**19.** Verfahren zur Herstellung von Reaktivfarbstoffen der Formel (1) gemäss Anspruch 1, dadurch gekennzeichnet, dass man Farbstoffe der Formeln

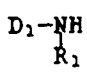 (26) und 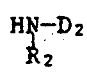 (27)

oder Farbstoffvorprodukte, zwei Aequivalente eines s-Triazins der Formel

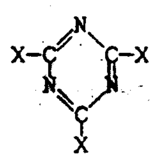 (28)

und ein Aequivalent einer Diaminoverbindung der Formel

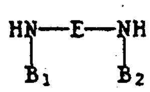 (29)

und gegebenenfalls zwei Aequivalente eines Amins der Formel

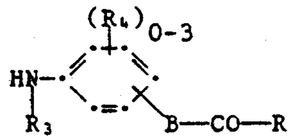

(30)

in beliebiger Folge miteinander umsetzt, wobei $D_1$, $D_2$, $R_1$, $R_2$, X, $B_1$, $B_2$, E, $R_3$, $R_4$, B und R die in Anspruch 1 angegebenen Bedeutungen haben, oder, im Falle der Verwendung von Farbstoffvorprodukten, die erhaltenen Zwischenprodukte in die gewünschten Endfarbstoffe überführt und gegebenenfalls eine weitere Umwandlungsreaktion anschliesst.

**20.** Verfahren gemäss Anspruch 19, dadurch gekennzeichnet, dass man einen Farbstoff der Formel

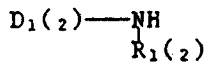

(31)

zunächst mit einem s-Triazin der Formel

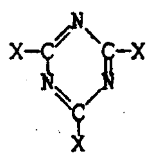

(28)

kondensiert, und die erhaltene Verbindung der Formel

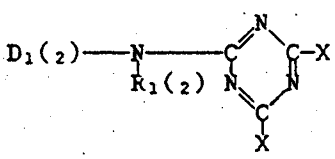

(32)

anschliessend mit einer Diaminoverbindung der Formel (29), worin E ein Rest der Formel (2) ist, im molaren Verhältnis 2:1 kondensiert.

**21.** Verfahren gemäss Anspruch 20, dadurch gekennzeichnet, dass man ein s-Triazin der Formel (28) mit einem Amin der Formel (30) und einem Farbstoff der Formel (31) kondensiert, und die erhaltene Triazinverbindung anschliessend mit einer Diaminoverbindung der Formel (29), worin E ein Rest der Formel (3a), (3b), (3c) oder (3d) ist, im molaren Verhältnis 2:1 kondensiert.

**22.** Verfahren gemäss Anspruch 19, dadurch gekennzeichnet, dass man ein s-Triazin der Formel (28) mit einer Komponente des Farbstoffes und gegebenenfalls einem Amin der Formel (30) kondensiert, dann mit einer zur Herstellung des Farbstoffes benötigten zweiten Komponente umsetzt, und die so erhaltene Triazinverbindung mit einer Diaminoverbindung der Formel (29), worin E ein Rest der Formel (2) bzw. ein Rest der Formel (3a), (3b), (3c) oder (3d) ist, in molaren Verhältnis 2:1 kondensiert.

**23.** Verwendung der Reaktivfarbstoffe gemäss Anspruch 1, zum Färben oder Bedrucken von cellulosehaltigen Fasernmaterialien.

**24.** Verwendung gemäss Anspruch 23, zum Färben oder Bedrucken von Baumwolle.

**Patentansprüche für folgenden Vertragsstaat : ES**

1. Verfahren zur Herstellung von Reaktivfarbstoffen der Formel

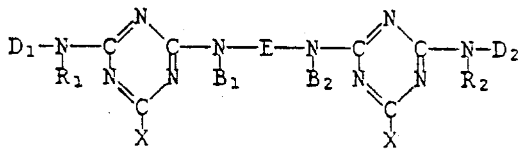

(1),

worin $D_1$ und $D_2$ unabhängig voneinander je ein Rest eines Monoazo-, Polyazo- , Metallkomplexazo-, Anthrachinon-, Phthalocyanin, Formazan-, Azomethin-, Dioxazin-, Phenazin-, Stilben-, Triphenylmethan-, Xanthen-, Thioxanthon-, Nitroaryl-, Naphthochinon-, Pyrenthinon- oder Perylentetracarbimid-Farbstoffes; $R_1$, $R_2$, $B_1$ und $B_2$ unabhängig voneinander Wasserstoff oder Alkyl mit 1 bis 4 Kohlenstoffatomen, das durch Halogen, Hydroxy, Cyan, $C_1$-$C_4$-Alkoxy, $C_{1-4}$-Alkoxycarbonyl, Carboxy, Sulfamoyl, Sulfo oder Sulfato substituiert sein kann; X Fluor, Chlor, Brom, Sulfo, $C_{1-4}$-Alkylsulfonyl, Phenylsulfonyl oder Carboxypyridinium, und E ein Rest der Formel

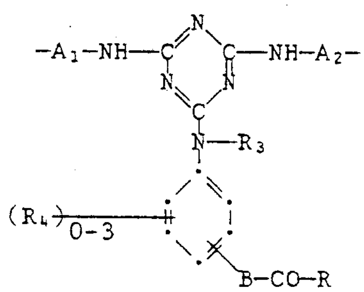

(2),

$A_1$ und $A_2$ unabhängig voneinander je ein Rest der Formel

$-(CH_2)_{1-6}-$ (3a)

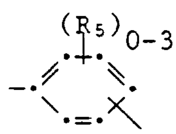

(3b)

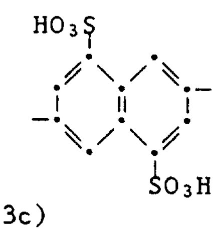

(3c) oder

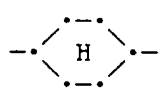

(3d);

oder
X ein Rest der Formel

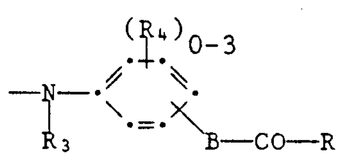

(4),

und E ein Rest der Formel (3a), (3b), (3c) oder (3d);
und $R_3$ Wasserstoff oder Alkyl mit 1 bis 4 Kohlenstoffatomen, das durch Halogen, Hydroxy, Cyan,

$C_{1-4}$-Alkoxy, $C_{1-4}$-Alkoxycarbonyl, Carboxy, Sulfamoyl, Sulfo oder Sulfato substituiert sein kann, ist; $R_4$ und $R_5$ unabhängig voneinander für 0 bis 3 Substituenten aus der Gruppe $C_{1-4}$-Alkyl, $C_{1-4}$-Alkoxy, Halogen, Carboxy und Sulfo steht; B eine direkte Bindung oder ein Rest

$$-(CH_2)_n- \text{ oder } -O-(CH_2)_n- ,$$

n = 1 bis 6; R ein Rest der Formel

$$-\underset{V}{N}-(\overset{T}{alk})-CH_2-SO_2-Z \qquad (5a),$$

$$-\underset{R'}{N}-(CH_2)_p-O-(CH_2)_m-SO_2-Z \qquad (5b),$$

$$-\underset{H}{N}-(alk')-NH-(alk')-SO_2-Z \qquad (5c),$$

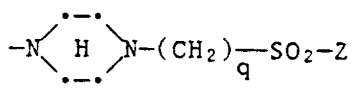

(5d),

Z β-Sulfatoäthyl, β-Thiosulfatoäthyl, β-Phosphatoäthyl, β-Acyloxyäthyl, β-Halogenäthyl oder Vinyl; alk ein Alkylenrest mit 1 bis 6 C-Atomen oder dessen verzweigte Isomere; T Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein Rest -$SO_2$-Z, worin Z die oben angegebene Bedeutung hat;
V Wasserstoff oder ein Alkylrest mit 1 bis 4 C-Atomen, der durch Carboxy-oder Sulfogruppen oder durch deren Derivate, Alkoxygruppen mit 1 oder 2 C-Atomen, Halogen oder Hydroxy substituiert sein kann; oder ein Rest

$$-(\overset{T}{alk})-CH_2-SO_2-Z \qquad (5e)$$

worin Z, alk und T die angegebenen Bedeutungen haben; R' Wasserstoff oder $C_{1-6}$-Alkyl; alk' unabhängig voneinander Polymethylenreste mit 2 bis 6 C-Atomen oder deren verzweigte Isomere; und m = 1 bis 6, p = 1 bis 6 und q = 1 bis 6 ist, dadurch gekennzeichnet, dass man Farbstoffe der Formel

$$D_1-\underset{R_1}{NH} \quad (26) \qquad \text{und} \qquad H\underset{R_2}{N}-D_2 \quad (27)$$

oder Farbstoffvorprodukte, zwei Aequivalente eines s-Triazins der Formel

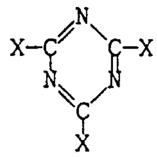

(28)

und ein Aequivalent einer Diaminoverbindung der Formel

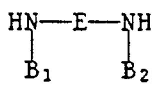

(29)

und gegebenenfalls zwei Aequivalente eines Amins der Formel

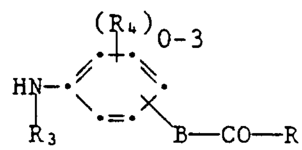

(30)

in beliebiger Folge miteinander umsetzt, wobei $D_1$, $D_2$, $R_1$, $R_2$, X, $B_1$, $B_2$, E, $R_3$, $R_4$, B und R die unter Formel (1) angegebenen Bedeutungen haben, oder, im Falle der Verwendung von Farbstoffvorprodukten, die erhaltenen Zwischenprodukte in die gewünschten Endfarbstoffe überführt und gegebenenfalls eine weitere Umwandlungsreaktion anschliesst.

**2.** Verfahren gemäss Anspruch 1, dadurch gekennzeichnet, dass man einen Farbstoff der Formel

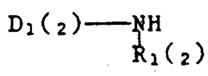

(31)

zunächst mit einem s-Triazin der Formel

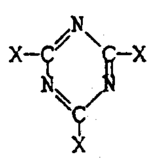

(28)

kondensiert, und die erhaltene Verbindung der Formel

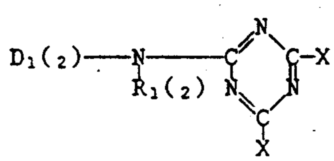

(32)

anschliessend mit einer Diaminoverbindung der Formel (29), worin E ein Rest der Formel (2) ist, im molaren Verhältnis 2:1 kondensiert.

**3.** Verfahren gemäss Anspruch 2, dadurch gekennzeichnet, dass man ein s-Triazin der Formel (28) mit einem Amin der Formel (30) und einem Farbstoff der Formel (31) kondensiert, und die erhaltene Triazinverbindung anschliessend mit einer Diaminoverbindung der Formel (29), worin E ein Rest der Formel (3a), (3b), (3c) oder (3d) ist, im molaren Verhältnis 2:1 kondensiert.

**4.** Verfahren gemäss Anspruch 1, dadurch gekennzeichnet, dass man ein s-Triazin der Formel (28) mit einer Komponente des Farbstoffes und gegebenenfalls einem Amin der Formel (30) kondensiert, dann mit einer zur Herstellung des Farbstoffes benötigten zweiten Komponente umsetzt, und die so erhaltene Triazinverbindung mit einer Diaminoverbindung der Formel (29), worin E ein Rest der Formel (2) bzw. ein Rest der Formel (3a), (3b), (3c) oder (3d) ist, im molaren Verhältnis 2:1 kondensiert.

**5.** Verfahren gemäss Anspruch 2, dadurch gekennzeichnet, dass man eine Diaminoverbindung der Formel

(33), 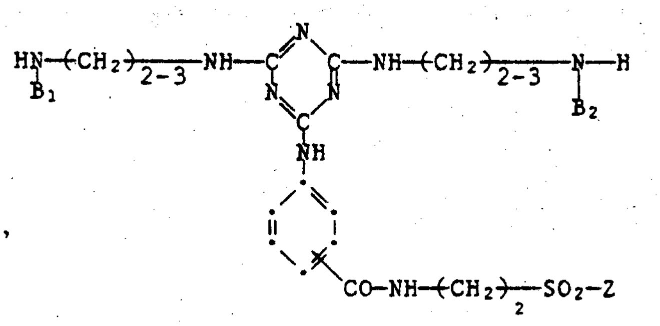

worin $B_1$, $B_2$, X und Z die in Anspruch 2 angegebenen Bedeutungen haben, verwendet.

**6.** Verfahren gemäss Anspruch 2, dadurch gekennzeichnet, dass man eine Diaminoverbindung der Formel

(34), 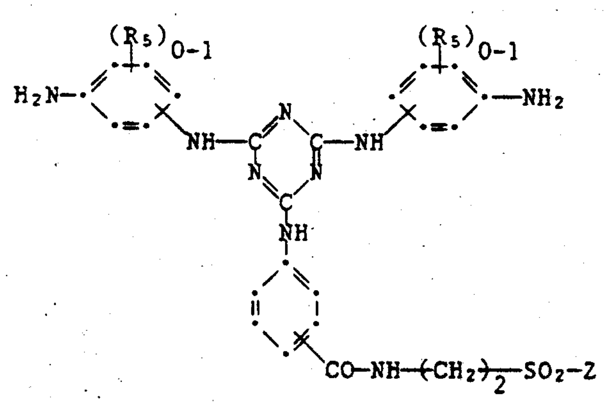

worin Z die in Anspruch 2 angegebene Bedeutung hat; und $R_5$ für 0 bis 1 Substituenten aus der Gruppe Methyl, Methoxy, Chlor und Sulfo steht, verwendet.

**7.** Verfahren gemäss Anspruch 3, dadurch gekennzeichnet, dass man als Amin der Formel (30) ein Amin der Formel

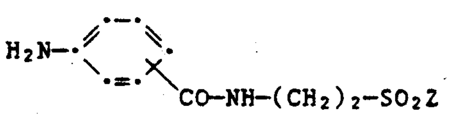 (35),

worin Z die in Anspruch 3 angegebene Bedeutung hat, verwendet, und, dass man eine Diaminoverbindung der Formel (29) verwendet, worin E ein Rest der Formel

$$-(CH_2)_{2-3}- \quad (36)$$

ist.

**8.** Verfahren gemäss Anspruch 3, dadurch gekennzeichnet, dass man als Amin der Formel (30) ein Amin der Formel

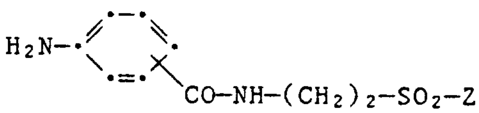

(35),

worin Z die in Anspruch 3 angegebene Bedeutung hat verwendet, und, dass man eine Diaminoverbindung der Formel (29) verwendet, worin E ein Rest der Formel

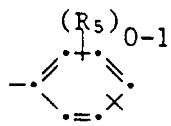

(37)

ist; und $R_5$ für 0 bis 1 Substituenten aus der Gruppe Methyl, Methoxy, Chlor oder Sulfo steht.

**9.** Verfahren gemäss einem der Ansprüche 1 bis 8, worin die Reste $D_1$-N($R_1$)- und -N($R_2$)-$D_2$ gleich sind.

**10.** Verfahren gemäss einem der Ansprüche 1, 2, 5, 6 und 9, worin X Fluor oder Chlor ist.

**11.** Verfahren gemäss einem der Ansprüche 1 bis 10, worin $R_1$ und $R_2$ Wasserstoff, Methyl, Aethyl oder $\beta$-Hydroxyäthyl sind.

**12.** Verfahren gemäss einem der Ansprüche 1 bis 5 und 8 bis 11, worin $B_1$ und $B_2$ Wasserstoff sind.

**13.** Verfahren gemäss einem der Ansprüche 1 bis 12, worin $D_1$ und $D_2$ je ein Rest eines Mono- oder Disazofarbstoffes ist.

**14.** Verfahren gemäss einem der Ansprüche 1 bis 12, worin $D_1$ und $D_2$ je ein Rest eines Metallkomplexazo-, Anthrachinon- oder Formazanfarbstoffes ist.

**15.** Verfahren gemäss Anspruch 13, worin $D_1$ und $D_2$ je ein Mono- oder Disazofarbstoffrest der Formel

D-N = N-(M-N = N)$_r$-K- (10a),

oder

-D-N = N-(M-N = N)$_r$-K (10b),

oder eines davon abgeleiteten Metallkomplexes; D der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)-oder Acetessigsäurearylamid-Reihe ist, wobei $D_1$, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; r = 0 oder 1 ist; und D, M und K zusammen mindestens zwei Sulfogruppen, vorzugsweise drei oder vier Sulfogruppen, enthalten.

**16.** Verfahren gemäss Anspruch 14, worin $D_1$ und $D_2$ je ein Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

**17.** Verfahren gemäss Anspruch 14, worin $D_1$ und $D_2$ je ein Rest eines Formazanfarbstoffes der Formel

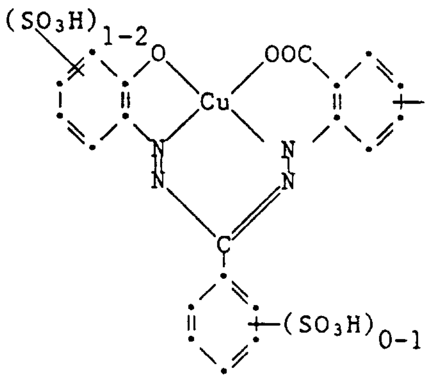

(11a) oder

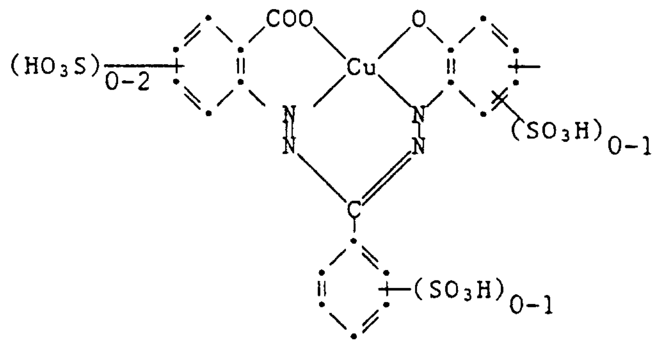

(11b),

ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

**18.** Verfahren gemäss Anspruch 15, worin $D_1$ und $D_2$ je ein Rest der Formel

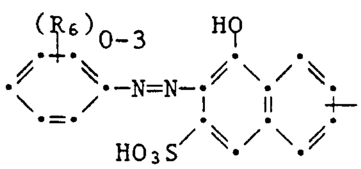

(12),

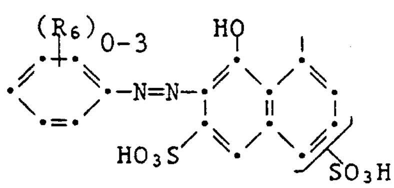

(13) oder

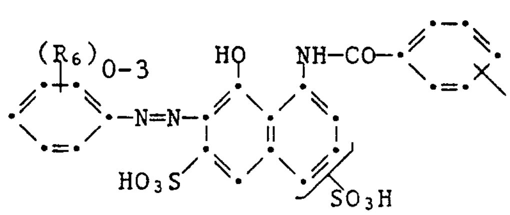

(14)

ist, worin $R_6$ für 0 bis 3 Substituenten aus der Gruppe $C_{1-4}$-Alkyl, $C_{1-4}$-Alkoxy, Halogen, Carboxy und Sulfo steht,

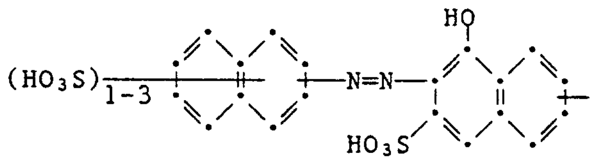

(15),

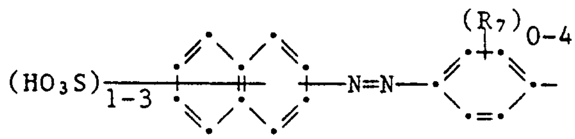

(16),

worin $R_7$ für 0 bis 4 Substituenten aus der Gruppe Halogen, Nitro, Cyan, Trifluormethyl, Sulfamoyl, Carbamoyl, $C_{1-4}$-Alkyl, $C_{1-4}$-Alkoxy, Amino, Acetylamino, Ureido, Hydroxy, Carboxy, Sulfomethyl und Sulfo unabhängig voneinander, steht,

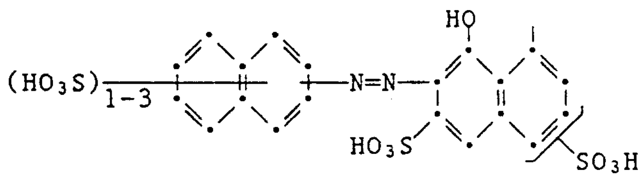

(17),

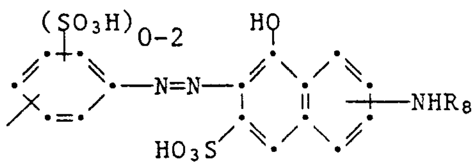

(18),

worin $R_8$ $C_{1-4}$-Alkanoyl oder Benzoyl ist,

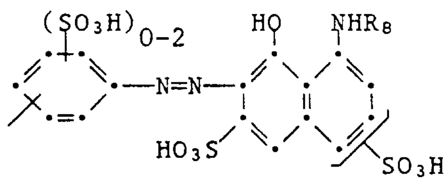

(19),

worin $R_8$ $C_{1-4}$-Alkanoyl oder Benzoyl ist,

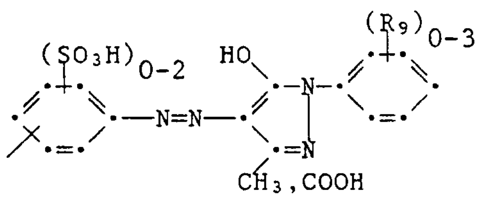

(20),

worin $R_9$ für 0 bis 3 Substituenten aus der Gruppe $C_{1-4}$-Alkyl, $C_{1-4}$-Alkoxy, Halogen, Carboxy und Sulfo steht,

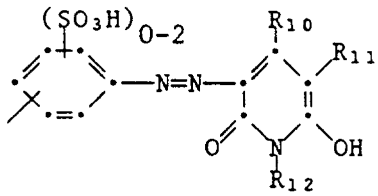

(21),

worin $R_{12}$ und $R_{10}$ unabhängig voneinander Wasserstoff, $C_{1-4}$-Alkyl oder Phenyl, und $R_{11}$ Wasserstoff, Cyano, Carbamoyl oder Sulfomethyl ist,

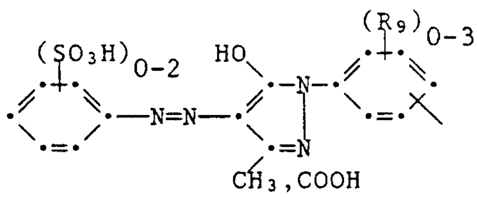

(22),

worin $R_9$ für 0 bis 3 Substituenten aus der Gruppe $C_{1-4}$-Alkyl, $C_{1-4}$-Alkoxy, Halogen, Carboxy und Sulfo steht,

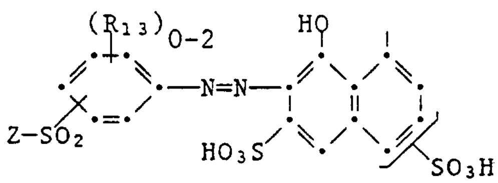

(23),

worin $R_{13}$ für 0 bis 2 Substituenten aus der Gruppe $C_{1-4}$-Alkyl, $C_{1-4}$-Alkoxy, Halogen, Carboxy und Sulfo steht; und Z $\beta$-Sulfatoäthyl, $\beta$-Thiosulfatoäthyl, $\beta$-Phosphatoäthyl, $\beta$-Acyloxyäthyl, $\beta$-Halogenäthyl oder Vinyl ist, oder

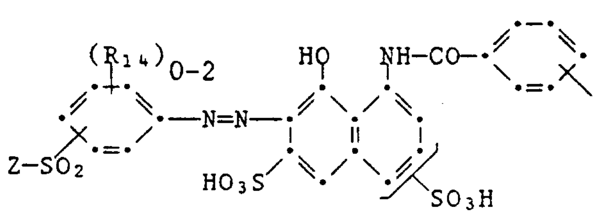

(24)

ist, worin $R_{14}$ für 0 bis 2 Substituenten aus der Gruppe $C_{1-4}$-Alkyl, $C_{1-4}$-Alkoxy, Halogen, Carboxy und Sulfo steht; und Z $\beta$-Sulfatoäthyl, $\beta$-Thiosulfatoäthyl, $\beta$-Phosphatoäthyl, $\beta$-Acyloxyäthyl, $\beta$-Halogenäthyl oder Vinyl ist.

**19.** Verfahren gemäss einem der Ansprüche 1 bis 4 und 9 bis 18, worin R ein Rest der Formel

$-NHCH_2CH_2SO_2-Z$ (25a)

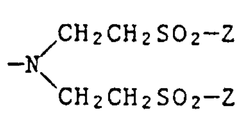

(25b)

$-NHCH_2CH_2OCH_2CH_2SO_2-Z$ (25c)

$-NHCH_2CH_2NHCH_2CH_2SO_2-Z$ (25d)

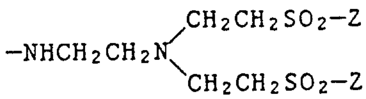

(25e)

oder

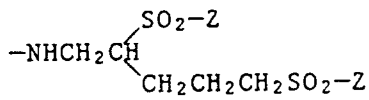

(25f)

ist, und Z β-Chloräthyl, Vinyl oder β-Sulfatoäthyl ist.

**20.** Verfahren gemäss Anspruch 14, worin $D_1$ und $D_2$ je der Rest eines Anthrachinonfarbstoffes der Formel

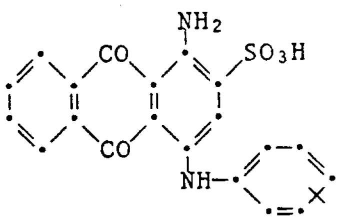

ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.

**21.** Verfahren gemäss Anspruch 15, worin $D_1$ und $D_2$ je ein Monoazofarbstoffrest der Formel

D-N = N-K- (10c)

oder

-D-N = N-K (10d)

oder eines davon abgeleiteten Kupferkomplexes ist, D ein Benzol- oder Naphthalinrest der durch Hydroxy, Chlor, Nitro, Methyl, Methoxy, Aethoxy, Carboxy, β-Chloräthylsulfonyl, Vinylsulfonyl, β-Sulfatoäthylsulfonyl und β-Chloräthylsulfonylbutyryl substituiert sein kann, ist, und K ein Benzol-, Naphthalin-, 3-Methyl-1-phenyl-pyrazolon- oder 3-Carboxy-1-phenylpyrazolonrest ist, der durch Amino, N-Methylamino, Methyl, Methoxy, Aethoxy, Acetylamino, Ureido, Benzoylamino, Hydroxy und Carboxy substituiert sein kann, und D und K zusammen mindestens zwei Sulfogruppen, vorzugsweise drei oder vier Sulfogruppen, enthalten.

**22.** Verwendung der gemäss Anspruch 1 erhaltenen Reaktivfarbstoffe zum Färben oder Bedrucken von cellulosehaltigen Fasermaterialien.

**23.** Verwendung gemäss Anspruch 22, zum Färben oder Bedrucken von Baumwolle.

## Claims

### Claims for the following Contracting States : BE, CH, DE, FR, GB, IT, LI

**1.** A reactive dye of the formula

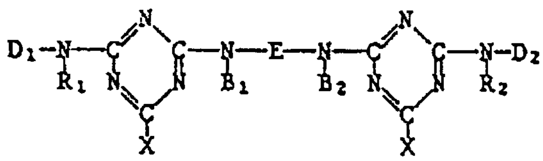

(1),

in which $D_1$ and $D_2$, independently of one another, are each a radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye; $R_1$, $R_2$, $B_1$ and $B_2$, independently of one another, are hydrogen or alkyl having 1 to 4 carbon atoms, which can be substituted by halogen, hydroxyl, cyano, $C_1$-$C_4$alkoxy, $C_1$-$C_4$alkoxy-carbonyl, carboxyl, sulfamoyl, sulfo or sulfato; X is fluorine, chlorine, bromine, sulfo, $C_1$-$C_4$alkylsulfonyl, phenylsulfonyl or carboxypyridinium, and E is a radical of the formula

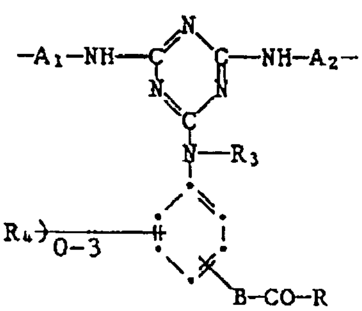

(2),

in which $A_1$ and $A_2$, independently of one another, are each a radical of the formula

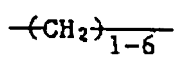

(3a)

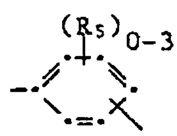

(3b)

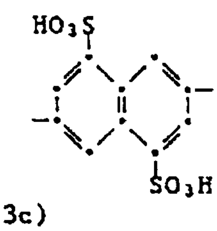

(3c)

or

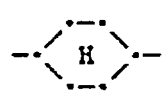

(3d);

or

X is a radical of the formula

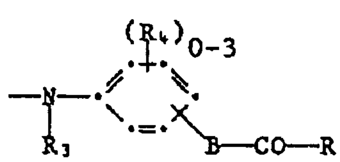

(4),

and E is a radical of the formula (3a), (3b), (3c) or (3d);
and $R_3$ is hydrogen or alkyl having 1 to 4 carbon atoms, which can be substituted by halogen, hydroxyl, cyano, $C_1$-$C_4$alkoxy, $C_1$-$C_4$alkoxycarbonyl, carboxyl, sulfamoyl, sulfo or sulfato; $R_4$ and $R_5$, independently of one another, are 0 to 3 substituents from the group consisting of $C_1$-$C_4$alkyl, $C_1$-$C_4$alkoxy, halogen, carboxyl and sulfo; B is a direct bond or a $-(CH_2)_n-$ or $-O-(CH2)_n-$ radical, n is 1 to 6; R is a radical of the formula

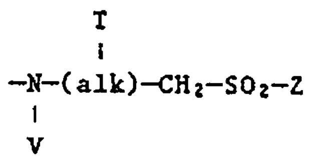
(5a),

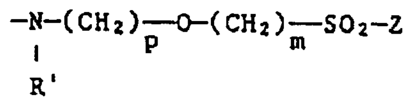
(5b),

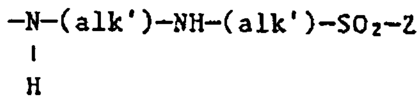
(5c),

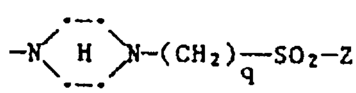
(5d),

Z is β-sulfatoethyl, β-thiosulfatoethyl, β-phosphatoethyl, β-acyloxyethyl, β-halogenoethyl or vinyl; alk is an alkylene radical having 1 to 6 carbon atoms or branched isomers thereof; T is hydrogen, chlorine, bromine, fluorine, hydroxyl, sulfato, acyloxy having 1 to 4 carbon atoms, cyano, carboxyl, alkoxycarbonyl having 1 to 5 carbon atoms, carbamoyl, or an $-SO_2$-Z radical in which Z is as defined above; V is hydrogen or an alkyl radical having 1 to 4 carbon atoms, which can be substituted by carboxyl or sulfo groups or derivatives thereof, alkoxy groups having 1 or 2 carbon atoms, halogen or hydroxyl; or is a radical

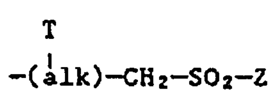
(5e)

in which Z, alk and T are as defined above; R' is hydrogen or $C_1$-$C_6$alkyl; alk', independently of one another, are polymethylene radicals having 2 to 6 carbon atoms or branched isomers thereof; and m is 1 to 6, p is 1 to 6 and q is 1 to 6.

2. A reactive dye according to claim 1 of the formula

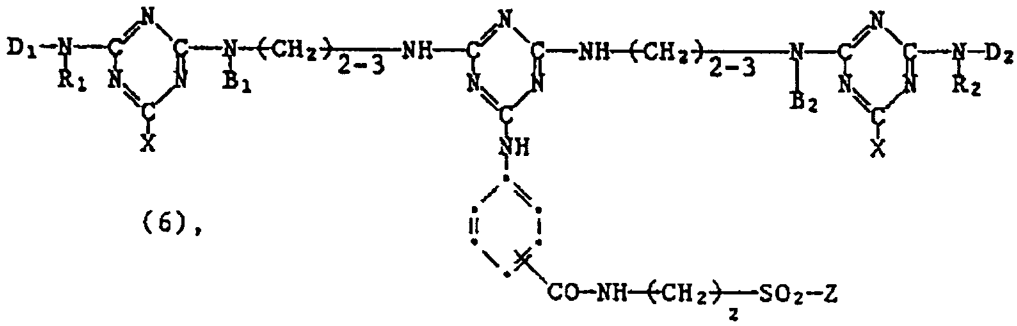

(6),

in which $D_1$, $D_2$, $R_1$, $R_2$, $B_1$, $B_2$, X and Z are as defined in claim 1.

3. A reactive dye according to claim 1 of the formula

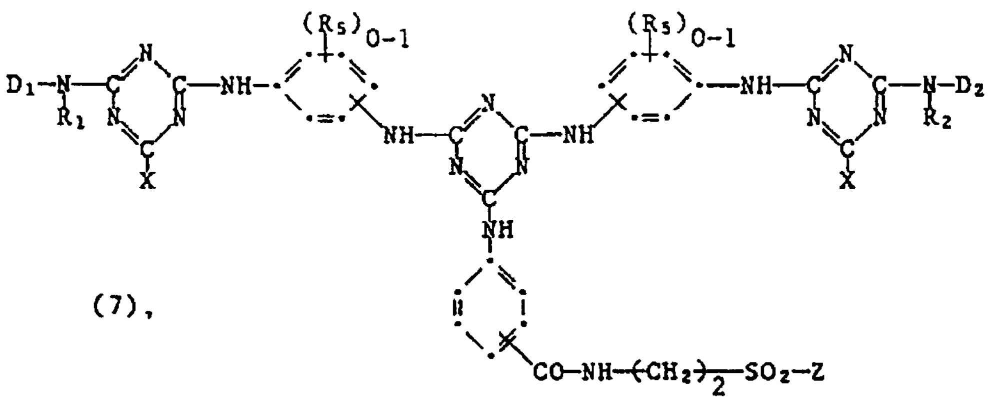

(7),

in which $D_1$, $D_2$, $R_1$, $R_2$, $B_1$, $B_2$, X and Z are as defined in claim 1; and $R_5$ is 0 to 1 substituents from the group consisting of methyl, methoxy, chlorine and sulfo.

4. A reactive dye according to claim 1 of the formula

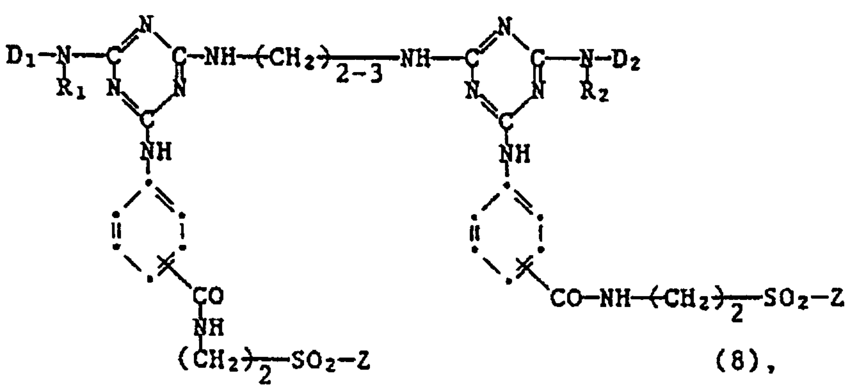

(8),

in which $D_1$, $D_2$, $R_1$, $R_2$ and Z are as defined in claim 1.

**5.** A reactive dye according to claim 1 of the formula

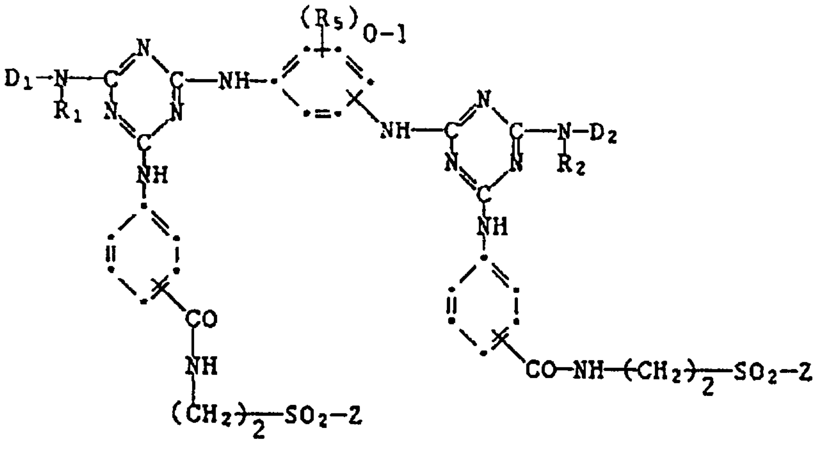

(9),

in which $D_1$, $D_2$, $R_1$, $R_2$ and Z are as defined in claim 1; and $R_5$ is 0 to 1 substituents from the group consisting of methyl, methoxy, chlorine or sulfo.

**6.** A reactive dye according to any one of claims 1 to 5, in which the radicals $-D_1-N(R_1)-$ and $-N(R_2)-D_2$ are identical.

**7.** A reactive dye according to any one of claims 1 to 3 and 6, in which X is fluorine or chlorine.

**8.** A reactive dye according to any one of claims 1 to 7, in which $R_1$ and $R_2$ are hydrogen, methyl, ethyl or $\beta$-hydroxyethyl.

**9.** A reactive dye according to any one of claims 1, 2 and 6 to 8, in which $B_1$ and $B_2$ are hydrogen.

**10.** A reactive dye according to any one of claims 1 to 9, in which $D_1$ and $D_2$ are each a radical of a monoazo or disazo dye.

**11.** A reactive dye according to any one of claims 1 to 9, in which $D_1$ and $D_2$ are each a radical of a metal complex azo, anthraquinone or formazan dye.

**12.** A reactive dye according to claim 10, in which $D_1$ and $D_2$ are each a monoazo or disazo dye radical of the formula

$D\text{-}N = N\text{-}(M\text{-}N = N)_r\text{-}K\text{-}$ (10a),

or

$\text{-}D\text{-}N = N\text{-}(M\text{-}N = N)_r\text{-}K$ (10b),

or of a metal complex derived therefrom; D is the radical of a disazo component of the benzene or naphthalene series, M is the radical of a middle component of the benzene or naphthalene series, and K is the radical of a coupling component of the benzene, naphthalene, pyrazolone, 6-hydroxy-2-pyridone or arylacetoacetamide series, where D, M and K can carry substituents which are customary for azo dyes, in particular hydroxyl, amino, methyl, ethyl, methoxy or ethoxy groups, substituted or unsubstituted alkanoylamino groups having 2 to 4 carbon atoms, substituted or unsubstituted benzoylamino groups or halogen atoms; r is 0 or 1; and D, M and K together contain at least two sulfo groups, preferably three or four sulfo groups.

**13.** A reactive dye according to claim 11, in which $D_1$ and $D_2$ are each a radical of a 1:1 copper complex azo dye of the benzene or naphthalene series and the copper atom is bound to one metallizable group

each on both sides in the ortho-position with respect to the azo bridge.

**14.** A reactive dye according to claim 11, in which $D_1$ and $D_2$ are each a radical of a formazan dye of the formula

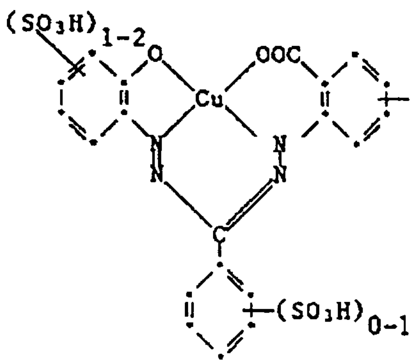

(11a)

or

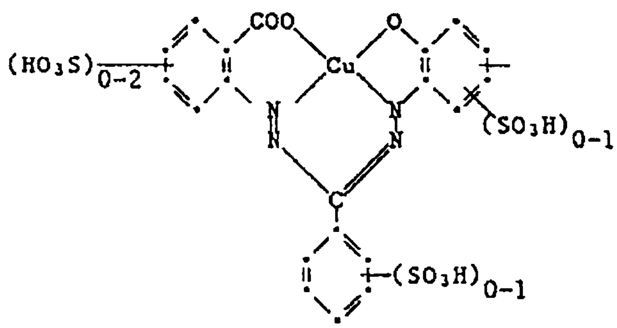

(11b)

in which the benzene rings can be further substituted by alkyl having 1 to 4 carbon atoms, alkoxy having 1 to 4 carbon atoms, alkylsulfonyl having 1 to 4 carbon atoms, halogen or carboxyl.

**15.** A reactive dye according to claim 12, in which $D_1$ and $D_2$ are each a radical of the formula

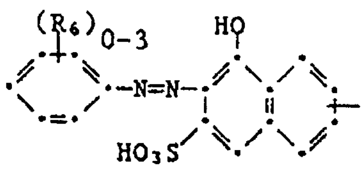

(12),

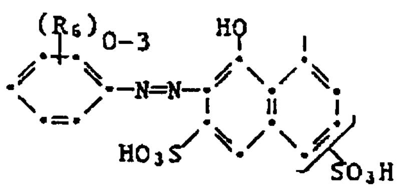

(13) or

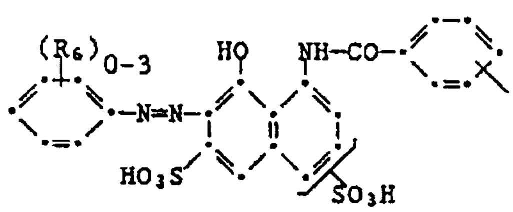

(14)

in which $R_6$ is 0 to 3 substituents from the group consisting of $C_1$-$C_4$-alkyl, $C_1$-$C_4$alkoxy, halogen, carboxyl and sulfo,

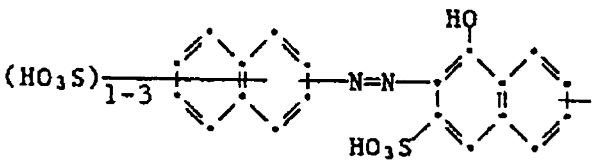

(15),

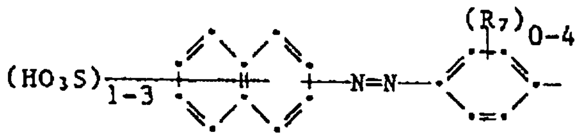

(16),

in which $R_7$ is 0 to 4 substituents from the group consisting of halogen, nitro, cyano, trifluoromethyl, sulfamoyl, carbamoyl, $C_1$-$C_4$alkyl, $C_1$-$C_4$alkoxy, amino, acetylamino, ureido, hydroxyl, carboxyl, sulfomethyl and sulfo, independently of one another,

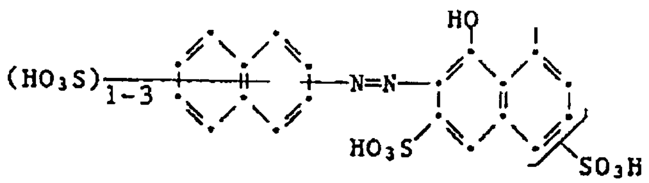

(17),

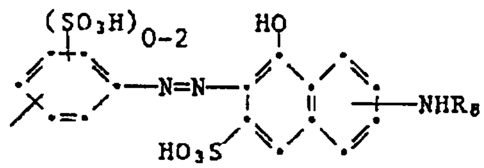

(18),

in which $R_8$ is $C_1$-$C_4$alkanoyl or benzoyl,

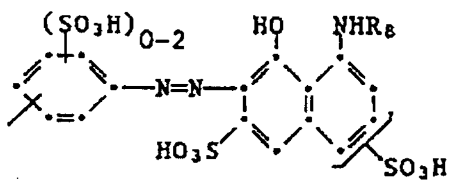

(19),

in which $R_8$ is $C_1$-$C_4$alkanoyl or benzoyl,

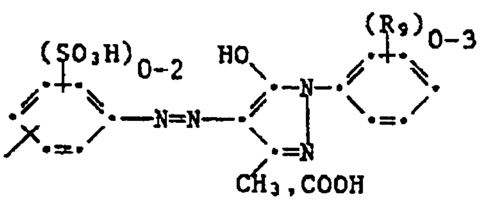

(20),

in which $R_9$ is 0 to 3 substituents from the group consisting of $C_1$-$C_4$alkyl, $C_1$-$C_4$alkoxy, halogen, carboxyl and sulfo,

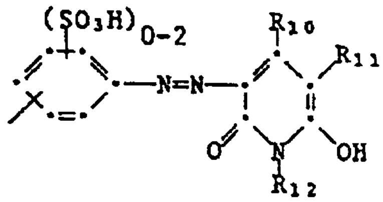

(21),

in which $R_{12}$ and $R_{10}$, independently of one another, are hydrogen, $C_1$-$C_4$alkyl or phenyl, and $R_{11}$ is hydrogen, cyano, carbamoyl or sulfomethyl,

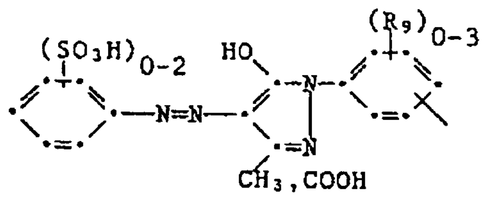

(22),

in which $R_9$ is 0 to 3 substituents from the group consisting of $C_1$-$C_4$-alkyl, $C_1$-$C_4$alkoxy, halogen, carboxyl and sulfo,

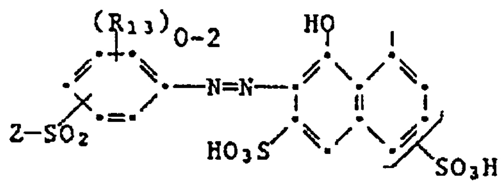

(23),

in which $R_{13}$ is 0 to 2 substituents from the group consisting of $C_1$-$C_4$alkyl, $C_1$-$C_4$alkoxy, halogen, carboxyl and sulfo; and Z is $\beta$-sulfatoethyl, $\beta$-thiosulfatoethyl, $\beta$-phosphatoethyl, $\beta$-acyloxyethyl, $\beta$-halogenoethyl or vinyl, or

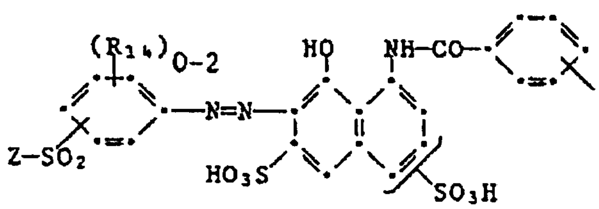

(24)

in which $R_{14}$ is 0 to 2 substituents from the group consisting of $C_1$-$C_4$alkyl, $C_1$-$C_4$alkoxy, halogen, carboxyl and sulfo; and Z is $\beta$-sulfatoethyl, $\beta$-thiosulfatoethyl, $\beta$-phosphatoethyl $\beta$-acyloxyethyl, $\beta$-halogenoethyl or vinyl.

**16.** A reactive dye according to any one of claims 1 and 6 to 15, in which R is a radical of the formula

$-NHCH_2CH_2SO_2-Z$ (25a)

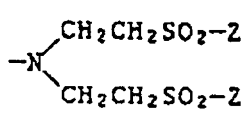

(25b)

$-NHCH_2CH_2OCH_2CH_2SO_2-Z$ (25c)

$-NHCH_2CH_2NHCH_2CH_2SO_2-Z$ (25d)

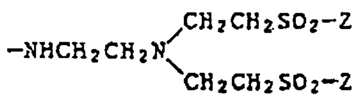 (25e)

or 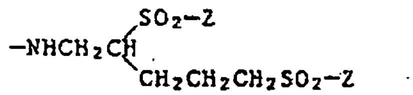 (25f)

and Z is β-chloroethyl, vinyl or β-sulfatoethyl.

**17.** A reactive dye according to claim 11, in which $D_1$ and $D_2$ are each the radical of an anthraquinone dye of the formula

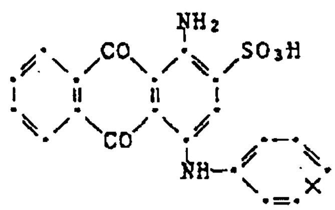

in which the anthraquinone ring can be substituted by another sulfo group and the phenyl radical by alkyl having 1 to 4 carbon atoms, alkoxy having 1 to 4 carbon atoms, halogen, carboxyl or sulfo, and the dye preferably contains at least 2 sulfo groups.

**18.** A reactive dye according to claim 12, in which $D_1$ and $D_2$ are each a monoazo dye radical of the formula

D-N = N-K- (10c)

or

-D-N = N-K (10d)

or of a copper complex derived therefrom, D is a benzene or naphthalene radical, which can be substituted by hydroxyl, chlorine, nitro, methyl, methoxy, ethoxy, carboxyl, β-chloroethylsulfonyl, vinylsulfonyl, β-sulfatoethylsulfonyl and β-chloroethylsulfonylbutyryl, K is a benzene, naphthalene, 3-methyl-1-phenylpyrazolone or 3-carboxy-1-phenylpyrazolone radical, which can be substituted by amino, N-methylamino, methyl, methoxy, ethoxy, acetylamino, ureido, benzoylamino, hydroxyl and carboxyl, and D and K together contain at least two sulfo groups, preferably three or four sulfo groups.

**19.** A process for the preparation of reactive dyes of the formula (1) according to claim 1, which comprises reacting dyes of the formulae

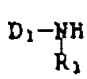 (26) and 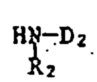 (27)

or dye precursors, two equivalents of an s-triazine of the formula

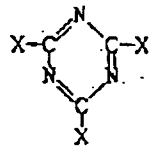

(28)

and one equivalent of a diamino compound of the formula

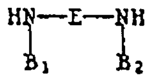

(29)

and, if desired, two equivalents of an amine of the formula

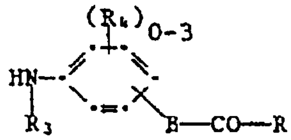

(30)

in any desired order with one another, $D_1$, $D_2$, $R_1$, $R_2$, X, $B_1$, $B_2$, E, $R_3$, $R_4$, B and R being as defined in claim 1, or, in the case where dye precursors are used, converting the intermediates obtained into the desired final dyes and, if desired, subsequently carrying out another conversion reaction.

**20.** A process according to claim 19, which comprises condensing a dye of the formula

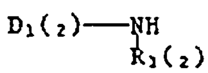

(31)

first with an s-triazine of the formula

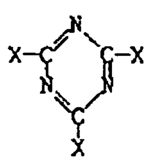

(28)

and then condensing the resulting compound of the formula

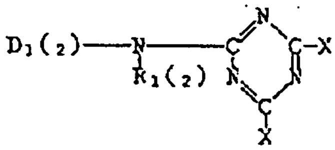

(32)

with a diamino compound of the formula (29), in which E is a radical of the formula (2), in a molar ratio of 2:1.

**21.** A process according to claim 20, which comprises condensing an s-triazine of the formula (28) with an amine of the formula (30) and a dye of the formula (31) and then condensing the resulting triazine compound with a diamino compound of the formula (29), in which E is a radical of the formula (3a), (3b), (3c) or (3d), in a molar ratio of 2:1.

**22.** A process according to claim 19, which comprises condensing an s-triazine of the formula (28) with a component of the dye and, if desired, an amine of the formula (30), then reacting the product with a second component required for the preparation of the dye, and condensing the triazine compound thus obtained with a diamino compound of the formula (29), in which E is a radical of the formula (2) or a radical of the formula (3a), (3b), (3c) or (3d), in a molar ratio of 2:1.

**23.** Use of the reactive dyes according to claim 1, for the dyeing or printing of cellulose-containing fibre materials.

**24.** Use according to claim 23, for the dyeing or printing of cotton.

**Claims for the following Contracting State : ES**

**1.** A process for the preparation of reactive dyes of the formula

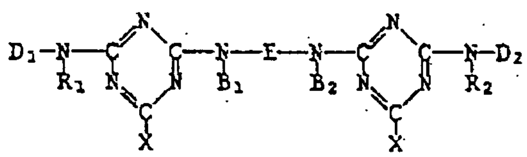

(1),

in which $D_1$ and $D_2$, independently of one another, are each a radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye; $R_1$, $R_2$, $B_1$ and $B_2$, independently of one another, are hydrogen or alkyl having 1 to 4 carbon atoms, which can be substituted by halogen, hydroxyl, cyano, $C_1$-$C_4$alkoxy, $C_1$-$C_4$alkoxycarbonyl, carboxyl, sulfamoyl, sulfo or sulfato; X is fluorine, chlorine, bromine, sulfo, $C_1$-$C_4$alkylsulfonyl, phenylsulfonyl or carboxypyridinium, and E is a radical of the formula

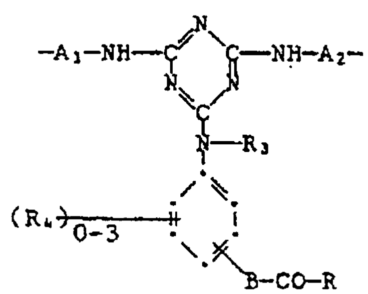

(2),

in which $A_1$ and $A_2$, independently of one another, are each a radical of the formula

$-(CH_2)_{1-6}-$ (3a)

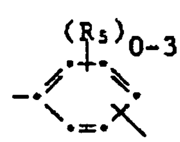

(3b)

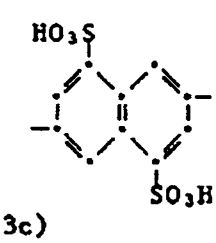

(3c)

or

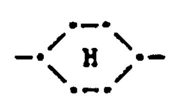

(3d);

or
X is a radical of the formula

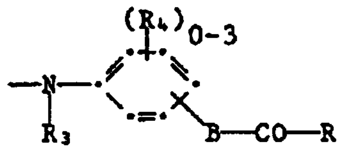

(4),

and E is a radical of the formula (3a), (3b), (3c) or (3d); and $R_3$ is hydrogen or alkyl having 1 to 4 carbon atoms, which can be substituted by halogen, hydroxyl, cyano, $C_1$-$C_4$alkoxy, $C_1$-$C_4$alkoxy-carbonyl, carboxyl, sulfamoyl, sulfo or sulfato; $R_4$ and $R_5$, independently of one another, are 0 to 3 substituents from the group consisting of $C_1$-$C_4$alkyl, $C_1$-$C_4$alkoxy, halogen, carboxyl and sulfo; B is a direct bond or a

$$-(CH_2)_n- \quad or \quad -O-(CH_2)_n-$$

radical, n is 1 to 6; R is a radical of the formula

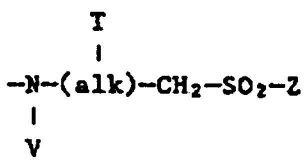

(5a),

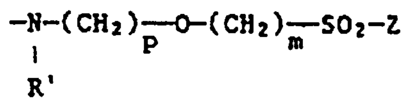

(5b),

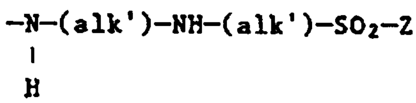

(5c),

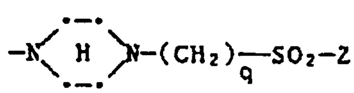

(5d),

Z is β-sulfatoethyl, β-thiosulfatoethyl, β-phosphatoethyl, β-acyloxyethyl, β-halogenoethyl or vinyl; alk is an alkylene radical having 1 to 6 carbon atoms or branched isomers thereof; T is hydrogen, chlorine, bromine, fluorine, hydroxyl, sulfato, acyloxy having 1 to 4 carbon atoms, cyano, carboxyl, alkoxycarbonyl having 1 to 5 carbon atoms, carbamoyl, or an $-SO_2-Z$ radical in which Z is as defined above; V is hydrogen or an alkyl radical having 1 to 4 carbon atoms, which can be substituted by carboxyl or sulfo groups or derivatives thereof, alkoxy groups having 1 or 2 carbon atoms, halogen or hydroxyl; or is a radical

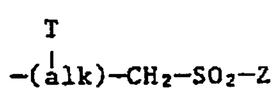

(5e)

in which Z, alk and T are as defined above; R' is hydrogen or $C_1$-$C_6$alkyl; alk', independently of one another, are polymethylene radicals having 2 to 6 carbon atoms or branched isomers thereof; and m is 1 to 6, p is 1 to 6 and q is 1 to 6, which comprises reacting dyes of the formulae

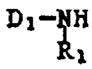 (26) and 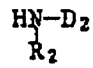 (27)

or dye precursors, two equivalents of an s-triazine of the formula

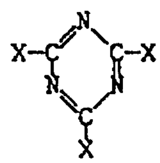 (28)

and one equivalent of a diamino compound of the formula

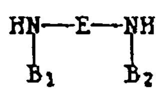 (29)

and, if desired, two equivalents of an amine of the formula

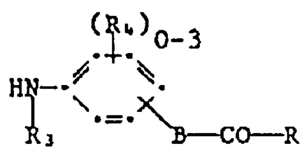 (30)

in any desired order with one another, $D_1$, $D_2$, $R_1$, $R_2$, X, $B_1$, $B_2$, E, $R_3$, $R_4$, B and R being as defined under formula (1), or, in the case where dye precursors are used, converting the intermediates obtained into the desired final dyes and, if desired, subsequently carrying out another conversion reaction.

**2.** A process according to claim 1, which comprises condensing a dye of the formula

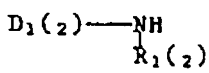 (31)

first with an s-triazine of the formula

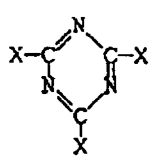 (28)

and then condensing the resulting compound of the formula

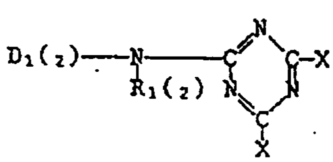 (32)

with a diamino compound of the formula (29), in which E is a radical of the formula (2), in a molar ratio of 2:1.

3. A process according to claim 2, which comprises condensing an s-triazine of the formula (28) with an amine of the formula (30) and a dye of the formula (31) and then condensing the resulting triazine compound with a diamino compound of the formula (29), in which E is a radical of the formula (3a), (3b), (3c) or (3d), in a molar ratio of 2:1.

4. A process according to claim 1, which comprises condensing an s-triazine of the formula (28) with a component of the dye and, if desired, an amine of the formula (30), then reacting the product with a second component required for the preparation of the dye, and condensing the triazine compound thus obtained with a diamino compound of the formula (29), in which E is a radical of the formula (2) or a radical of the formula (3a), (3b), (3c) or (3d), in a molar ratio of 2:1.

5. A process according to claim 2, which comprises using a diamino compound of the formula

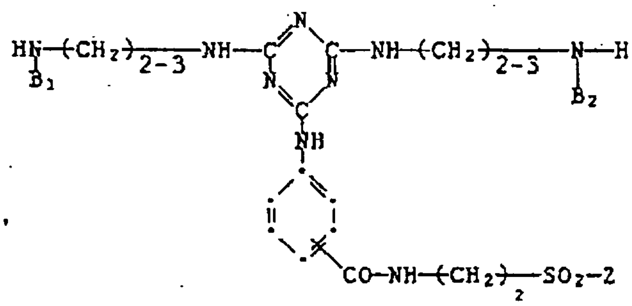

(33),

in which $B_1$, $B_2$, X and Z are as defined in claim 2.

6. A process according to claim 2, which comprises using a diamino compound of the formula

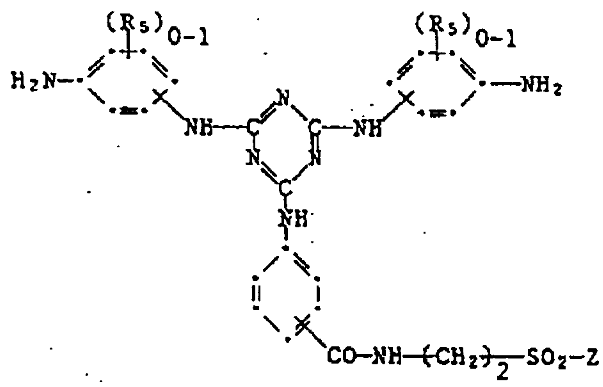

(34),

in which Z is as defined in claim 2; and $R_5$ is 0 to 1 substituents from the group consisting of methyl, methoxy, chlorine and sulfo.

7. A process according to claim 3, which comprises using as the amine of the formula (30) an amine of the formula

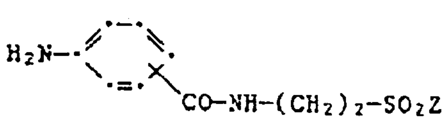

(35),

in which Z is as defined in claim 3 and comprises using a diamino compound of the formula (29) in which E is a radical of the formula

$$-(CH_2)_{2-3}- \quad (36).$$

**8.** A process according to claim 3, which comprises using as the amine of the formula (30) an amino of the formula

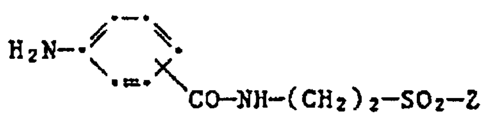

(35),

in which Z is as defined in claim 3, and comprises using a diamino compound of the formula (29) in which E is a radical of the formula

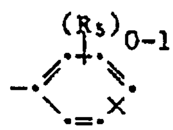

(37);

and $R_5$ is 0 to 1 substituents from the group consisting of methyl, methoxy, chlorine or sulfo.

**9.** A process according to any one of claims 1 to 8, in which the radicals $D_1$-N($R_1$)- and -N($R_2$)-$D_2$ are identical.

**10.** A process according to any one of claims 1, 2, 5, 6 and 9, in which X is fluorine or chlorine.

**11.** A process according to any one of claims 1 to 10, in which $R_1$ and $R_2$ are hydrogen, methyl, ethyl or $\beta$-hydroxyethyl.

**12.** A process according to any one of claims 1 to 5 and 8 to 11, in which $B_1$ and $B_2$ are hydrogen.

**13.** A process according to any one of claims 1 to 12, in which $D_1$ and $D_2$ are each a radical of a monoazo or disazo dye.

**14.** A process according to any one of claims 1 to 12, in which $D_1$ and $D_2$ are each a radical of a metal complex azo, anthraquinone or formazan dye.

**15.** A reactive dye according to claim 13, in which $D_1$ and $D_2$ are each a monoazo or disazo dye radical of the formula

$$D-N=N-(M-N=N)_r-K- \quad (10a),$$

or

$$-D-N=N-(M-N=N)_r-K \quad (10b),$$

or of a metal complex derived therefrom; D is the radical of a disazo component of the benzene or naphthalene series, M is the radical of a middle component of the benzene or naphthalene series, and K is the radical of a coupling component of the benzene, naphthalene, pyrazolone, 6-hydroxy-2-pyridone or arylacetoacetamide series, where D, M and K can carry substituents which are customary for azo dyes, in particular hydroxyl, amino, methyl, ethyl, methoxy or ethoxy groups, substituted or

unsubstituted alkanoylamino groups having 2 to 4 carbon atoms, substituted or unsubstituted benzoylamino groups or halogen atoms; r is 0 or 1; and D, M and K together contain at least two sulfo groups, preferably three or four sulfo groups.

**16.** A process according to claim 14, in which $D_1$ and $D_2$ are each a radical of a 1:1 copper complex azo dye of the benzene or naphthalene series and the copper atom is bound to one metallizable group each on both sides in the ortho-position with respect to the azo bridge.

**17.** A process according to claim 14, in which $D_1$ and $D_2$ are each a radical of a formazan dye of the formula

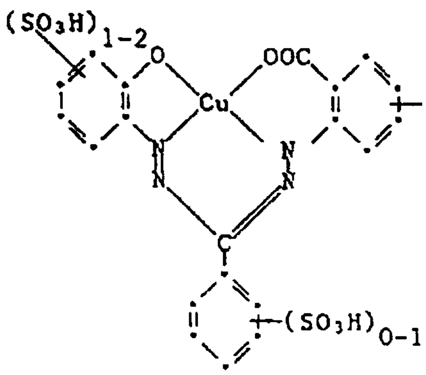

(11a)

or

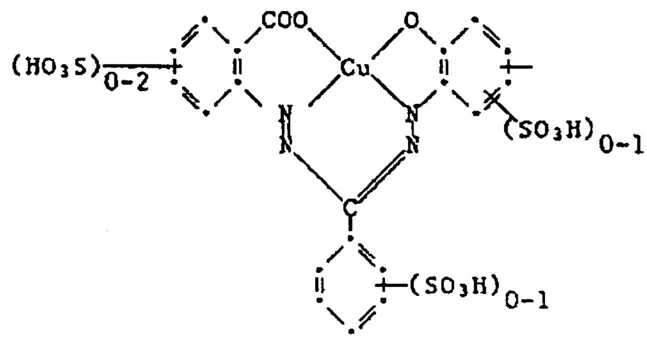

(11b)

in which the benzene rings can be further substituted by alkyl having 1 to 4 carbon atoms, alkoxy having 1 to 4 carbon atoms, alkylsulfonyl having 1 to 4 carbon atoms, halogen or carboxyl.

**18.** A process according to claim 15, in which $D_1$ and $D_2$ are each a radical of the formula

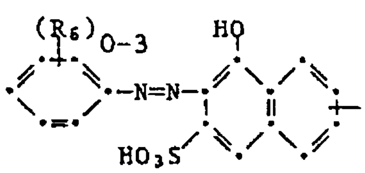

(12),

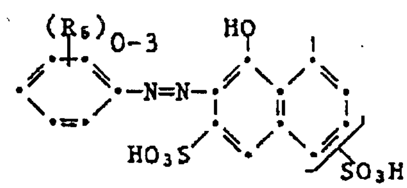

(13) or

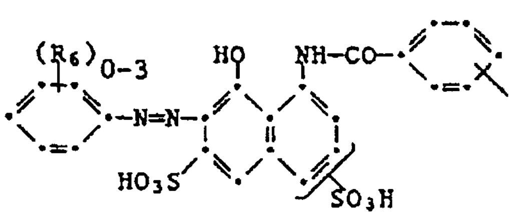

(14)

in which $R_6$ is 0 to 3 substituents from the group consisting of $C_1$-$C_4$-alkyl, $C_1$-$C_4$alkoxy, halogen,

carboxyl and sulfo,

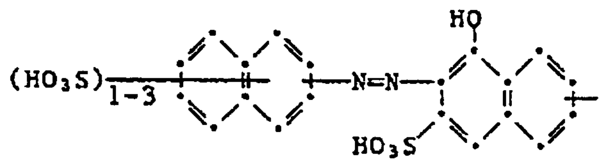
(15),

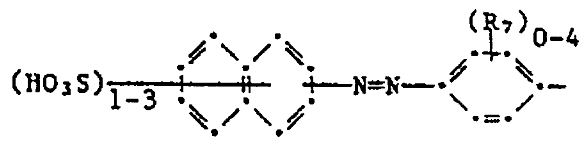
(16),

in which $R_7$ is 0 to 4 substituents from the group consisting of halogen, nitro, cyano, trifluoromethyl, sulfamoyl, carbamoyl, $C_1$-$C_4$alkyl, $C_1$-$C_4$-alkoxy, amino, acetylamino, ureido, hydroxyl, carboxyl, sulfomethyl and sulfo, independently of one another,

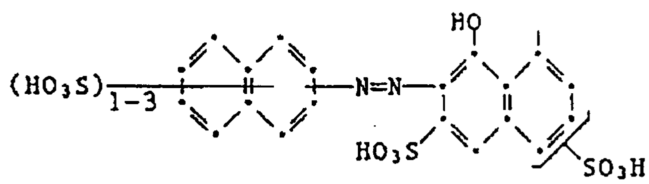
(17),

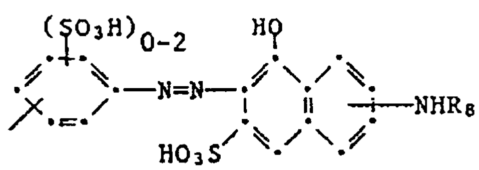
(18),

in which $R_8$ is $C_1$-$C_4$alkanoyl or benzoyl,

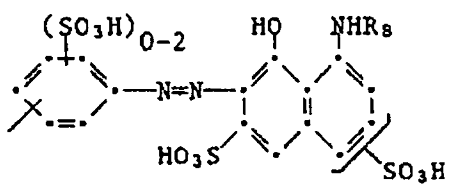
(19),

in which $R_8$ is $C_1$-$C_4$alkanoyl or benzoyl,

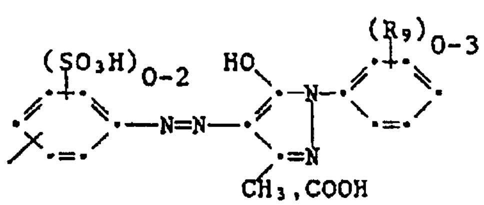
(20),

in which $R_9$ is 0 to 3 substituents from the group consisting of $C_1$-$C_4$-alkyl, $C_1$-$C_4$alkoxy, halogen, carboxyl and sulfo,

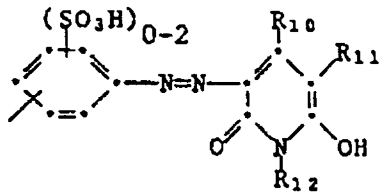

(21),

in which $R_{12}$ and $R_{10}$, independently of one another, are hydrogen, $C_1$-$C_4$alkyl or phenyl, and $R_{11}$ is hydrogen, cyano, carbamoyl or sulfomethyl,

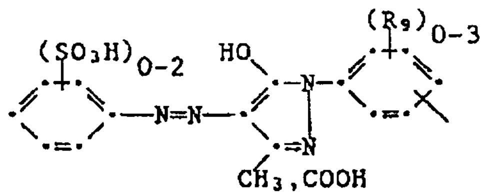

(22),

in which $R_9$ is 0 to 3 substituents from the group consisting of $C_1$-$C_4$-alkyl, $C_1$-$C_4$alkoxy, halogen, carboxyl and sulfo,

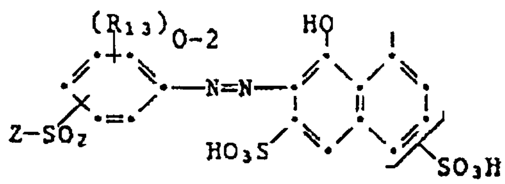

(23),

in which $R_{13}$ is 0 to 2 substituents from the group consisting of $C_1$-$C_4$alkyl, $C_1$-$C_4$alkoxy, halogen, carboxyl and sulfo; and Z is $\beta$-sulfatoethyl, $\beta$-thiosulfatoethyl, $\beta$-phosphatoethyl, $\beta$-acyloxyethyl, $\beta$-halogenoethyl or vinyl, or

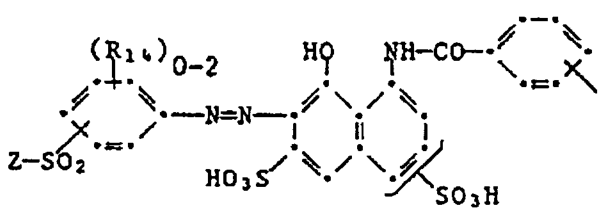

(24)

in which $R_{14}$ is 0 to 2 substituents from the group consisting of $C_1$-$C_4$alkyl, $C_1$-$C_4$alkoxy, halogen, carboxyl and sulfo; and Z is $\beta$-sulfatoethyl, $\beta$-thiosulfatoethyl, $\beta$-phosphatoethyl, $\beta$-acyloxyethyl, $\beta$-halogenoethyl or vinyl.

**19.** A process according to any one of claims 1 to 4 and 9 to 18, in which R is a radical of the formula

$-NHCH_2CH_2SO_2-Z$ (25a)

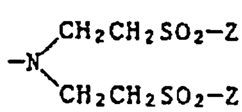

(25b)

$-NHCH_2CH_2OCH_2CH_2SO_2-Z$ (25c)

$-NHCH_2CH_2NHCH_2CH_2SO_2-Z$ (25d)

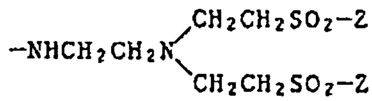 (25e)

or 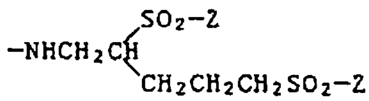 (25f)

and Z is β-chloroethyl, vinyl or β-sulfatoethyl.

**20.** A process according to claim 14, in which $D_1$ and $D_2$ are each the radical of an anthraquinone dye of the formula

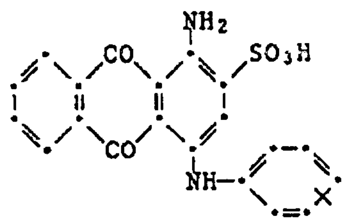

in which the anthraquinone ring can be substituted by another sulfo group and the phenyl radical by alkyl having 1 to 4 carbon atoms, alkoxy having 1 to 4 carbon atoms, halogen, carboxyl or sulfo, and the dye preferably contains at least 2 sulfo groups.

**21.** A process according to claim 15, in which $D_1$ and $D_2$ are each a monoazo dye radical of the formula

D-N = N-K- (10c)

or

-D-N = N-K (10d)

or of a copper complex derived therefrom, D is a benzene or naphthalene radical, which can be substituted by hydroxyl, chlorine, nitro, methyl, methoxy, ethoxy, carboxyl, β-chloroethylsulfonyl, vinylsulfonyl, β-sulfatoethylsulfonyl and β-chloroethylsulfonylbutyryl, K is a benzene, naphthalene, 3-methyl-1-phenylpyrazolone or 3-carboxy-1-phenylpyrazolone radical, which can be substituted by amino, N-methylamino, methyl, methoxy, ethoxy, acetylamino, ureido, benzoylamino, hydroxyl and carboxyl, and D and K together contain at least two sulfo groups, preferably three or four sulfo groups.

**22.** Use of the reactive dyes obtained according to claim 1, for the dyeing or printing of cellulose-containing fibre materials.

**23.** Use according to claim 22, for the dyeing or printing of cotton.

**Revendications**

**Revendications pour les Etats contractants suivants : BE CH DE FR GB IT LI**

1. Colorants réactifs de formule :

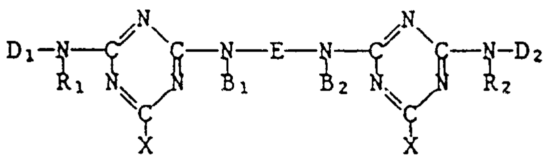

(1)

dans laquelle $D_1$ et $D_2$ représentent chacun, indépendamment l'un de l'autre, le résidu d'un colorant monoazoïque, polyazoïque, azoïque à métal complexé, anthraquinonique, phtalocyanine, formazan, azométhinique, dioxazinique, phénazinique, stilbénique, triphénylméthane, xanthène, thioxanthone, nitroarylique, naphtoquinonique, pyrènequinonique ou pérylènetétracarbimide, $R_1$, $R_2$, $B_1$ et $B_2$ représentent chacun, indépendamment l'un de l'autre, un atome d'hydrogène ou un groupe alkyle comportant de 1 à 4 atomes de carbone qui peut être substitué par halogéno, hydroxy, cyano, alcoxy en $C_1$-$C_4$, (alcoxy en $C_1$-$C_4$)-carbonyle, carboxy, sulfamyle, sulfo ou sulfato, X représente un atome de fluor, de chlore ou de brome ou un groupe sulfo, alkylsulfonyle en $C_1$-$C_4$, phénylsulfonyle ou carboxypyridinium, et E représente un reste de formule :

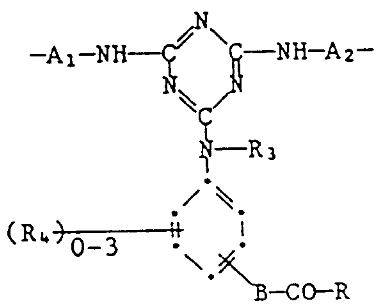

(2)

dans laquelle $A_1$ et $A_2$ représentent chacun, indépendamment l'un de l'autre, un groupe de formule :

$-(CH_2)_{1-6}-$ (3a)

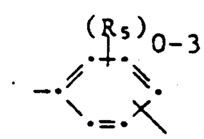

(3b)

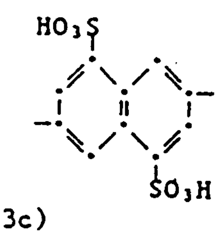

(3c) ou

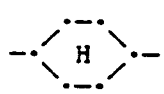

(3d);

ou bien X représente un reste de formule :

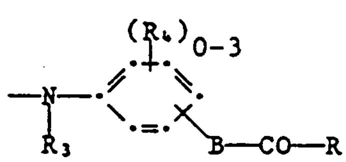

(4)

et E représente un reste de formule (3a), (3b), (3c) ou (3d),

et $R_3$ représente un atome d'hydrogène ou un groupe alkyle comportant de 1 à 4 atomes de carbone, qui peut être substitué par halogéno, hydroxy, cyano, alcoxy en $C_1$-$C_4$,(alcoxy en $C_1$-$C_4$)-carbonyle, carboxy, sulfamyle, sulfo ou sulfato, $R_4$ et $R_5$ représentent chacun, indépendamment l'un de l'autre, de 0 à 3 substituants choisis dans le groupe constitué par les atomes d'halogène et les groupes alkyle en $C_1$-$C_4$, alcoxy en $C_1$-$C_4$, carboxy et sulfo, B représente une liaison directe ou un reste $-(CH_2)_n-$ ou $-O-(CH_2)_n-$, n vaut de 1 à 6, R représente un reste de formule :

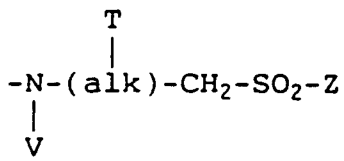

(5a)

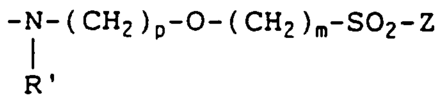

(5b)

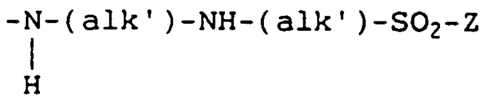

(5c)

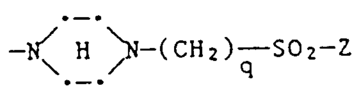

(5d)

Z représente un groupe β-sulfatoéthyle, β-thiosulfatoéthyle, β-phosphatoéthyle, β-acyloxyéthyle, β-halogénoéthyle ou vinyle, alk représente un groupe alkylène comportant de 1 à 6 atomes de carbone, ou un isomère ramifié d'un tel groupe, T représente un atome d'hydrogène, de chlore, de brome ou de fluor, ou un groupe hydroxy, sulfato, acyloxy comportant de 1 à 4 atomes de carbone, cyano, carboxy, alcoxycarbonyle comportant de 1 à 5 atomes de carbone ou carbamyle, ou encore un reste $-SO_2-Z$, où Z a la signification indiquée ci-dessus,

V représente un atome d'hydrogène ou un groupe alkyle comportant de 1 à 4 atomes de carbone, qui peut être substitué par des groupes carboxy ou sulfo ou leurs dérivés, par des groupes alcoxy comportant 1 ou 2 atomes de carbone, par des atomes d'halogène ou par des groupes hydroxy, ou bien un reste :

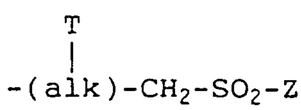

(5e)

dans laquelle Z, alk et T ont les significations indiquées ci-dessus,

R' représente un atome d'hydrogène ou un groupe alkyle en $C_1$-$C_6$, alk' représente, indépendamment les uns des autres, des groupes polyméthylène comportant de 2 à 6 atomes de carbone ou leurs isomères ramifiés, et m vaut de 1 à 6, p vaut de 1 à 6 et q vaut de 1 à 6.

2. Colorants réactifs conformes à la revendication 1, de formule :

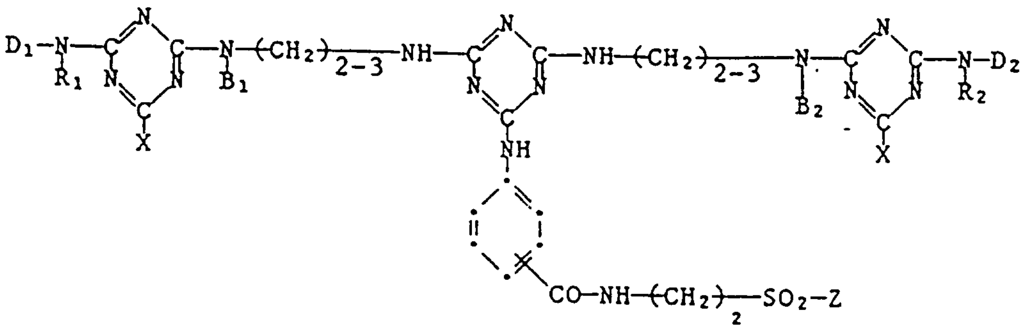

(6)

dans laquelle $D_1$, $D_2$, $R_1$, $R_2$, $B_1$, $B_2$, X et Z ont les significations indiquées dans la revendication 1.

3. Colorants réactifs conformes à la revendication 1, de formule :

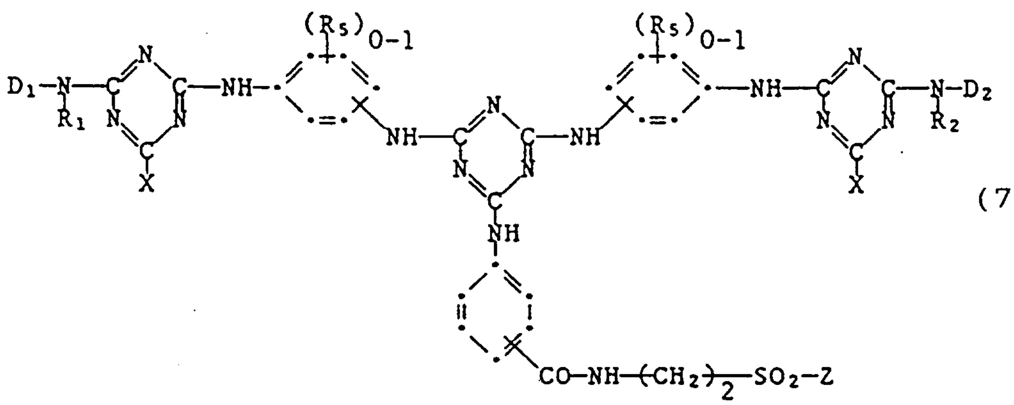

(7)

dans laquelle $D_1$, $D_2$, $R_1$, $R_2$, $B_1$, $B_2$, X et Z ont les significations indiquées dans la revendication 1, et $R_5$ représente de 0 à 1 substituant choisi parmi méthyle, méthoxy, chloro et sulfo.

4. Colorants réactifs conformes à la revendication 1, de formule :

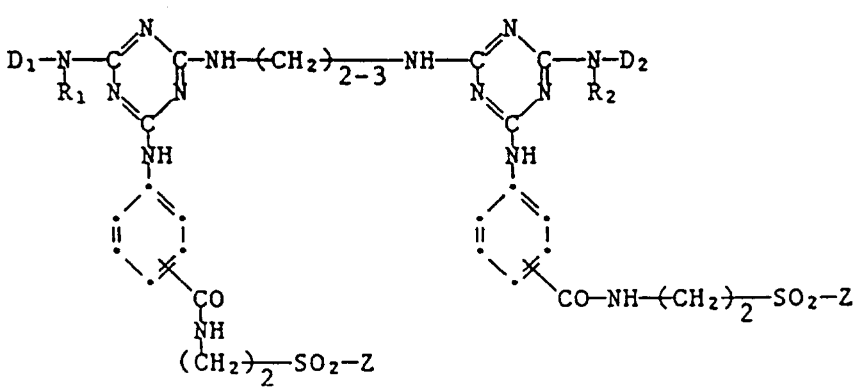

(8)

dans laquelle $D_1$, $D_2$, $R_1$, $R_2$ et Z ont les significations indiquées dans la revendication 1.

**5.** Colorants réactifs conformes à la revendication 1, de formule :

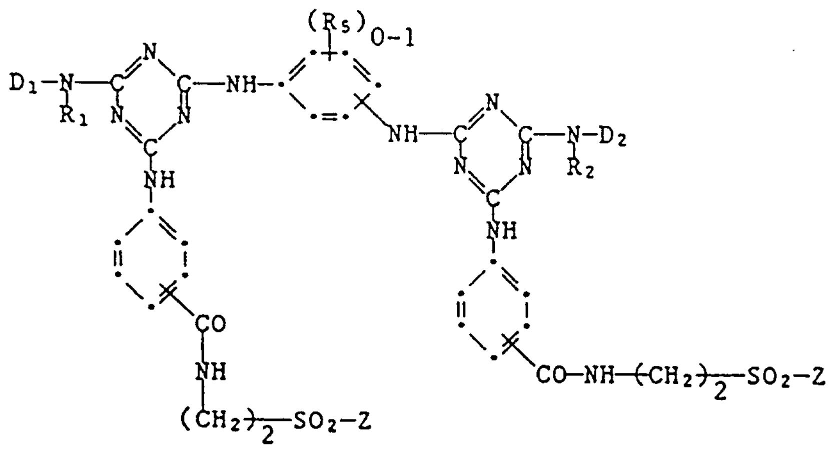

(9)

dans laquelle $D_1$, $D_2$, $R_1$, $R_2$ et Z ont les significations indiquées dans la revendication 1, et $R_5$ représente de 0 à 1 substituant choisi parmi méthyle, méthoxy, chloro et sulfo.

**6.** Colorants réactifs conformes à l'une des revendications 1 à 5, dans lesquels les restes $D_1$-N($R_1$)- et -N-($R_2$)-$D_2$ sont identiques.

**7.** Colorants réactifs conformes à l'une des revendications 1 à 3 et 6, dans lesquels X représente un atome de fluor ou de chlore.

**8.** Colorants réactifs conformes à l'une des revendications 1 à 7, dans lesquels $R_1$ et $R_2$ représentent des atomes d'hydrogène ou des groupes méthyle, éthyle ou $\beta$-hydroxyéthyle.

**9.** Colorants réactifs conformes à l'une des revendications 1, 2 et 6 à 8, dans lesquels $B_1$ et $B_2$ représentent des atomes d'hydrogène.

**10.** Colorants réactifs conformes à l'une des revendications 1 à 9, dans lesquels $D_1$ et $D_2$ représentent chacun le reste d'un colorant monoazoïque ou disazoïque.

**11.** Colorants réactifs conformes à l'une des revendications 1 à 9, dans lesquels $D_1$ et $D_2$ représentent chacun le reste d'un complexe métal-colorant azoïque, d'un colorant anthraquinonique ou d'un colorant formazan.

**12.** Colorants réactifs conformes à la revendication 10, dans lesquels $D_1$ et $D_2$ représentent chacun le reste d'un colorant monoazoïque ou disazoïque de formule :

$D\text{-}N = N\text{-}(M\text{-}N = N)_r\text{-}K\text{-}$ (10a)

ou

$\text{-}D\text{-}N = N\text{-}(M\text{-}N = N)_r\text{-}K$ (10b)

ou d'un complexe métallique qui en dérive ; D représente le reste d'un composant diazo de la série du benzène ou du naphtalène, M représente le reste d'un composant intermédiaire de la série du benzène ou du naphtalène, et K représente le reste d'un copulant de la série du benzène, du naphtalène, de la pyrazolone, de la 6-hydroxypyridone-2 ou des acétoacétarylamides, D M et K pouvant porter les substituants habituels chez les colorants azoïques, en particulier des groupes hydroxy, amino, méthyle, éthyle, méthoxy ou éthoxy, des groupes alcanoylamino comportant de 2 à 4 atomes de carbone et éventuellement substitués, des groupes benzoylamino éventuellement substitués ou des atomes d'halogène, r vaut 0 ou 1, et D, M et K contiennent ensemble au moins deux groupes sulfo, et de préférence trois ou quatre groupes sulfo.

**13.** Colorants réactifs conformes à la revendication 11, dans lesquels $D_1$ et $D_2$ représentent chacun le reste d'un complexe 1:1 de cuivre et d'un colorant azoïque de la série du benzène ou du naphtalène, l'atome de cuivre étant lié à deux groupes métallables placés de chaque côté en position ortho par rapport au pont azo.

**14.** Colorants réactifs conformes à la revendication 11, dans lesquels $D_1$ et $D_2$ représentent chacun le reste d'un colorant formazan de formule :

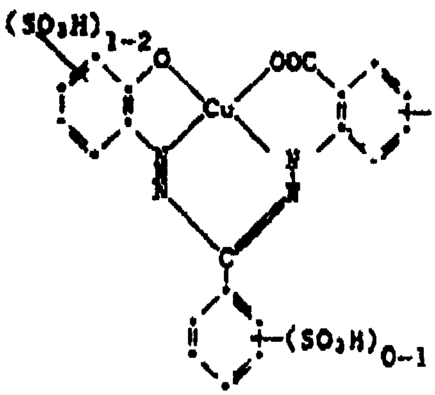

(11a)

ou

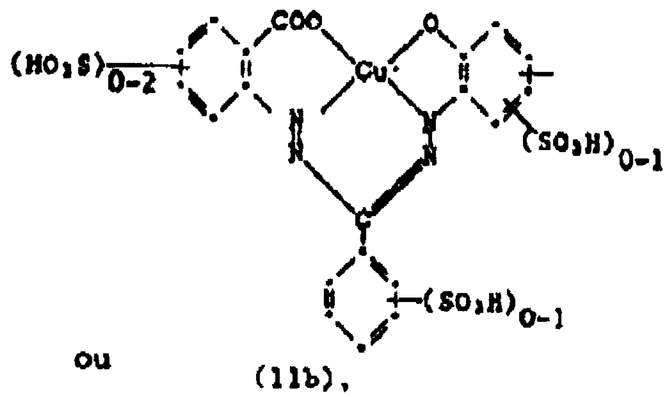

(11b),

dans lesquels les noyaux benzéniques peuvent être encore substitués par des groupes alkyle en $C_1$-$C_4$, alcoxy en $C_1$-$C_4$, alkylsulfonyle en $C_1$-$C_4$ ou carboxy, ou par des atomes d'halogène.

**15.** Colorants, réactifs conformes à la revendication 12, dans lesquels $D_1$ et $D_2$ représentent chacun un reste de formule :

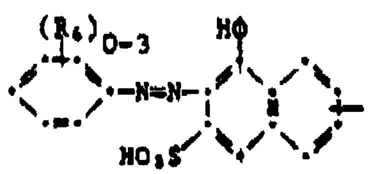

(12)

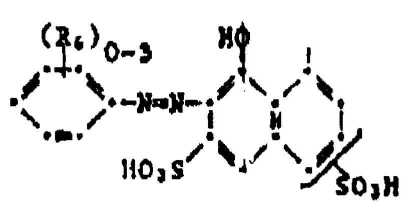

(13)

ou

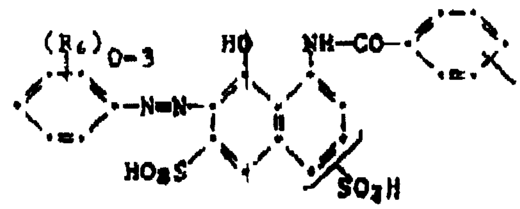

(14)

dans laquelle $R_6$ représente de 0 à 3 substituants choisis parmi alkyle en $C_1$-$C_4$, alcoxy en $C_1$-$C_4$,

halogéno, carboxy et sulfo ;

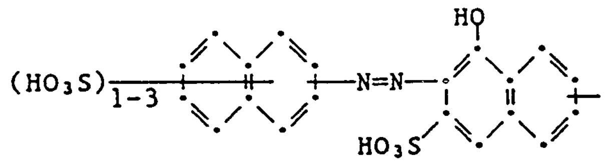

(15)

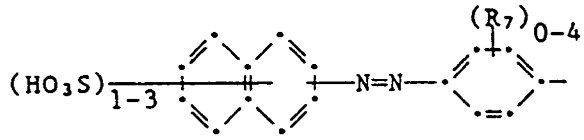

(16)

dans laquelle $R_7$ représente de 0 à 4 substituants choisis, indépendamment les uns des autres, parmi halogéno, nitro, cyano, trifluorométhyle, sulfamyle, carbamyle, alkyle en $C_1$-$C_4$, alcoxy en $C_1$-$C_4$, amino, acétylamino, uréido, hydroxy, carboxy, sulfométhyle et sulfo ;

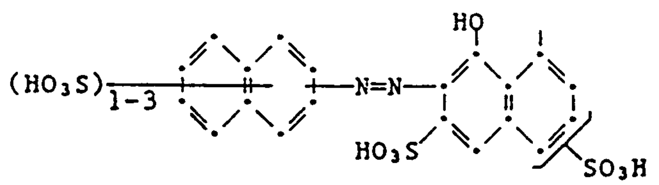

(17)

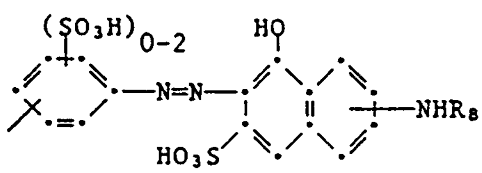

(18)

dans laquelle $R_8$ représente un groupe alcanoyle en $C_1$-$C_4$ ou benzoyle ;

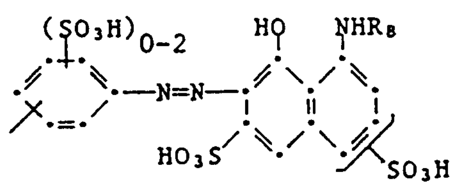

(19)

dans laquelle $R_8$ représente un groupe alcanoyle en $C_1$-$C_4$ ou benzoyle ;

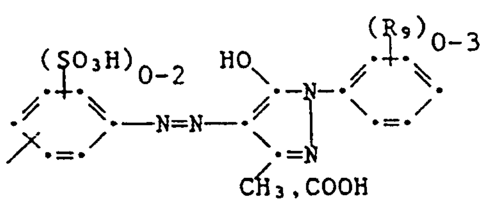

(20)

dans laquelle $R_9$ représente de 0 à 3 substituants choisis parmi alkyle en $C_1$-$C_4$, alcoxy en $C_1$-$C_4$, halogéno, carboxy et sulfo ;

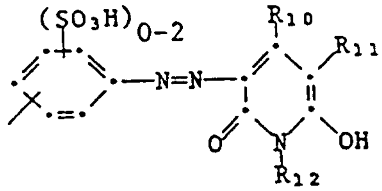

(21)

dans laquelle $R_{12}$ et $R_{10}$, indépendamment l'un de l'autre, représentent chacun un atome d'hydrogène ou un groupe alkyle en $C_1$-$C_4$ ou phényle, et $R_{11}$ représente un atome d'hydrogène ou un groupe cyano, carbamyle ou sulfométhyle ;

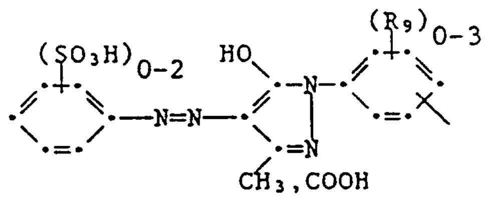

(22)

dans laquelle $R_9$ représente de 0 à 3 substituants choisis parmi alkyle en $C_1$-$C_4$, alcoxy en $C_1$-$C_4$, halogéno, carboxy et sulfo ;

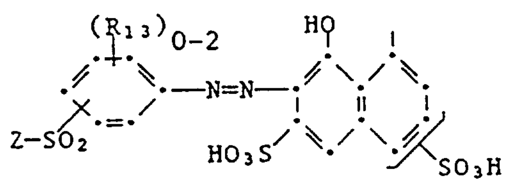

(23)

dans laquelle $R_{13}$ représente de 0 à 2 substituants choisis parmi alkyle en $C_1$-$C_4$, alcoxy en $C_1$-$C_4$, halogéno, carboxy et sulfo, et Z représente un groupe $\beta$-sulfatoéthyle, $\beta$-thiosulfatoéthyle, $\beta$-phosphatoéthyle, $\beta$-acyloxyéthyle, $\beta$-halogénoéthyle ou vinyle ; ou

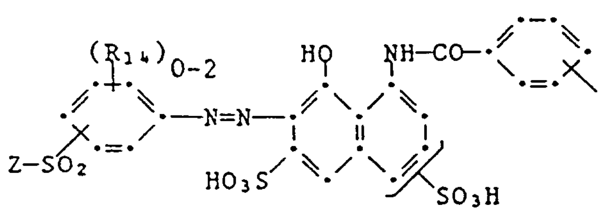

(24)

dans laquelle $R_{14}$ représente de 0 à 2 substituants choisis parmi alkyle en $C_1$-$C_4$, alcoxy en $C_1$-$C_4$, halogéno, carboxy et sulfo, et Z représente un groupe $\beta$-sulfatoéthyle, $\beta$-thiosulfatoéthyle, $\beta$-phosphatoéthyle $\beta$-acyloxyéthyle, $\beta$-halogénoéthyle ou vinyle.

**16.** Colorants réactifs conformes à l'une des revendications 1 et 6 à 15, dans lesquels R représente un reste de formule :

$-NHCH_2CH_2SO_2$-Z (25a)

```
   CH2CH2SO2-Z
  /
-N                                   (25b)
  \
   CH2CH2SO2-Z
```

$-NHCH_2CH_2OCH_2CH_2SO_2-Z$ (25c)

$-NHCH_2CH_2NHCH_2CH_2SO_2-Z$ (25d)

```
           CH2CH2SO2-Z
          /
-NHCH2CH2N                           (25e)
          \
           CH2CH2SO2-Z
```

ou

```
        SO2-Z
       /
-NHCH2CH                             (25f)
       \
        CH2CH2CH2SO2-Z
```

et Z représente un groupe β-chloroéthyle, vinyle ou β-sulfatoéthyle.

**17.** Colorants réactifs conformes à la revendication 11, dans lesquels $D_1$ et $D_2$ représentent chacun le reste d'un colorant anthraquinonique de formule :

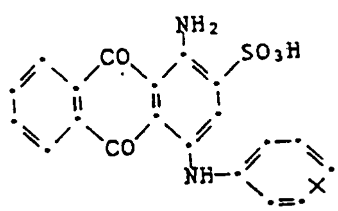

le noyau anthraquinonique pouvant être substitué par un autre groupe sulfo et le groupe phényle pouvant être substitué par alkyle en $C_1$-$C_4$, alcoxy en $C_1$-$C_4$, halogéno, carboxy ou sulfo, et le colorant contenant de préférence au moins deux groupes sulfo.

**18.** Colorants réactifs conformes à la revendication 12, dans lesquels $D_1$ et $D_2$ représentent chacun le reste d'un colorant monoazoïque de formule :

D-N = N-K- (10c)

ou

-D-N = N-K (10d)

ou d'un complexe de cuivre qui en dérive, D représentant un reste de benzène ou de naphtalène, qui peut être substitué par hydroxy, chloro, nitro, méthyle, méthoxy, éthoxy, carboxy, β-chloroéthylsulfonyle, vinylsulfonyle, β-sulfatoéthylsulfonyle ou β-chloroéthylsulfonylbutyryle, et K représentant un reste de benzène, de naphtalène, de 3-méthyl-1-phénylpyrazolone ou de 3-carboxy-1-phénylpyrazolone, qui peut être substitué par amino, N-méthylamino, méthyle, méthoxy, éthoxy, acétylamino, uréido, benzoylamino, hydroxy ou carboxy, et D et K comportant ensemble au moins deux groupes sulfo et de

préférence trois ou quatre groupes sulfo.

**19.** Procédé de préparation de colorants réactifs de formule (1), conformes à la revendication 1, caractérisé en ce que l'on fait réagir les uns avec les autres, dans un ordre quelconque, des colorants de formules :

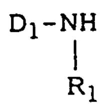

(26)

et

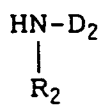

(27)

ou des précurseurs de colorants, deux équivalents d'une s-triazine de formule :

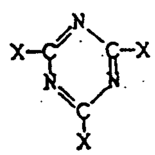

(28)

et un équivalent d'un composé diaminé de formule :

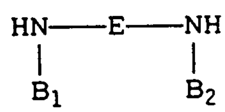

(29)

et éventuellement deux équivalents d'une amine de formule :

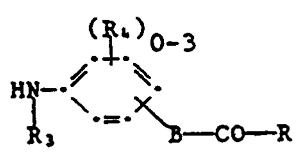

(30)

$D_1$, $D_2$, $R_1$, $R_2$, X, $B_1$, $B_2$, E, $R_3$, $R_4$, B et R ayant les significations indiquées dans la revendication 1, ou bien, dans le cas où l'on utilise des précurseurs de colorants, on transforme les produits intermédiaires obtenus en les colorants finals souhaités et l'on effectue éventuellement une autre réaction de transformation.

**20.** Procédé conforme à la revendication 19, caractérisé en ce que l'on condense d'abord un colorant de formule :

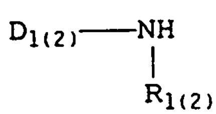

(31)

avec une s-triazine de formule :

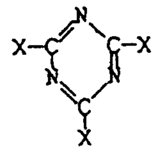

(28)

et l'on condense ensuite le composé obtenu, de formule :

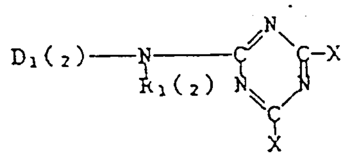

(32)

avec un composé diaminé de formule (29), en un rapport molaire de 2/1, E représentant un reste de formule (2).

**21.** Procédé conforme à la revendication 20, caractérisé en ce que l'on condense une s-triazine de formule (28) avec une amine de formule (30) et un colorant de formule (31), et en ce que l'on condense ensuite le dérivé de triazine obtenu avec un composé diaminé de formule (29), en un rapport molaire de 2/1, E représentant un reste de formule (3a), (3b), (3c) ou (3d).

**22.** Procédé conforme à la revendication 19, caractérisé en ce que l'on condense une s-triazine de formule (28) avec un composant du colorant et éventuellement avec une amine de formule (30), on fait ensuite réagir le produit de cette condensation avec un deuxième composant nécessaire pour la préparation du colorant, et l'on condense le dérivé de triazine ainsi obtenu avec un composé diaminé de formule (29), en un rapport molaire de 2/1, E représentant un reste de formule (2) ou un reste de formule (3a), (3b), (3c) ou (3d).

**23.** Utilisation des colorants réactifs conformes à la revendication 1 pour la teinture ou l'impression de matériaux fibreux contenant de la cellulose.

**24.** Utilisation conforme à la revendication 23, pour la teinture ou l'impression du coton.

**Revendications pour l'Etat contractant suivant : ES**

**1.** Procédé de préparation de colorants réactifs de formule :

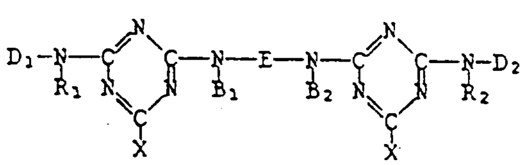

(1)

dans laquelle $D_1$ et $D_2$ représentent chacun, indépendamment l'un de l'autre, le résidu d'un colorant monoazoïque, polyazoïque, azoïque à métal complexé, anthraquinonique, phtalocyanine, formazan, azométhinique, dioxazinique, phénazinique, stilbénique, triphénylméthane, xanthène, thioxanthone, nitroarylique, naphtoquinonique, pyrènequinonique ou pérylènetétracarbimide, $R_1$, $R_2$, $B_1$ et $B_2$ représentent chacun, indépendamment l'un de l'autre, un atome d'hydrogène ou un groupe alkyle comportant de 1 à 4 atomes de carbone qui peut être substitué par halogéno, hydroxy, cyano, alcoxy en $C_1$-$C_4$, (alcoxy en $C_1$-$C_4$)-carbonyle, carboxy, sulfamyle, sulfo ou sulfato, X représente un atome de fluor, de chlore ou de brome ou un groupe sulfo, alkylsulfonyle en $C_1$-$C_4$, phénylsulfonyle ou carboxypyridinium, et E représente un reste de formule :

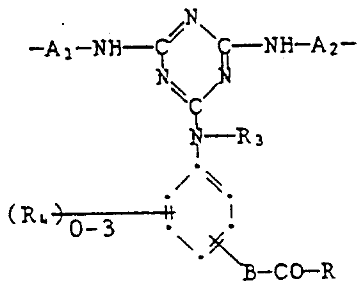

(2)

dans laquelle $A_1$ et $A_2$ représentent chacun, indépendamment l'un de l'autre, un groupe de formule :

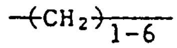

(3a)

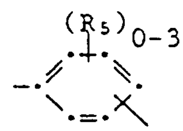

(3b)

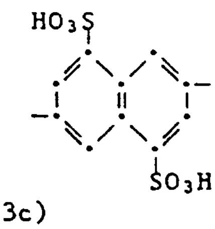

(3c)

ou

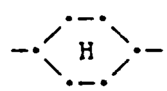

(3d);

ou bien X représente un reste de formule :

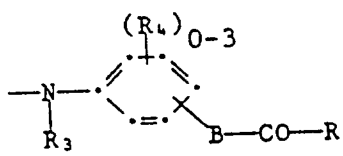

(4)

et E représente un reste de formule (3a), (3b), (3c) ou (3d),
et $R_3$ représente un atome d'hydrogène ou un groupe alkyle comportant de 1 à 4 atomes de carbone, qui peut être substitué par halogéno, hydroxy, cyano, alcoxy en $C_1$-$C_4$,(alcoxy en $C_1$-$C_4$)-carbonyle, carboxy, sulfamyle, sulfo ou sulfato, $R_4$ et $R_5$ représentent chacun, indépendamment l'un de l'autre, de 0 à 3 substituants choisis dans le groupe constitué par les atomes d'halogène et les groupes alkyle en $C_1$-$C_4$, alcoxy en $C_1$-$C_4$, carboxy et sulfo, B représente une liaison directe ou un reste $-(CH_2)_n-$ ou $-O-(CH_2)_n-$, n vaut de 1 à 6, R représente un reste de formule :

```
     T
     |
-N-(alk)-CH2-SO2-Z
 |
 V
```
(5a)

```
-N-(CH2)p-O-(CH2)m-SO2-Z
 |
 R'
```
(5b)

```
-N-(alk')-NH-(alk')-SO2-Z
 |
 H
```
(5c)

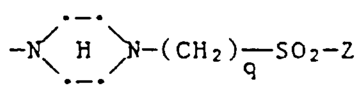

(5d)

Z représente un groupe β-sulfatoéthyle, β-thiosulfatoéthyle, β-phosphatoéthyle, β-acyloxyéthyle, β-halogénoéthyle ou vinyle, alk représente un groupe alkylène comportant de 1 à 6 atomes de carbone, ou un isomère ramifié d'un tel groupe, T représente un atome d'hydrogène, de chlore, de brome ou de fluor, ou un groupe hydroxy, sulfato, acyloxy comportant de 1 à 4 atomes de carbone, cyano, carboxy, alcoxycarbonyle comportant de 1 à 5 atomes de carbone ou carbamyle, ou encore un reste $-SO_2-Z$, où Z a la signification indiquée ci-dessus,
V représente un atome d'hydrogène ou un groupe alkyle comportant de 1 à 4 atomes de carbone, qui peut être substitué par des groupes carboxy ou sulfo ou leurs dérivés, par des groupes alcoxy comportant 1 ou 2 atomes de carbone, par des atomes d'halogène ou par des groupes hydroxy, ou bien un reste :

```
    T
    |
-(alk)-CH2-SO2-Z
```
(5e)

dans laquelle Z, alk et T ont les significations indiquées ci-dessus,
R' représente un atome d'hydrogène ou un groupe alkyle en $C_1$-$C_6$, alk' représente, indépendamment les uns des autres, des groupes polyméthylène comportant de 2 à 6 atomes de carbone ou leurs isomères ramifiés, et m vaut de 1 à 6, p vaut de 1 à 6 et q vaut de 1 à 6,
caractérisé en ce que l'on fait réagir les uns avec les autres, dans un ordre quelconque, des colorants de formules :

```
D1-NH
   |
   R1
```
(26)

et

```
HN-D2
|
R2
```
(27)

ou des précurseurs de colorants, deux équivalents d'une s-triazine de formule :

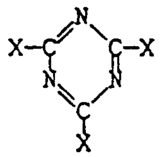

(28)

et un équivalent d'un composé diaminé de formule :

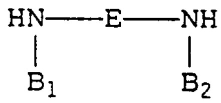

(29)

et éventuellement deux équivalents d'une amine de formule :

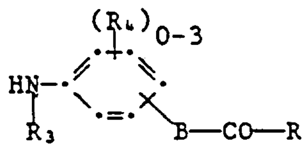

(30)

$D_1$, $D_2$, $R_1$, $R_2$, X, $B_1$, $B_2$, E, $R_3$, $R_4$, B et R ayant les significations indiquées dans la revendication 1, ou bien, dans le cas où l'on utilise des précurseurs de colorants, on transforme les produits intermédiaires obtenus en les colorants finals souhaités et l'on effectue éventuellement une autre réaction de transformation.

**2.** Procédé conforme à la revendication 1, caractérisé en ce que l'on condense d'abord un colorant de formule :

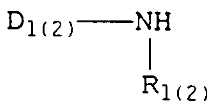

(31)

avec une s-triazine de formule :

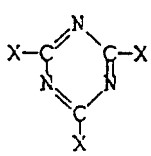

(28)

et l'on condense ensuite le composé obtenu, de formule :

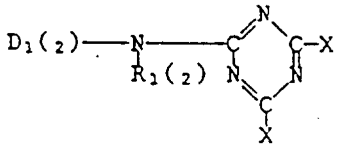

(32)

avec un composé diaminé de formule (29), en un rapport molaire de 2/1, E représentant un reste de

formule (2).

**3.** Procédé conforme à la revendication 2, caractérisé en ce que l'on condense une s-triazine de formule (28) avec une amine de formule (30) et un colorant de formule (31), et en ce que l'on condense ensuite le dérivé de triazine obtenu avec un composé diaminé de formule (29), en un rapport molaire de 2/1, E représentant un reste de formule (3a), (3b), (3c) ou (3d).

**4.** Procédé conforme à la revendication 1, caractérisé en ce que l'on condense une s-triazine de formule (28) avec un composant du colorant et éventuellement avec une amine de formule (30), on fait ensuite réagir le produit de cette condensation avec un deuxième composant nécessaire pour la préparation du colorant, et l'on condense le dérivé de triazine ainsi obtenu avec un composé diaminé de formule (29), en un rapport molaire de 2/1, E représentant un reste de formule (2) ou un reste de formule (3a), (3b), (3c) ou (3d).

**5.** Procédé conforme à la revendication 2, caractérisé en ce que l'on utilise un composé diaminé de formule :

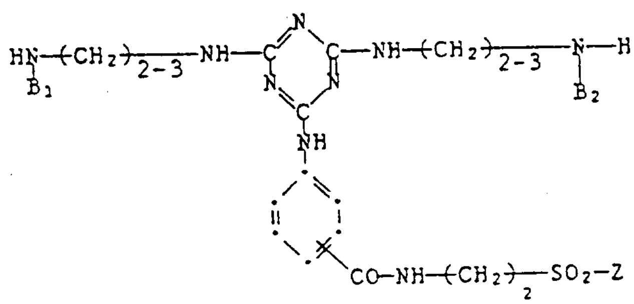

(33)

dans laquelle $B_1$, $B_2$, X et Z ont les significations indiquées dans la revendication 2.

**6.** Procédé conforme à la revendication 2, caractérisé en ce que l'on utilise un composé diaminé de formule :

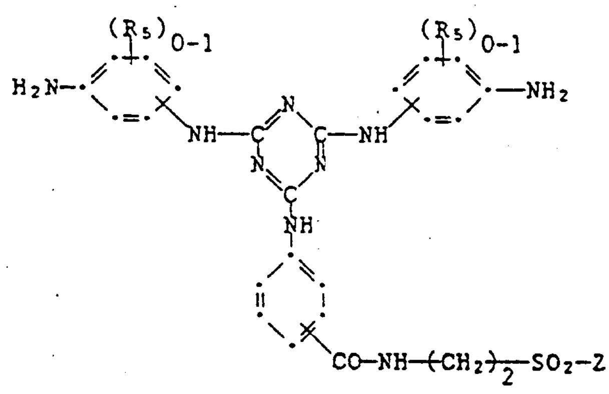

(34)

dans laquelle Z a la signification indiquée dans la revendication 2, et $R_5$ représente de 0 à 1 substituant choisi parmi méthyle, méthoxy, chloro et sulfo.

**7.** Procédé conforme à la revendication 3, caractérisé en ce que l'on utilise, comme amine de formule (30), une amine de formule :

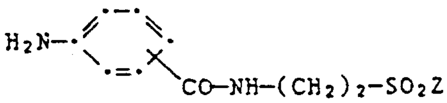

(35)

dans laquelle Z a la signification indiquée dans la revendication 3, et en ce que l'on utilise un composé diaminé de formule (29), où E représente un groupe de formule :

$-(CH_2)_{2-3}-$ (36)

**8.** Procédé conforme à la revendication 3, caractérisé en ce que l'on utilise, comme amine de formule (30), une amine de formule :

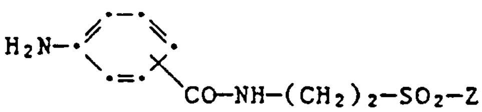

(35)

dans laquelle Z a la signification indiquée dans la revendication 3, et en ce que l'on utilise un composé diaminé de formule (29), où E représente un groupe de formule :

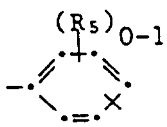

(37)

et $R_5$ représente de 0 à 1 substituant choisi parmi méthyle, méthoxy, chloro et sulfo.

**9.** Procédé conforme à l'une des revendications 1 à 8, dans lequel les restes $D_1$-N($R_1$)- et-N($R_2$)-$D_2$ sont identiques.

**10.** Procédé conforme à l'une des revendications 1, 2, 5, 6 et 9, dans lequel X représente un atome de fluor ou de chlore.

**11.** Procédé conforme à l'une des revendications 1 à 10, dans lequel $R_1$ et $R_2$ représentent des atomes d'hydrogène ou des groupes méthyle, éthyle ou $\beta$-hydroxyéthyle.

**12.** Procédé conforme à l'une des revendications 1 à 5 et 8 à 11, dans lequel $B_1$ et $B_2$ représentent des atomes d'hydrogène.

**13.** Procédé conforme à l'une des revendications 1 à 12, dans lequel $D_1$ et $D_2$ représentent chacun le reste d'un colorant monoazoïque ou disazoïque.

**14.** Procédé conforme à l'une des revendications 1 à 12, dans lequel $D_1$ et $D_2$ représentent chacun le reste d'un complexe métal-colorant azoïque, d'un colorant anthraquinonique ou d'un colorant formazan.

**15.** Procédé conforme à la revendication 13, dans lequel $D_1$ et $D_2$ représentent chacun le reste d'un colorant monoazoïque ou disazoïque de formule :

$D-N=N-(M-N=N)_r-K-$ (10a)

ou

$-D-N=N-(M-N=N)_r-K$ (10b)

ou d'un complexe métallique qui en dérive ; D représente le reste d'un composant diazo de la série du benzène ou du naphtalène, M représente le reste d'un composant intermédiaire de la série du benzène ou du naphtalène, et K représente le reste d'un copulant de la série du benzène, du naphtalène, de la pyrazolone, de la 6-hydroxypyridone-2 ou des acétoacétarylamides, D, M et K pouvant porter les substituants habituels chez les colorants azoïques, en particulier des groupes hydroxy, amino, méthyle, éthyle, méthoxy ou éthoxy, des groupes alcanoylamino comportant de 2 à 4 atomes de carbone et éventuellement substitués, des groupes benzoylamino éventuellement substitués ou des atomes d'halogène, r vaut 0 ou 1, et D, M et K contiennent ensemble au moins deux groupes sulfo, et de préférence trois ou quatre groupes sulfo.

**16.** Procédé conforme à la revendication 14, dans lequel $D_1$ et $D_2$ représentent chacun le reste d'un complexe 1:1 de cuivre et d'un colorant azoïque de la série du benzène ou du naphtalène, l'atome de cuivre étant lié à deux groupes métallables placés de chaque côté en position ortho par rapport au pont azo.

**17.** Procédé conforme à la revendication 14, dans lequel $D_1$ et $D_2$ représentent chacun le reste d'un colorant formazan de formule :

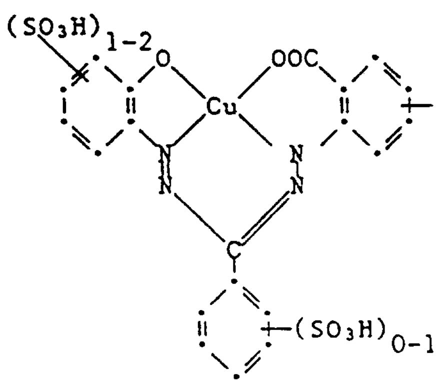

(11a)

ou

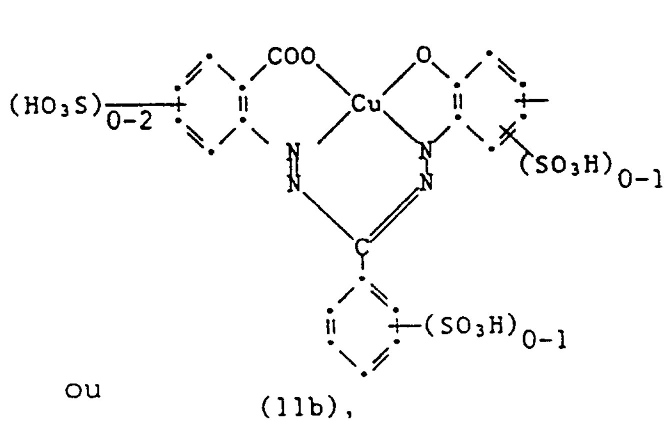

(11b),

dans lequel les noyaux benzéniques peuvent être encore substitués par des groupes alkyle en $C_1$-$C_4$, alcoxy en $C_1$-$C_4$, alkylsulfonyle en $C_1$-$C_4$ ou carboxy, ou par des atomes d'halogène.

**18.** Procédé conforme à la revendication 15, dans lequel $D_1$ et $D_2$ représentent chacun un reste de formule :

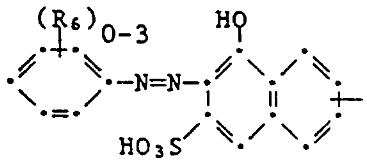

(12)

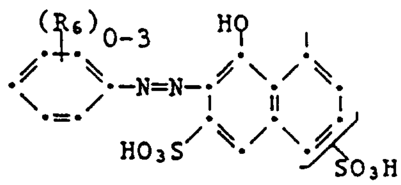

(13)

ou

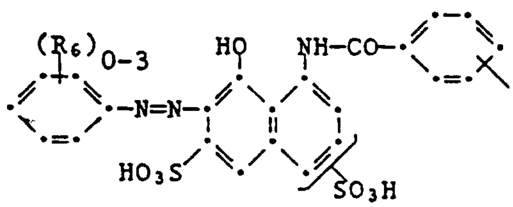

(14)

dans laquelle $R_6$ représente de 0 à 3 substituants choisis parmi alkyle en $C_1$-$C_4$, alcoxy en $C_1$-$C_4$, halogéno, carboxy et sulfo ;

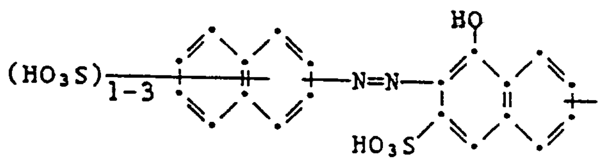

(15)

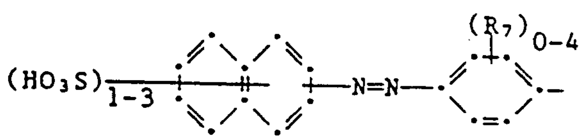

(16)

dans laquelle $R_7$ représente de 0 à 4 substituants choisis, indépendamment les uns des autres, parmi halogéno, nitro, cyano, trifluorométhyle, sulfamyle, carbamyle, alkyle en $C_1$-$C_4$, alcoxy en $C_1$-$C_4$, amino, acétylamino, uréido, hydroxy, carboxy, sulfométhyle et sulfo ;

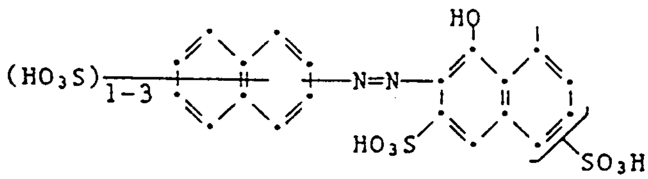

(17)

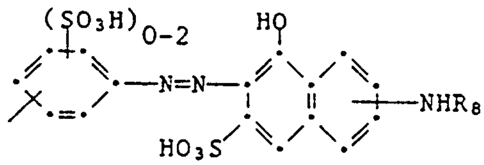

(18)

dans laquelle $R_8$ représente un groupe alcanoyle en $C_1$-$C_4$ ou benzoyle ;

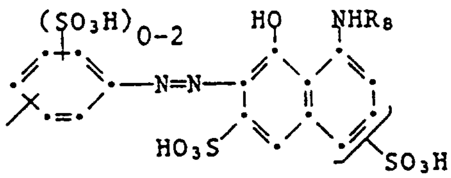

(19)

dans laquelle $R_8$ représente un groupe alcanoyle en $C_1$-$C_4$ ou benzoyle ;

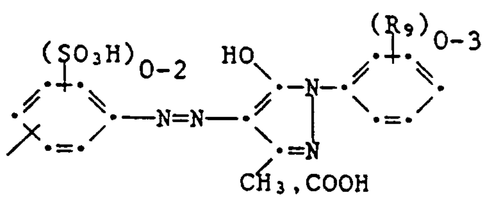

(20)

dans laquelle $R_9$ représente de 0 à 3 substituants choisis parmi alkyle en $C_1$-$C_4$, alcoxy en $C_1$-$C_4$, halogéno, carboxy et sulfo ;

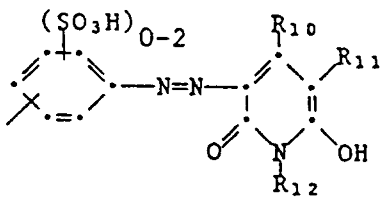

(21)

dans laquelle $R_{12}$ et $R_{10}$, indépendamment l'un de l'autre, représentent chacun un atome d'hydrogène ou un groupe alkyle en $C_1$-$C_4$ ou phényle, et $R_{11}$ représente un atome d'hydrogène ou un groupe cyano, carbamyle ou sulfométhyle ;

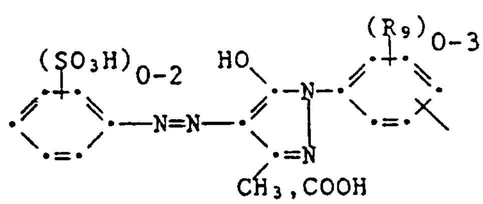

(22)

dans laquelle $R_9$ représente de 0 à 3 substituants choisis parmi alkyle en $C_1$-$C_4$, alcoxy en $C_1$-$C_4$, halogéno, carboxy et sulfo ;

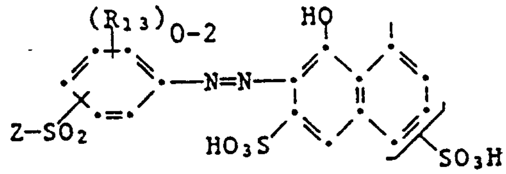

(23)

dans laquelle $R_{13}$ représente de 0 à 2 substituants choisis parmi alkyle en $C_1$-$C_4$, alcoxy en $C_1$-$C_4$, halogéno, carboxy et sulfo, et Z représente un groupe β-sulfatoéthyle, β-thiosulfatoéthyle, β-phosphatoéthyle, β-acyloxyéthyle, β-halogénoéthyle ou vinyle ; ou

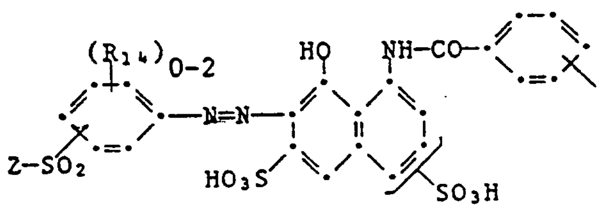

(24)

dans laquelle $R_{14}$ représente de 0 à 2 substituants choisis parmi alkyle en $C_1$-$C_4$, alcoxy en $C_1$-$C_4$, halogéno, carboxy et sulfo, et Z représente un groupe β-sulfatoéthyle, β-thiosulfatoéthyle, β-phosphatoéthyle, β-acyloxyéthyle, β-halogénoéthyle ou vinyle.

**19.** Procédé conforme à l'une des revendications 1 à 4 et 9 à 18, dans lequel R représente un reste de formule :

$-NHCH_2CH_2SO_2-Z$ (25a)

```
   CH2CH2SO2-Z
  /
-N
  \
   CH2CH2SO2-Z
```

(25b)

$-NHCH_2CH_2OCH_2CH_2SO_2-Z$ (25c)

$-NHCH_2CH_2NHCH_2CH_2SO_2-Z$ (25d)

```
            CH2CH2SO2-Z
           /
-NHCH2CH2N
           \
            CH2CH2SO2-Z
```

(25e)

ou

```
         SO2-Z
        /
-NHCH2CH
        \
         CH2CH2CH2SO2-Z
```

(25f)

et Z représente un groupe β-chloroéthyle, vinyle ou β-sulfatoéthyle.

**20.** Procédé conforme à la revendication 14, dans lequel $D_1$ et $D_2$ représentent chacun le reste d'un colorant anthraquinonique de formule :

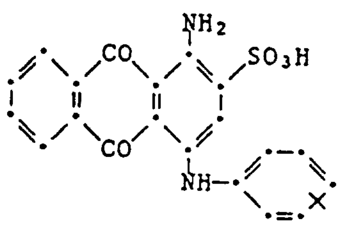

le noyau anthraquinonique pouvant être substitué par un autre groupe sulfo et le groupe phényle pouvant être substitué par alkyle en $C_1$-$C_4$, alcoxy en $C_1$-$C_4$, halogéno, carboxy ou sulfo, et le colorant contenant de préférence au moins deux groupes sulfo.

**21.** Procédé conforme à la revendication 15, dans lequel $D_1$ et $D_2$ représentent chacun le reste d'un colorant monoazoïque de formule :

D-N = N-K- (10c)

ou

-D-N = N-K (10d)

ou d'un complexe de cuivre qui en dérive, D représentant un reste de benzène ou de naphtalène, qui peut être substitué par hydroxy, chloro, nitro, méthyle, méthoxy, éthoxy, carboxy, $\beta$-chloroéthylsulfonyle, vinylsulfonyle, $\beta$-sulfatoéthylsulfonyle ou $\beta$-chloroéthylsulfonylbutyryle, et K représentant un reste de benzène, de naphtalène, de 3-méthyl-1-phénylpyrazolone ou de 3-carboxy-1-phénylpyrazolone, qui peut être substitué par amino, N-méthylamino, méthyle, méthoxy, éthoxy, acétylamino, uréido, benzoylamino, hydroxy ou carboxy, et D et K comportant ensemble au moins deux groupes sulfo et de préférence trois ou quatre groupes sulfo.

**22.** Utilisation des colorants réactifs obtenus conformément à la revendication 1 pour la teinture ou l'impression de matériaux fibreux contenant de la cellulose.

**23.** Utilisation conforme à la revendication 22, pour la teinture ou l'impression du coton.